# EUROPEAN PATENT SPECIFICATION

(11) **EP 1 644 169 B1**
(45) Date of publication and mention of the grant of the patent: **15.10.2008**
(21) Application number: 04760936.7
(22) Date of filing: 07.05.2004
(51) Int. Cl.: B29B 7/76

(54) **DISPENSING SYSTEM WITH MIXING MODULE MOUNT**
ABGABESYSTEM MIT MISCHMODULHALTERUNG
SYSTEME DE DISTRIBUTION COMPORTANT UN SUPPORT DE MODULE DE MELANGE

(30) Priority: 09.05.2003 US 469035 P; 09.05.2003 US 469038 P; 09.05.2003 US 469037 P; 22.07.2003 US 623858; 21.11.2003 US 717998; 21.11.2003 US 717989
(43) Date of publication of application: 12.04.2006
(73) Proprietor: IntelliPack, Inc., Tulsa, OK 74146 (US)
(72) Inventor: HAYDUK, Matthew, Glen Cove, NY 11542 (US); HANNA, Todd, Tulsa, OK 74137 (US); JONES, Michael, P., Tulsa, OK 74137 (US)
(74) Representative: Thomson, Neil David
(86) International application number: PCT/US2004/014392
(87) International publication number: WO 2004/101243

(56) References cited:
- FR-A- 2 616 085
- GB-A- 727 939
- GB-A- 2 060 784
- US-A- 4 082 512
- US-A- 4 416 588
- US-A- 4 550 863
- US-A- 4 860 925
- US-A- 4 883 645
- US-A- 5 067 886
- US-A- 5 791 522
- US-A- 6 161 723

## Description

### FIELD OF THE INVENTION

The present invention is directed at a dispensing system with mixing module mount, valve/purge rod drive mechanism, and tip management, the inventive subject matter being well suited for use in a supported or automated foam dispenser system as in a foam-in-bag dispenser system

### BACKGROUND OF THE INVENTION

Over the years a variety of material dispensers have been developed including those directed at dispensing foamable material such as polyurethane foam which involves mixing certain chemicals together to form a polymeric product while at the same time generating gases such as carbon dioxide and water vapor. If those chemicals are selected so that they harden following the generation of the carbon dioxide and water vapor, they can be used to form "hardened" (e.g., a cushionable quality in a proper fully expanded state) polymer foams in which the mechanical foaming action is caused by the gaseous carbon dioxide and water vapor leaving the mixture.

In particular techniques, synthetic foams such as polyurethane foam are formed from liquid organic resins and polyisocyanates in a mixing chamber (e.g., a liquid form of isocyanate, which is often referenced in the industry as chemical "A", and a multi-component liquid blend called polyurethane resin, which is often referenced in the industry as chemical "B"). The mixture can be dispensed into a receptacle, such as a package or a foam-in-place bag (see e.g., U.S. Pat. Nos. 4,674,268, 4,800,708 and 4,854,109), where it reacts to form a polyurethane foam.

A particular problem associated with certain foams is that, once mixed, the organic resin and polyisocyanate generally react relatively rapidly so that their foam product tends to accumulate in all openings through which the material passes. Furthermore, some of the more useful polymers that form foamable compositions are adhesive. As a result, the foamable composition, which is often dispensed as a somewhat viscous liquid, tends to adhere to objects that it strikes and then harden in place. Many of these adhesive foamable compositions tenaciously stick to the contact surface making removal particularly difficult. Solvents are often utilized in an effort to remove the hardened foamable composition from surfaces not intended for contact, but even with solvents (particularly when considering the limitations on the type of solvents suited for worker contact or exposure) this can prove to be a difficult task. The undesirable adhesion can take place in the general region where chemicals A and B first come in contact (e.g., a dispenser mixing chamber) or an upstream location, as in individual injection ports, in light of the expansive quality of the mix, or downstream as in the outlet tip of the dispenser or, in actuality, anywhere in the vicinity of the dispensing device upon, for instance, a misaiming, misapplication or leak (e.g., a foam bag with leaking end or edge seals). For example, a "foam-up" in a foam-in-bag dispenser, where the mixed material is not properly confined within a receiving bag, can lead to foam hardening in every nook and cranny of the dispensing system making complete removal not reasonably attainable, particularly when considering the configuration of the prior art systems.

Because of this adhesion characteristic, steps have been taken in the prior art to attempt to preclude contact of chemicals A and B at non-desired locations as well as precluding the passage of mixed chemicals A/B from traveling to undesired areas or from dwelling in areas such as the discharge passageway for aiming the A/B chemical mixture. Examples of injection systems for such foamable compositions and their operation are described in U.S. Pat. Nos. 4,568,003 and 4,898,327, and incorporated herein by reference. As set forth in both of these patents, in a typical dispensing cartridge, the mixing chamber for the foam precursors is a cylindrical core having a bore that extends longitudinally there through. The core is typically formed from a fluorinated hydrocarbon polymer such as polytetrafluoroethylene ("PTFE" or "TFE"), fluorinated ethylene propylene ("FEP") or perfluoroalkoxy ("PFA"). Polymers of this type are widely available from several companies, and one of the most familiar designations for such materials is "Teflon", the trademark used by DuPont for such materials. For the sake of convenience and familiarity, such materials will be referred to herein as "Teflon", although it will be understood that materials having the above and below described qualities are available from companies other than DuPont and can be used if otherwise appropriate.

While features of the present invention are applicable to single component dispensing systems, the present invention is particularly suited for systems that have a plurality of openings (usually two) arranged in the core in communication with the bore for supplying mixing material such as organic resin and polyisocyanate to the bore, which acts as a mixing chamber. In a preferred embodiment of the invention, there is utilized a combination valving and purge rod positioned to slide in a close tolerance, "interference", fit within the bore to control the flow of organic resin and polyisocyanate from the openings into the bore and the subsequent discharge of the foam from the cartridge.

Teflon material and many of the related polymers have the ability to "cold flow" or "creep". This cold flow distortion of the Teflon is both beneficial (e.g., allowing for the conformance of material about surfaces intended to be sealed off) and a cause of several problems, including the potential for the loss of the fit between the bore and the valving rod as well as the fit between the openings (e.g., ports) through which the separate precursors enter the bore for mixing and then dispensing. In many of the prior art systems utilizing Teflon, the Teflon core is fitted in the cartridge under a certain degree of compression in order to help prevent leaks in a manner in which a gasket is fitted under stress for the same purpose. This compression also encourages the Teflon to creep into any gaps or other openings that may be adjacent to it which can be either good or bad depending on the movement and what surface is being contacted or discontinued from contact in view of the cold flow.

Under these prior art systems, however, over time the sealing quality of the core is lost at least to some extent allowing for an initial build up of the hardenable material which can lead to a cycle of seal degradation and worsening build up of hardened material. This in turn can lead to a variety of problems including the partial blockage of chemical inlet ports so as to alter the desired flow mix and degrade the quality of foam produced. In other words, in typical injection cartridges the separate foam precursors enter the bore through separate entry ports. Polyurethane foam tends to build up at the area at which the precursor exits the port and enters the mixing chamber. Such buildups cause spraying in the output stream, and dispensing of the mixture in an improper ratio. The build up of hardened material can also lead to partial blockage of the dispenser's exit outlet causing a misaiming of the dispensed flow into contact with an undesirable surface (e.g., the operator or various nooks and crannies in the dispenser). Another source of improper foam output is found in a partially or completely blocked off dispenser outlet tip that, if occurs, can lead the foam spray in undesirable areas or system shutdown if the outlet becomes so blocked as to preclude output. Additionally, if the cartridge is not properly positioned within the dispenser leakage and/or improper in-flow feed rates can occur. Moreover, if foam adheres in the region of the cartridge/dispenser housing interface, cartridge removable problems can arise. In addition, a variety of prior art systems have been developed in an effort avoid tip blockage, particularly in automated systems, as in foam-in-bag systems, which impose additional requirements due to the typical high usage level and the less ready access to the tip as compared to a hand-held dispenser. The prior art systems include, for example, porous tips with solvent flush systems. However, over time these tips tend to load up with hardened foam and eventually become ineffective.

The build of hardened/adhesive material over time can lead to additional problems such as the valve rod and even a purge only rod, becoming so adhered within its region of reciprocal travel that either the driver mechanism is unable to move the rod (leading to an oft seen shut down signal generation in many common prior art systems) or a component along the drive train breaks off which is often the annular recessed valve rod engagement location relative to some prior art designs.

The above described dispensing device has utility in the packing industry such as hand held dispensers which can be used, for instance, to fill in cavities between an object being packed and a container (e.g., cardboard box) in which the object is positioned. Manufacturers who produce large quantities of a particular product also achieve efficiencies in utilizing automated dispensing devices which provide for automated packaging filling such as by controlled filling of a box conveyed past the dispenser (e.g., spraying into a box having a protective covering over the product), intermediate automated formation of molded foam bodies, or the automatic fabrication of foam filled bags, which can also either be preformed or placed in a desired location prior to full expansion of the foam whereupon the bag conforms in shape to the packed object as it expands out to its final shape.

With dispensing devices like the hand held and foam-in-bag dispensing apparatus described above, there is also a need to provide the chemical(s) (e.g., chemicals "A" and "B") from their respective sources (typically a large container such as a 208.2 l (55 gallon) container for each respective chemical) in the desired state (e.g., the desired flow rate, volume, pressure, and temperature).

As noted above, in the packaging industry, a variety of devices have been developed to automatically fabricate foam filled bags for use as protective inserts in packages. Some examples of these foam-in-bag fabrication devices can be seen in U.S. Pat. Nos. 5,376,219; 4,854,109; 4,983,007; 5,139,151; 5,575,435; 5,679,208; 5,727,370 and 6,311,740, and are illustrative of prior art systems including those that suffer from, for example, the common occurrence of foam dispenser system lock up, cleaning downtime requirements, poor mix performance.

The prior art mixing cartridge driver mechanisms for reciprocating valve rods has also shown in the field to be inadequate as they are subject to often breakdowns and often quickly become unable to achieve rod reciprocation after a minor build up of foam in the cartridge. An additional problem associated with the mixing chamber used on fixed dispenser embodiments such as a foam-in-bag dispenser is the difficulty in proper removal and mounting of a mixing module in the support housing.

GB 2060784 discloses a reciprocal piston movable in a chamber by means of a bell crank, having one arm connected to the piston and the other to an electric motor, via an eccentrically connected shaft rotated by an electric motor. On the forward stroke an outlet valve is opened and on the return stroke an inlet valve is opened and, wherein, the valves are non-return valves.

### SUMMARY OF THE INVENTION

The inventive subject matter includes a dispensing system for chemicals as in mixed foam precursor chemicals that are mixed within a mixing module cartridge having a reciprocating valve and/or purge rod. The inventive subject matter includes a drive mechanism that provides sufficient power to achieve reciprocation even when using materials that tend to adhere to surface as in the mixed polyurethane foam precursor chemicals. The driving mechanism includes a crank and slide assembly that converts the rotational movement of the driver to a sliding motion in an element engaged with a robust engagement end of the reciprocating rod.

According to a first aspect, the present invention provides a foam dispenser component drive mechanism comprising: a motor driver; a foam dispenser chemical purge rod drive transmission comprising a crank and slide assembly driven by said motor driver, and characterised in that said crank and slide assembly is in driving engagement with a purge rod.

According to a second aspect, the present invention provides a foam dispenser drive system for a mixing module reciprocating purge rod, comprising: a driver; and means for converting a rotational drive force into a linear reciprocation drive force being capable of providing higher force push and pull levels in coordination with reciprocation end points of travel in the purge rod, characterised in that the means for converting is in driving engagement with the purge rod and produces variable push and pull levels on the purge rod.

According to a third aspect, the present invention provides a method for reciprocating a chemical purge rod of a chemical mixing module comprising: rotating a crank with a drive assembly wherein said drive assembly includes a motor for rotating said crank; driving a slide assembly with the rotating crank so as to move the slide assembly in linear fashion, and
moving the purge rod together with said slide assembly, characterised in that the moving is by way of said slide assembly being in driving engagement with the purge rod.

The transmission of the drive mechanism is contained within a smooth contoured main housing section of the dispenser housing while the crank and slide component is retained within a module housing section of the dispenser housing that receives the cranked side assembly and provides a smooth surface covering thereto while also providing a mixing cartridge insertion location in a preferred embodiment.

The body portion of the dispenser housing defines a mixing module reception area designed to ensure proper positioning relative to the mixing cartridge loaded in the dispenser (e.g., proper chemical port lining up with chemical feed conduits in the main housing and preferably also a solvent feed line to the interior of the cartridge to prevent hardened foam build up). In a preferred embodiment the portion of the dispenser housing defining the mixing module reception area includes an adjustable body portion that is secured in position and also preferably released by way of a finger releasable locking device as in an adjustable compression toggle clamp used in combination with a pivoting dispenser housing component supported by the main manifold portion of the main dispenser housing portion. There is preferably included a male/female position location defining means and the seals are preferably self supported on the cartridge such that the main housing portion is designed to compress those seals and provide a sealed interface between the main housing manifold's chemical (and preferably solvent) in-feed conduits and the ports of the mixing module cartridge. The adjustable body portion also preferably forms part of the dispenser housing's front section wherein the crank and slide mechanism is supported above the cartridge reception area to provide for a sliding piston like engager of the crank and slide mechanism to reciprocate within the front end of the housing the cartridges reciprocating rod.

As the tip portion of the cartridge is prone to chemical build up, the subject matter of the present invention includes a dispenser tip solvent supply system and preferably also a mechanical contact tip cleaning system with the combination providing a particularly clean dispenser tip. The solvent supply system in a preferred embodiment comprises a solvent supply source with a pump to feed solvent into the mixing cartridge. The mixing cartridge includes a solvent passageway system for feeding solvent to the tip area. A preferred embodiment features a double walled front cap region and a means to feed solvent within a cavity formed in the double walled front cap that feeds radially inward to the tip region in the area where the reciprocating rod's free end moves. The solvent is thus able to accumulate and solvate that tip region to help prevent hardened foam accumulation. A solvent pool feeding into a plurality of interior cap passageways helps provide a uniform high level of solvent about the front end of the rod and the tip region of the dispenser. There is also preferably utilized a mechanical contact member to help in removing any chemical accumulation at the tip end as in a reciprocating brush that is slideable within a lower dispenser housing support region and is preferably reciprocated with the same driver that reciprocates the rod or valving/purging device of the mixing module cartridge's as in through use of a transmission system having directional freewheels and a reversible driver. Also the location of the brush is preferably monitored through, for example, motor encoder means and preferably also a home sensor by monitoring a moving component of the brush and/or brush reciprocation transmission.

### BRIEF DESCRIPTION OF THE DRAWINGS

Figure 1 shows an embodiment of the dispensing system of the present invention.
Figure 2 shows a rear elevational view of a dispenser system embodiment used in the dispensing system.
Figure 3 shows a front view of the dispenser system.
Figure 4 shows a view similar to Figure 2, but with the lifter extended.
Figure 5 shows a base and extendable support assembly of the dispenser system.
Figure 6 shows a front perspective view of a bag forming assembly.
Figure 6A shows a rear perspective view of the bag forming assembly.
Figure 7 shows a front perspective view of the bag forming assembly together with a mounted chemical dispenser apparatus (dispenser and bagger assembly combination).
Figure 8A shows the dispenser apparatus separated from its support location.
Figure 8B shows a portion of the film travel path past that dispenser apparatus and nip rollers.
Figure 9 shows a view of dispensing apparatus similar to Figure 8A, but from a different perspective.
Figure 10 shows an enlarged view of dispenser outlet section.
Figure 11A shows a view similar to Figure 10, but with the mixing module compression door in an open state and with the mixing module in position.
Figure 11B shows the same view as Figure 11A, but with the mixing module removed.
Figure 12 shows a perspective view of the mixing module showing the mounting face of the same.
Figure 13 shows a similar view as that in Figure 12 but from the valving rod end.
Figure 14 shows a cross-sectional view of the mixing module taken through the two chemical in-feed ports along cross-section line B-B in Fig. 15.
Figure 15 shows a cross-sectional view of the mixing module taken along cross-section line A-A in Figure 14.
Figure 15A shown an expanded view of the circled region in Figure 15.
Figure 16 shows an additional cross-sectional view of the mixing module taken along cross-section line C-C in Figure 14.
Figure 16A shows an enlarged view of the circled region in Figure 16.
Figure 16B shows a perspective view of the mixing chamber used in the mixing module.
Figure 16C shows a vertical bi-secting cross-sectional view of the mixing module.
Figure 17 shows another cross-sectional view of the mixing module taken along cross-section line F-F in Figure 14.
Figure 18 shows a cross-sectional view of the mixing module taken along cross-section line G-G in Figure 17.
Figure 19 shows a front end elevational view of the mixing module.
Figure 20 shows a cross-sectional view of the mixing module taken along cross-section line D-D in Figure 16.
Figure 21 shows a cross-sectional view of the mixing module housing taken along cross-section line A-A of Figure 24.
Figure 21A shows an enlarged view of the circled region at the left end of Figure 21.
Figure 21B shows an enlarged view of the circled region at the right end of Figure 21.
Figure 22 shows a cross-sectional view taken along cross-section line C-C in Figure 23.
Figure 23 shows a cross-sectional view taken along cross-section line B-B in Figure 21.
Figure 24 shows a cross-sectional view taken along cross-section line D-D in Figure 22.
Figure 25A shows a perspective view of the mixing module housing and the front opening solvent feed passageway formed therein.
Figure 25B shows an enlarged view of the front end of Figure 25A
Figure 26 shows a cut away view of the front portion of the housing shown in Figure 25B.
Figure 27 shows a front or outer perspective view of the inner or interior front cap of the mixing module.
Figure 28 shows a rear or interior perspective view of the inner front cap.
Figure 29 shows an interior elevational view of the inner front cap.
Figure 30 shows a cross-sectional view taken along A-A in Figure 29.
Figure 31 shows a front or outer perspective view of the outer front cap.
Figure 32 shows a rear or inner perspective view of the knurled outer front cap.
Figure 33 shows a perspective cross-sectional view of the outer front cap.
Figure 34 shows an elevational cross-sectional view of the outer front cap.
Figure 35 shows in greater detail a cross-sectional view of the front cap assembly, solvent flow passageways and interlocked mixing chamber of the mixing module.
Figure 36 shows a side elevational of the solvent supply source with the solvent bottle partially removed from the solvent bottle reception sleeve.
Figure 37 shows back end elevational view of the solvent source combination shown in Figure 36.
Figure 38 shows a side elevational view of the solvent supply bottle above.
Figure 39 shows a view similar to Figure 36 but with the bottle fully received.
Figure 40 shows a top plan view of Figure 39.
Figure 41 shows the solvent pump used in the solvent supply system of the present invention.
Figure 42 shows a front elevational view of the dispenser apparatus with means for reciprocating the mixing module rod and with a bottom brush cover plate removed.
Figure 42A provides a perspective view of the dispenser apparatus similar to that of Figure 9 but from a different perspective angle.
Figure 43 shows a top plan view of that which is shown in Figure 42.
Figure 44 shows a right end and view of that which is shown in Figure 42 (with the brush cover added).
Figure 45 shows a cross-sectional view taken along cross-section view B-B in Figure 43.
Figure 46 shows a cross-sectional view taken along cross-section line A-A in Figure 43.
Figure 47 shows a front elevational view of the dispenser end section of the dispenser apparatus.
Figure 48 shows a rear end view of that which is shown in Figure 47.
Figure 49 shows a cross-sectional view taken along A-A in Figure 48.
Figure 50 shows a cross-sectional view taken along cross-section line C-C in Figure 49.
Figure 51 shows a perspective view of the dispenser (and brush) drive mechanism.
Figure 52 shows a one way clutch for use in the main dispenser drive mechanism.
Figure 53A shows a perspective view of the main housing of the dispenser apparatus.
Figures 53B shows a perspective view of the dispenser housing cap (capped end of housing).
Figure 54 shows a perspective view of a first half (larger) of the dispenser crank assembly.
Figure 55 shows a cross-sectional view of that which is shown in Figure 54.
Figure 56 shows a perspective view of a second half (smaller) of the dispenser crank assembly.
Figure 57 shows a left end elevational view of that which is shown in Figure 56.
Figure 58 shows a right end elevational view of that which is shown in Figure 56.
Figure 59 shows the rear side of the main housing for use in the dispenser apparatus.
Figure 59A shows a view similar to Figure 59, but with access panels removed.
Figure 60A shows an opposite end to that of Figure 59A with access panels removed.
Figure 61 illustrates the connecting rod used in the dispenser drive mechanism.
Figure 62 shows one of the guide shoes used in the dispenser drive mechanism.
Figure 63 shows the piston or slider that is utilized in the dispenser drive mechanism.
Figure 64 shows a top plan view of the tip cleaning brush base.
Figure 65 shows a side elevational view of that which is shown in Figure 64 with added bristles.
Figure 66 shows a cross-sectional view of the brush base.
Figure 67 shows a bottom perspective view of the brush base.
Figure 68 shows a top plan view of the brush base.
Figure 69 shows a bottom plan view of the brush base.
Figure 70 shows an end view of the brush base.
Figure 71 shows an overall dispenser assembly sub-systems schematic view of the display, controls and power distribution for a preferred foam-in-bag dispenser embodiment.
Figure 72 provides a legend key for the features shown schematically in Figure 71.
Figure 73 shows a schematic view of the control, interface and power distribution features for the rod moving mechanism for chemical dispensing and the dispenser tip cleaning system.

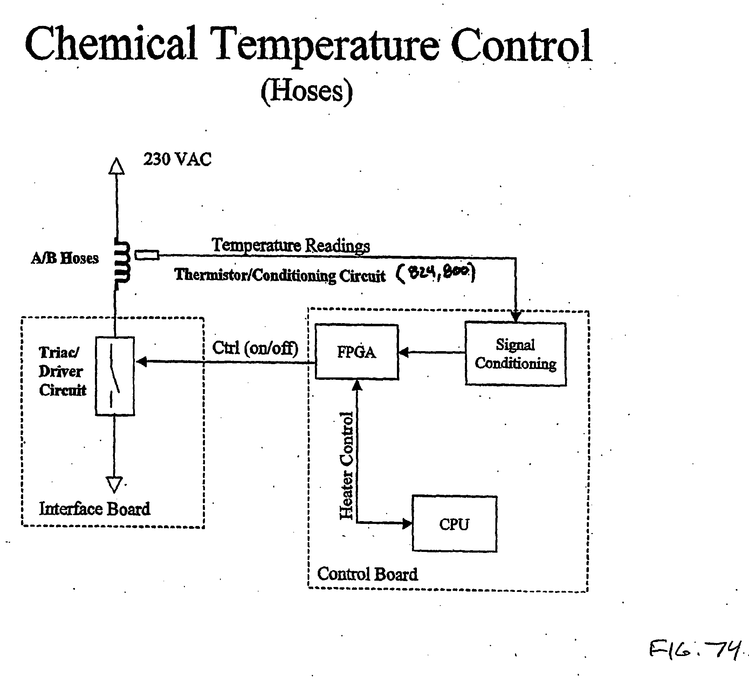

Figure 74 shows an illustration of the control, interface and power distribution features for the heated and temperature monitored chemical hoses of the present invention.
Figure 75 shows an illustration of the control, interface and power distribution features for the heaters used in the main manifold and dispenser housing to maintain the chemical flowing therethrough at the desired set temperature through use of heater cartridges in the main manifold and dispenser housing adjacent flow passageways formed in the manifold and housing.
Figure 76 shows an illustration of the control, interface and power distribution features of the solvent supply system.

### DETAILED DESCRIPHTION OF THE PREFERRED EMBODIMENTS

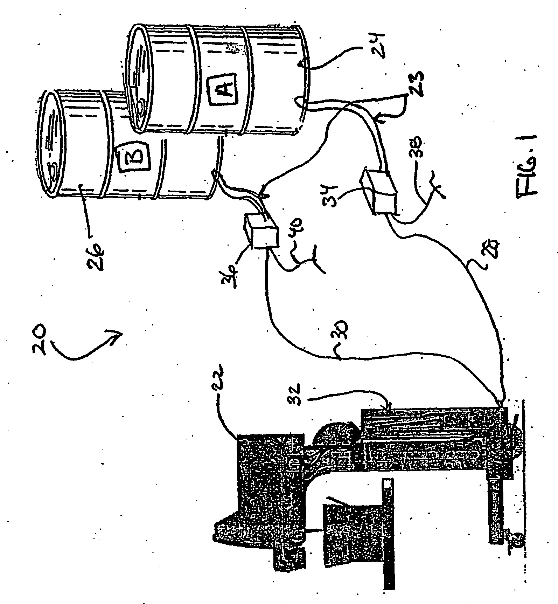

Figure 1 illustrates a preferred embodiment of the dispensing system 20 of the present invention which comprises dispenser system 22 in communication with the chemical supply system 23 comprising chemical supply container 24 (supplying chemical component A) and chemical supply container 26 (supplying chemical component B). Chemical hoses 28 (chemical A) and 30 (chemical B) provide fluid communication between respective chemical supply containers 24, 26 and in-line pump system 32 mounted on dispenser system 22. Dispenser system 22 includes in-line pump system 32 that is in communication with chemical supply containers that are either in proximity (12.2 m (40 feet) or less) to the dispenser system 22 or remote (e.g., greater than 12.2 m (40 feet)) from where the dispenser system 22 is located. This allows the containers to be situated in a more convenient or less busy area of the plant, as it is often not practical to store chemicals in close proximity to the machine (e.g., sometimes 30.5 m to 152.4 m (100 to 500) feet separation of dispenser and chemicals is desirable).

Thus the present invention has a great deal of versatility as to how the dispenser system is to be set up relative to the chemical source. For example, "in-barrel pumps," while available for use as a chemical drive component in chemical supply system 23 of the present invention, are less preferred as they have a limited reach as they are connected to the electric resistance heaters positioned between the chemical supply and the dispenser.

Figure 1 further illustrates feed pumps 34, and 36 associated with chemical supply containers 24, and 26. Feed pumps 34, and 36 provide a positive pressure to the in-line pump system so as to provide positive pressure on the in-line pumps' input ports to avoid problems like cavitations, or starvation of the pumping means (e.g., a gerotor based pump system) and to reliably suck chemical out of the bottom of the supply containers even if the in-line pumps are far away (e.g., over 30.5 ml 100 feet). Short runs of hose length between the containers and the positive pressure feed pumps can be handled by attaching a dip tube to the inlet end of the feed hose, or by simply attaching the feed hose to the bottom of the container via valves and connectors.

The positive pressure feed pumps are preferably located in or near the chemical supply containers, are preferably air driven, and preferably produce between 0.34 and 1.38 MPa (50 and 200 psi) of pressure at the input port of each in-line pump. Rather than individual feed pumps, a common feed pump system is provided in a preferred embodiment having an output capacity to supply chemical to multiple systems all dispensing at the same time. Figure 1 illustrates a multiple chemical conduit arrangement wherein feed pumps 34 and 36 feed chemical to more than one dispenser system at the same time with lines 28 and 30 feeding dispenser system 22 and lines 38 and 40 feeding a second dispenser system (not shown). A single feed pump with manifold assembly can also be used to distribute chemicals A and B to multiple locations. Under the present invention the feed pumps can have expanded capacity such as a capacity to feed 4 to 5 systems simultaneously. The ability to run multiple systems from a single set of supply containers sets the in-line pump option provided by the present invention apart from in-barrel pump based systems, which can only feed one system per set of containers.

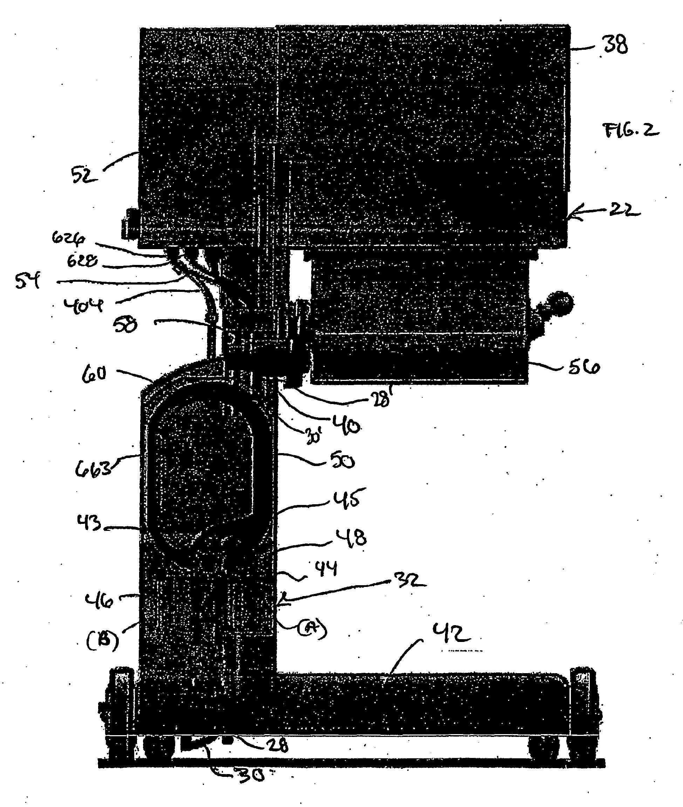

Figure 2 provides a rear elevational view of dispenser system 22 which includes exterior housing 38 supported on telescoping support assembly 40 which in a preferred embodiment comprises a lifter (e.g., electric motor driven gear and rack system with inner and outer telescoping sleeves) and is mounted on base 42 (e.g., a roller platform base to provide some degree of mobility). Further mounted on base 42 is in-line pump system 32 comprising in line chemical A pump 44 and in line chemical B pump 46 housing output or downstream chemical supply conduit sections 43 and 45 that extend into hose manager assembly 48 containing heated coiled hoses and cables set 50. The rear view shown in Figure 2 also illustrates control console 52 and communication links generally represented by communication lines 54. Film roll reception assembly 56 and film roll driver 58 extends out from support assembly 40.

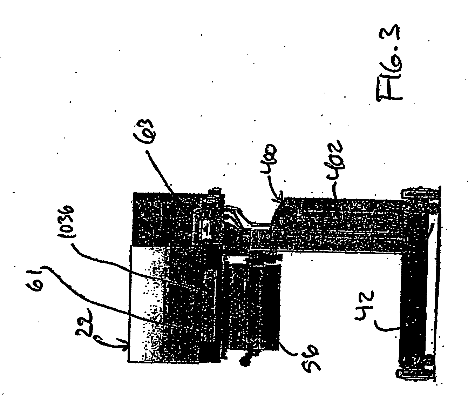

Figure 3 provides a front view of dispenser assembly 22 including first and second control panels 61 and 63 having finger contact means.

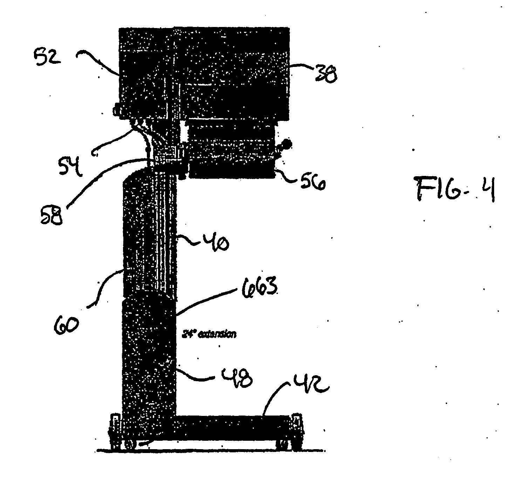

Figure 4 provides a similar rear elevational view as in Figure 2, except with extendable support assembly 40 being in a maximum extension state (e.g., a 38.1 cm to 101.6 cm (15 to 40 inch)) extension with a 61.0 cm (24 inch) extension being well suited ergonomically from a collapsed maximum height of 0.91 cm to 1.52 cm (3 to 5 feet) being illustrative for the dispenser). With reference to Figure 4 and the front view of Figure 1 there is seen solvent container 60 which is fixed to extendable support 40 and rides up and down with the moving component of lifter or extendable support 40.

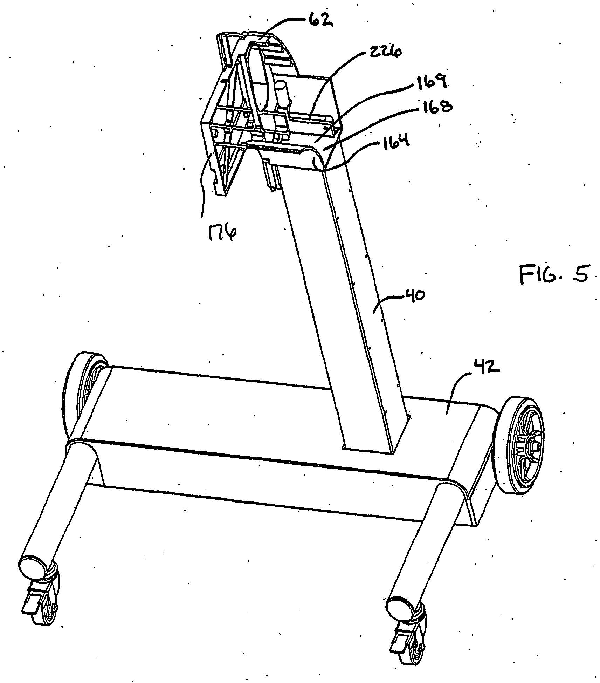

Figure 5 illustrates base 42 and lifter or extendable support assembly 40 (e.g., preferably a hydraulic (air pressure) or gear/rack combination or some other telescoping or slide lift arrangement) extending up from base and having bagger and dispenser assembly support mount 62. Figure 5 also illustrates the mobile nature of base 42 which is a wheeled assembly.

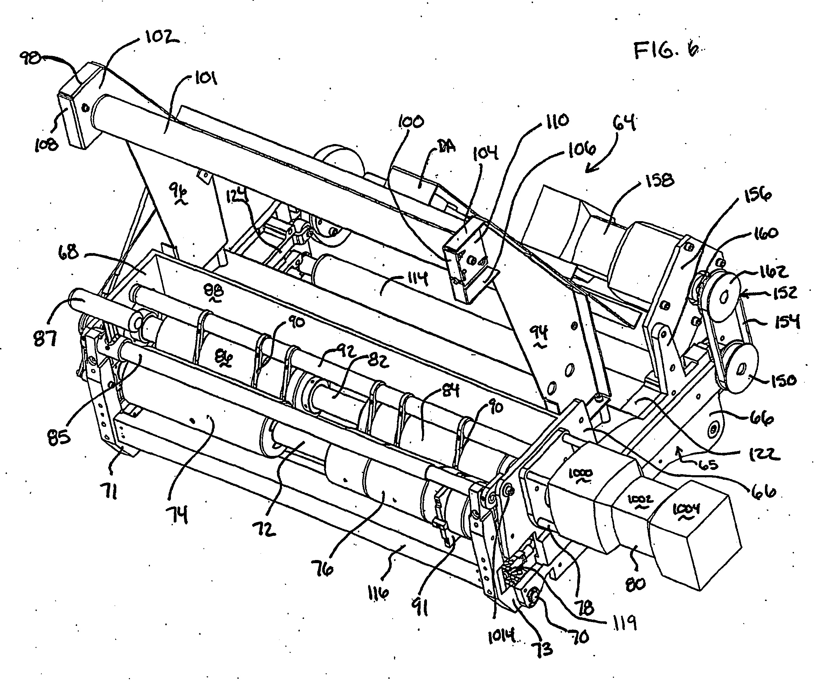

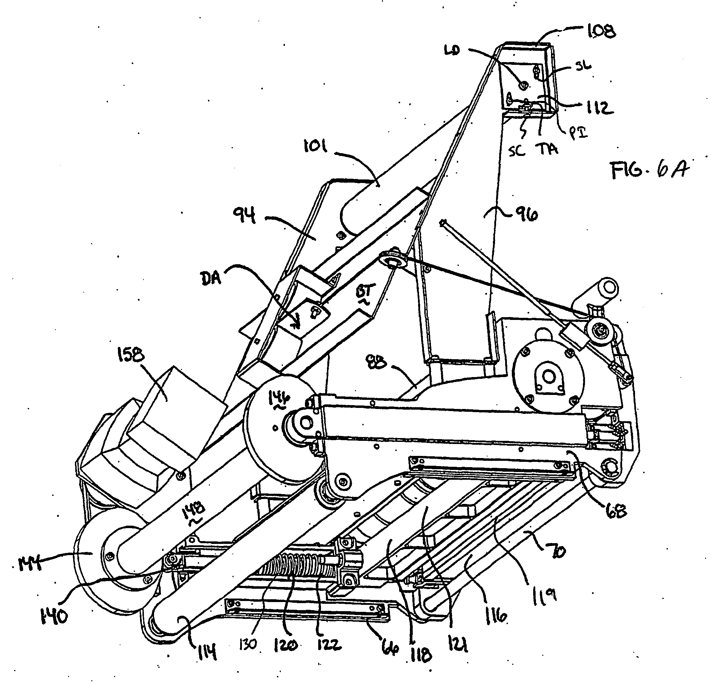

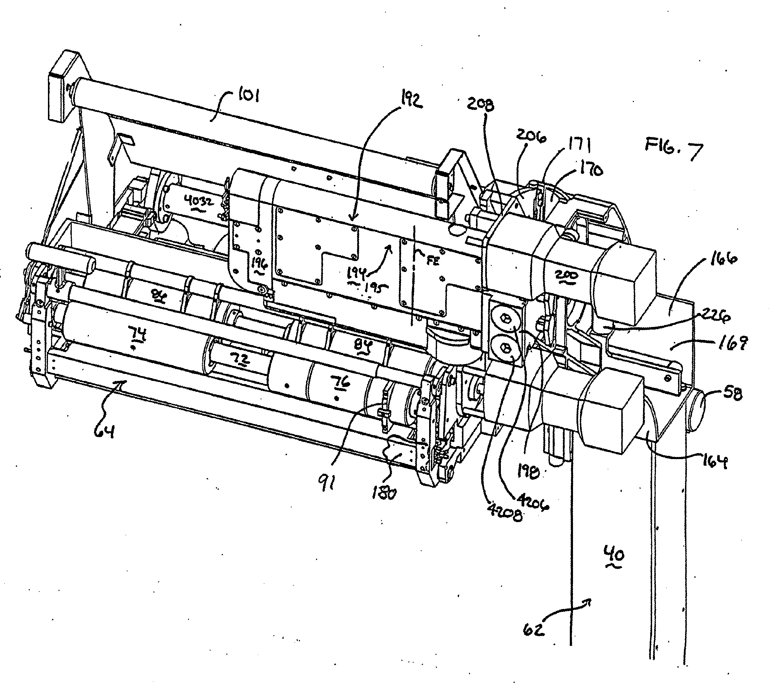

Figures 6 and 7 show foam-in-bag assembly or "bagger assembly" 64 (with dispenser removed for added clarity) that is designed to be mounted in cantilever fashion on support mount or bracket 62 as shown in Figure 5. Bagger assembly 64 comprises framework 65 having first side frame 66 (shown on the right side relative to a front view in Figure 6) and second side frame 68 (shown on the left side in the front view Figure 6). Side frame 66 has means for mounting bagger assembly 64 to support bracket 62 (e.g., a set of bolts). Framework 65 further includes front pivot rod 70 extending between the two interior sides of side frames 66, and 68, as well as front face pivot frame sections 71 and 73 which are pivotally supported by pivot rod 70. Rod 70 also extends through the lower end of front face pivot frame sections 71 and 73 to provide a rotation support for sections 71, 73. Driver roller shaft 72, supporting left and right driven or follower nip rollers 74 and 76, also extends between and is supported by side frames 66 and 68. While in a latched state the upper ends of pivot frame sections 71, 73 are also supported (locked in closed position) by door latch rod 85 with handle latch 87.

First frame structure 66 further includes mounting means 78 for roller shaft drive motor 80 in driving engagement with drive shaft 82 extending between and supported by frame structures 66 and 68. Drive shaft 82 supports drive nip rollers 84 and 86. Framework 65 further comprises back frame structure 88 preferably formed as a single piece unit with side frame structures 66 and 68. Driven roller shaft 72 and driver roller shaft 82 are in parallel relationship and spaced apart so as to place the driven nip rollers 74, 76, and drive nip rollers 84, 86 in a film drive relationship with a preferred embodiment featuring a motor driven drive roller set 84, 86 formed of a compressible, high friction material such as an elastomeric material (e.g., synthetic rubber) and the opposite, driven roller 74, 76 is preferably formed of a knurled aluminum nip roller set (although alternate arrangement are also featured as in both sets being formed of a compressible material like rubber). The roller sets are placed in a state of compressive contact by way of the relative diameters of the nip rollers and rotation axis spacing of shafts 72, and 82 when pivot frame sections 71, 73 are in their roller drive operation state. Figure 6 further illustrates door latch rod 85 rotatably supported at its opposite ends by pivot frame sections 71, 73 and having door latch (with handle) 87 fixedly secured to the left end of door latch rod 85. Latch 87 provides for the pivoting open of pivot frame sections 71, 73 of the hinged access door means about pivot rod 70 into an opened access mode. While in a latched state, the upper ends of pivot frame sections 71, 73 are also supported (locked in closed position) by door latch rod 85.

Drive nip rollers 84 and 86 have slots formed for receiving film pinch preventing means 90 (e.g., canes 90) that extend around rod 92 with rod 92 extending between first and second frames 66, 68 and parallel to the rotation axes of shafts 72 and 82. Figure 6 further illustrates bag film edge sealer 91 shown received within a slot in roller 76 and positioned to provide edge sealing to a preferred C-fold film supply. Rear frame structure 88 has secured to its rear surface, at opposite ends, idler roller supports 94 and 96 extending up (e.g., 8 to 15 inches or a preferred 11 inches) from the nip roller contact location. Idler roller supports 94, 96 include upper ends 98 and 100 each having means for receiving a respective end of upper idler roller 101 (e.g., a roller shaft reception aperture or bearing support). As shown in Figure 6, ends 98, 100 present opposing parallel face walls 102, 104 and outward flanges 106, 108. Within the confines of flanges 106, and 108 there is provided first and second idler roller adjustment mechanisms 110, and 112. In a preferred embodiment, one of the adjustment mechanisms provides vertical adjustment as to the rotation axis of idler roller 101 while the other provides front to back horizontal adjustment to the same idler roller 101 rotation axis. The horizontal track adjustment means provided on one of the adjustment mechanisms, in combination with the opposite vertical adjustment track plate, helps ensure the film properly tracks through the nip roller (retains a right angle film edge relationship to the roller axis while traveling a pre-set preferably generally centered or intermediate path through the nip roller set). Sliding plate 110 is retained in a frictional slide relationship with surface 100 by way of slide pins TA extending through elongated horizontal slots SL at opposite corners of the plate. On the front flange there is supported an adjustment screw SC extending into engagement with tab. TA on sliding plate 110 receiving an end of the idle roller 101. Upon rotation of the adjustment screw SC, plate 110 is shifted together with the end of the idler roller. The opposite side is just the same but for there being a vertical adjustment relationship. In this way, idler roller 101 can be adjusted to accommodate any roller assembly position deviation that can lead to non-proper tracking and also can be used to avoid wrinkled or non-smooth bag film contact. Also, idler roller 101 is preferably a steel or metal roller and not a plastic roller to avoid static charge build up relative to the preferred plastic film supplied. Idler roller is also preferably of the type having roller bearings positioned at its ends (not shown) for smooth performance and smooth, unwrinkled film feed.

Second or lower idler roller 114 is shown arranged parallel to drive roller shaft 82 and supported between left and right side frames 66 and 68. Idler roller 114 preferably has a common roller/bearing design with that of idler roller 101. Also, these figures show first (preferably fixed in position when locked in its operative position) end or cross-cut seal support block or jaw 116 positioned forward of a vertical plane passing through the nip roller contact location and below the axis of rotation of drive shaft 82. End seal jaw 116, which preferably is operationally fixed in position, is shown having a solid block base of a high strength (not easily deformed over an extended length) material that is of sufficient heat wire heat resistance (e.g., a steel block with a zinc and/or chrome exterior plating), and extends between left and right frame structures 66, and 68, but again, like driven shaft 72 and rollers 74, 76, is preferably supported on pivot frame sections 71, 73 and extends parallel with driven shaft 72. Figure 7 illustrates block 116 rigidly fixed at its ends to the opposing, interior sides of pivot frame sections 71, and 73 for movement therewith when latch 87 is released.

Movable end film sealer and cutter jaw 118 (Fig. 6A) is secured to end sealer shifting assembly 120 and is positioned adjacent fixed jaw 116 with fixed jaw 116 having sealer and cutter electrical supply means 119 with associated electric connections supported on the opposite ends of jaw 116 positioned closest to the front or closest to the operator. End sealer shifting assembly 120 is positioned rearward and preferably at a common central axis height level relative to end seal contact block 116. During formation of a bag, heater jaw 116 supports a cutter heater wire in-between above and below positioned seal forming wires (e.g., for a total of three vertically spaced apart heater wires) with of, for example 1/8 to 3/4 inch equal spacing with ¼ to ½ inch spacing being well suited for providing the seal (SE) cut (CT) seal (SE) sequence in the bag just formed and the bag in the process of being formed. With the SE-CT-SE arrangement there is provided a more assured bottom bag formation and there is avoided the problems associated with prior art devices that rely on the end or cross-cut only as the means for sealing. For example, if for any reason a perfect end seal is not secured during the cut formation, there can result massive foam spillage and build up as the foam mix is at its most liquid and least foam development stage when the dispenser first shoots the shot into the just formed bag bottom.

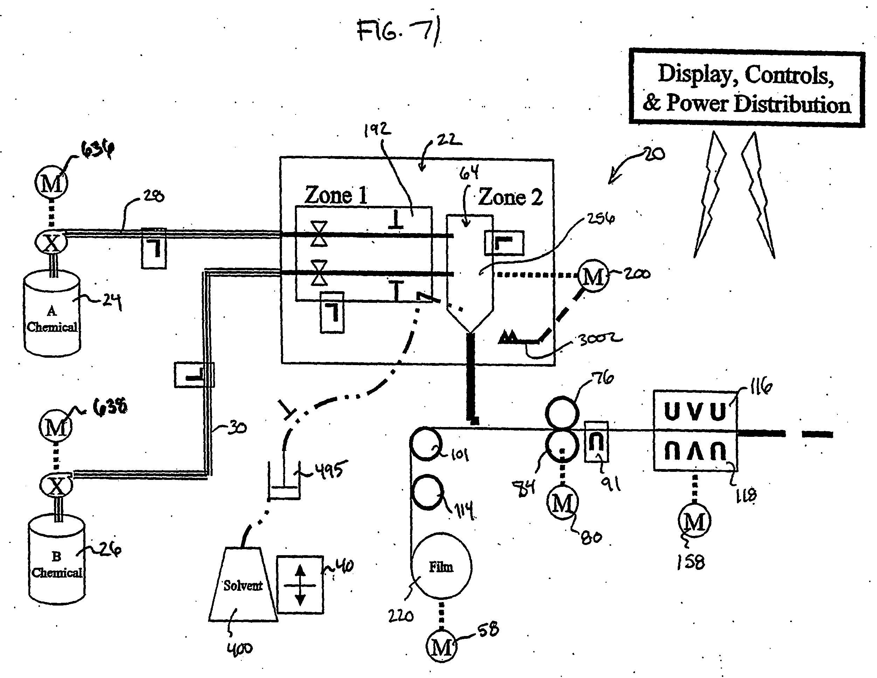

A preferred embodiment features a combination end film sealer means and cutter means 119 (Fig. 6A) having three independently controlled cross-cut/cross-seal resistance wire mechanisms preferably extending across the full length of the face of block 116. These wires are connected at their ends with quick release wire end holders. The end seal and cutter means on the fixed block 116 (after access panel locked in place) works in conjunction with movable sealer shifting assembly or jaw support assembly 120. As also explained below, the heater and sealer wires are sensed and thus in communication with a controller such as one associated with a main processor for the system or a dedicated heater wire monitoring sub-processing as illustrated in Figure 71. Venting preferably takes place on the side with the edge seal through a temporary lowering of heat below the sealing temperature as the film is fed past or some alternate means as in adjacent mechanical or heat associated slicing or opening techniques. Block 118 also has a forward face positioned rearward (farther away from operator) of the above mentioned nip roller vertical plane when in a stand-by state and is moved into an end seal location when shifting assembly is activated and, in this way, there is provided room for bag film feed past until end sealer shifting assembly 120 is activated.

In Figure 6A there is shown cam shaft 148 extending into driving engagement with drive pulley 150 forming part of drive pulley assembly 152 which further includes pulley belt 154 (Fig. 6). As seen from Figure 6, side frame 66 includes cam motor support section 156 to which cam motor 158 is secured. Cam motor drive shaft 160 is secured to drive pulley 162 of drive pulley assembly 152. Thus, activation of cam motor 158 leads to drive force transmission by transmission means (represented by the drive pulley assembly in the illustrated preferred embodiment) which in turn rotates cam shaft 148 and cams 144, 146 fixedly mounted thereon to provide for the pushing forward during the push forward cam rotation mode (cam roller 140 riding on a portion of the interior cam track surface 143 to effectuate a push forward to provide for the end seal and cutting function) and the pulling rearward of jaw 118 after the sealing function is completed (can include cutting as sole means of sealing or as a component of multiple seals (non-cutting and cutting) or as a weakening for downstream separation in a bag chain embodiment through control of the level of heat and time of contact with film) by way of cam roller 140 riding on the first cam track. Alternate transmission means and cam or non-cam push-pull driving means are also featured under the present invention such as a gear based system (e.g., rack and pinion) or hydraulic system for either or both of the drive transmission means or the push-pull driving of the end seal block or jaw 118. However, the illustrated cam arrangement provides for efficient and accurate push and pull movement with controlled force application to help provide improved seals and/or cuts. Thus, blocks 121, 123 and the supported moving jaw 118 are biased forward into a compression state with jaw 118, which compression is accommodated via compression of spring 130 and sliding of rod 126 if need be in each of assemblies 122, 124. In addition, the spring provides for some degree of play relative to up-down/side-to-side and points in-between. In a preferred embodiment the biasing force is about 333.6 N to 667.2 N (75 to 150 lbf) with 489.3 N (110 lbf) being an illustrative force level. This arrangement provides a non-rigid, compliant system which can accommodates deviations relative to the end seal opposing faces of the jaws in the invention disclosure.

Figures 6 and 6A also illustrate the preferred external support plates 156 for cam motor 158, and plate 66 for drive shaft motor 80.

Further longitudinally (right side-to-left side) outward of frame wall 174 is mounting plate 176 which, in conjunction with open area 169, provides a convenient location for securement of the electronics such as the system processor(s), interfaces, drive units, and external communication means such as a modem. In this regard, reference is made to co-pending U.S. Provisional Patent Application No. 60/488,102 entitled "System and Method For Providing Remote Monitoring of a Manufacturing Device" filed on July 18, 2003, and which is incorporated herein by reference describing the remote interfacing of the dispensing system with, among potential recipients, service and supply sources.

Figure 7 provides a perspective view of bagger assembly 64 mounted on mounting means 78 with dispenser apparatus 192 included (e.g., a two component foam mix dispenser apparatus is shown), which is also secured to support assembly 62 in cantilever fashion so as to have, when in its operational position, a vertical central cross-sectional plane generally aligned with the nip roller contact region positioned below it to dispense material between a forward positioned central axis of shaft 72 and a rearward positioned central axis of shaft 82. As shown in Figure 7, dispenser assembly 192 comprises dispenser housing 194 with main housing section 195, a dispenser end or outward section 196 of the dispenser housing with the dispenser outlet preferably also being positioned above and centrally axially situated between first and second side frame structures 66, and 68. With this positioning, dispensing of material can be carried out in the clearance space defined axially between the two respective nip roller sets 74, 76 and 84, 86.

Also dispenser assembly 192 is preferably supported a short distance above (e.g., a separation distance of 2.5 cm to 12.7 cm (1 to 5 inches) more preferably 5.1 cm to 7.6 cm (2 to 3 inches)) the nip contact location or the underlying (preferably horizontal) plane on which both rotation axes of shafts 72, 82 fall. This arrangement allows for receipt of chemical in the bag being formed in direct fashion and with a lessening of spray or spillage due to a higher clearance relationship as in the prior art. Dispenser apparatus 192 further includes chemical inlet section 198 positioned preferably on the opposite side of main dispenser housing 194 relative to dispenser and section 196. The outlet or lower end of dispenser assembly 194 is further shown positioned below idler roller 101 (e.g., a preferred top to bottom distance for housing 194 is 12.7 to 25.4 cm (5 to 10 inches) with 17.8 cm (7 inches) preferred, and it is preferable to have only a short distance between the upper curved edge of dispenser housing 194 and the horizontal plane contacting the lower end of upper idler roller 101 (e.g., 2.5 cm to 7.6 cm (1 to 3 inch) clearance with 3.8 cm (1.5 inches) preferred). In this way the upper, smooth curved edge of dispenser housing 194 helps in the initiation of the C-fold film or like film with the edges being separated and opened up as the film passes from idler roller 101 and along the smooth sides of dispenser housing 194 into the nip roller set. Thus, a distance of about 30.5 cm (1 foot) ± 7.6 cm (3 inch) is preferred for the distance between upper idler roller axis and the nip roller contact point.

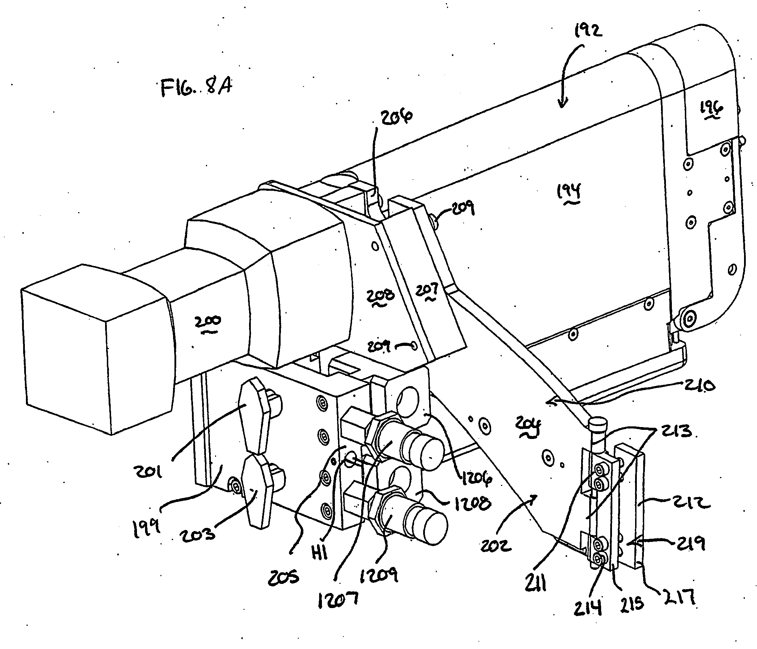

Figure 7 also illustrates dispenser motor 200 used for dispenser valve rod reciprocation as described below. Inlet end section 198 comprises chemical shut off valves with chemical shut off valve handles 201, 203 (Fig. 8A) that are large (e.g., a 1.3 cm to 2.5 cm (½ to 1 inch) or more in length) because of their placement outside of the film pathway, and thus readily viewed, particularly with color coding (as in blue and red handles) and positioned for easy hand grasping and adjustment without the need for tooling. As shown in Fig. 8A, chemical shutoff valves 201, 203 are supported on manifold housing 205 of main manifold 199 through which the chemicals pass before being forwarded to the manifold housing portion of dispenser housing 194 and are adjustable between chemical pass and chemical blocked settings. The chemical shutoff valves are also positioned well away from the dispenser outlet so as to help avoid the problem associated with the prior art of having foam harden on the valves rendering them difficult to access. There is thus avoided the prior art disadvantages of having valves of relatively small size that are positioned within the confines of the bag being formed and are designed to make it difficult to view the status of the shut off valves and access the valves particularly after a foam coating.

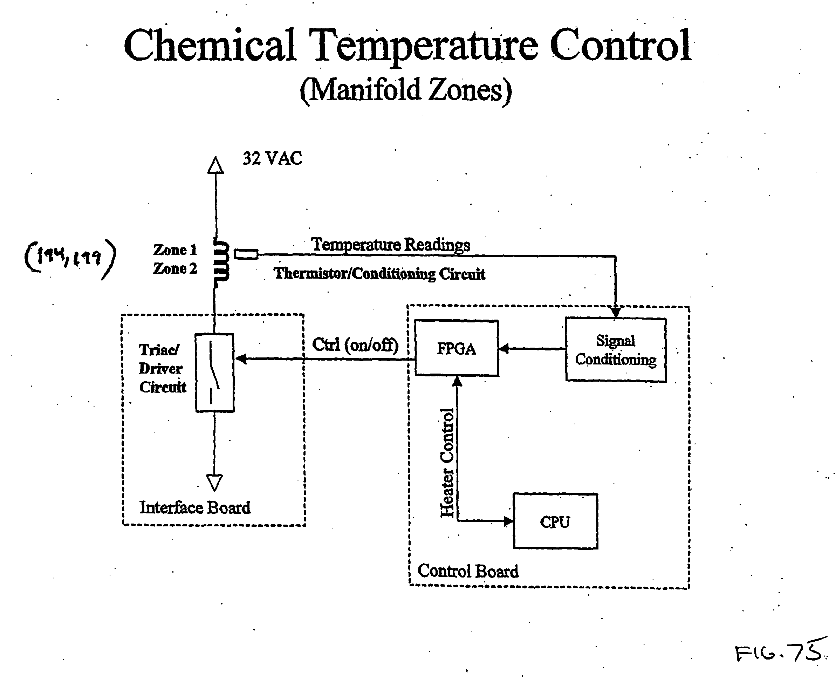

Inlet end section 198 further includes pressure transducers 1207 and 1209 adjacent heater chemical hose and hose heater feed through manifolds 1206 and 1208 which feed into main manifold 199. Pressure transducers are in electrical communication with the control system of the foam-in-bag dispenser system and used to monitor the general flow state (e.g., monitoring pressure to sense line blockage or chemical run out) as well as to provide pressure signal feedback used by the control system in maintaining the desired chemical characteristics (e.g., pressure level, temperatures, flow rate etc.) for the chemicals in maintaining the desired mix relationship for enhanced foam generation. In this regard, reference is made to Figure 75 for an illustration of chemical temperature control means in the main manifold 199 and housing manifold 194. Figure 8A also illustrates manifold heater H1 which also is in communication with the control system for maintaining a desired temperature in the manifold 199. Filter devices 4206 and 4208 seen in Figure 7 are placed in fluid communication with the heated chemical passing through the manifold and can be made of a relatively large size and also of a fine mesh (e.g., screen mesh size of 100 or more mesh) and arranged so as to present at least one screen section in contact with the through flow of chemical. In view of the filter device's location at the inlet end section 148 they too are also far removed from the chemical dispenser's outlet and thus not prone to hardened chemical coverage (e.g., the inlet end section's 198 closest surface (e.g., the nearest filter's central axis and the closure valves) are positioned 10.6 cm or more (4 or more inches) and more preferably 15.2 cm to 40.6 cm (6-16 inches) from the interior edge of film travel off the dispenser housing). This positioning outside of the film edge provides for the filter enlargement and much greater flexibility in the type and configuration of the filter. As seen, filters 4206 and 4208 are readily accessible and preferably retained in a cylindrical cavity such that a cylindrical filter shape can be inserted in cartridge like fashion. Enhanced removal filters can also be inserted like "depth" filters (100 micron or 50 micron removed or less, as in a two stage depth filter with a first stage soft outer element and a more rigid inner element capable of handling the pressures involved and the chemical type passing therethrough without degradation).

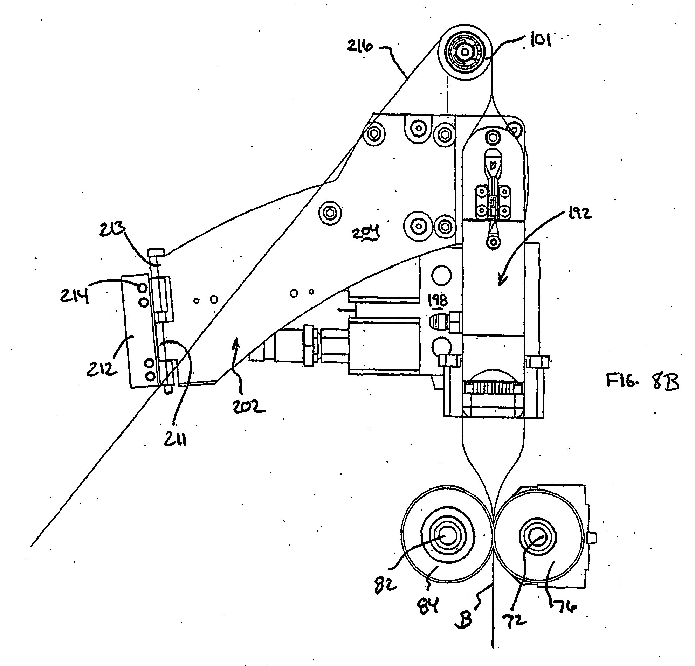

Figure 8A illustrates dispenser apparatus 192 separated from its support location shown in Figure 7 and shows main housing 194, dispenser end 196 as well as additional detail as to inlet end section 198 and dispenser motor 200. As seen from Figures 7, 8A and 8B and described in part above, many of the components previously placed in the prior art close to the dispenser outlet and between the left and right edges of the film being fed therepast and thus highly susceptible to foam contact, are moved outside and away from the area between the left and right edges of the film. In Figure 7 there is demarcation line FE representing the most interior film edge with the opposite edge traveling forward of the free end of dispenser system 192. Thus, with a C-fold film the bend edge is free to pass by the cantilevered dispenser system 192 while the interior two sides are joined together with edge sealer 91 while passing along line edge FE. The components which have been moved from the prior art location between the film edges includes the drive motor (and a portion of its transmission), filter screens, electrical wires, chemical hoses and fittings, shut off valves, and pressure sensors.

For example, moving the drive motor 200 for the valving rod outside of the bag area facilitates (i) making the shape of the dispenser more streamlined for smooth film contact as in a smooth upper curvature leading to planar side walls (ii) making for use of a larger, more powerful, and more robust motor and gear box than is possible if it had to be inside the bag, (a requirement that demands the miniaturization of any potentially large components or mechanisms), (iii) the motor will stay cleaner of foam, crystallized isocyanate, sticky B chemicals, and solvents for the life of the system, since it is situated out of harms way, (iv) motor is easier to service than on previous dispenser designs, which required some fine work in a sticky environment, with the motor of the present invention being serviceable without having to open any of the chemical passages or touch any components that handle chemical.

The aforementioned chemical filter screens for filters 4206, 4208 are needed to protect the small orifice ports in the mixing chamber. These screens need to be cleaned out periodically. In the common prior art design, these screens are adjacent to the mixing block. To access these screens you have to work in this area, which can be a sticky and difficult task because of the chemical and foam buildup. A preferred embodiment of the present invention locates the screens of filters 4206 and 4208 in the main dispenser manifold 199, which is completely outside of the bag. This means that the screens retainers will be cleaner and easier to remove than with the prior art design. The screen retainer caps are also made much larger relative to the above noted prior art design. By moving the filters external to the bag forming area, the screens can be made larger avoiding the situation that the smaller the screen surface area, the more often it has to be cleaned or replaced. The screens in previous foam dispensers were located near the mixing chamber, which were always inside the bag. These screens had to be small because of the miniaturization required to keep everything inside the bag. The filter screens and filters 4206, 4208 supporting the screens of a preferred embodiment are located outside of the bag in the main dispenser manifold, where components can be much larger without affecting machine performance in any way. The current design preferably has 10 to 100 times or more the surface area of the screens used in the most common prior art design (e.g., an exposed screens surface area of greater than an inch such as in the 3.8 cm to 7.6 cm (1½ to 3 inch) range). Also, with the filter screen area increased capability, the present invention provides for the use of a finer mesh screen without increasing the frequency of required screen cleaning to a noticeable degree. If the screens in the noted prior art design were changed to a finer mesh, it would cause a significant increase in screen clogs and maintenance, because of the increased trapping power of the finer mesh and the undersized screen surface area. Finer mesh screens (e.g., 100 mesh or better) do a better job of protecting the ports in the mixing chamber from particles, debris, and polymeric gunk that sometimes forms in the chemical lines. The mesh size of the screen used in the noted prior art dispenser is roughly the same as the diameter of the port in the mixing chamber. In this situation, the screen is ill suited to provide the recommended level of protection required to keep the ports clean over an extended period. For example, in the hydraulics business, the general rule of thumb is that the size of the hole in the screen mesh should be about 10 times smaller than the size of the orifice that is being protected. The present inventions ratio is about 3 to 1 or more, which is judged adequate for the anticipated needs, but can be increased without significant repercussions as in pressure drop concerns.

Heating the chemical manifolds of the dispenser assembly to a proper temperature range prevents the phenomenon called cold shot, which occurs when the chemical temperature drops in proximity to the dispenser, because of the large mass of relatively cold metal in that area. If the idle period between shots is short, less than 10 seconds, for example, the chemical within the manifolds will not have sufficient time to cool below an acceptable range, and no cold shot will be observed. However, if the idle time exceeds 10 seconds, the problem begins to manifest itself as coarse, poorly cured, sticky foam. Cold shot has an impact on foam efficiency, since it is possible that every shot that the user makes will be affected. If an unheated dispenser has been idle for a long time, say 15 minutes or more, it can take in excess of 1 second to purge the cold chemical and dispense at the correct temperatures with chemical that was residing within the chemical lines. If the operator's average shot length is 4 seconds, then the cold shot phenomenon could potentially affect 25% of the chemical volume that is used. The present invention has the advantageous feature of providing heat sources at strategic locations to provide at least temperature maintenance heating along the entire path of chemical travel starting with a heater in the chemical supply hose initiated within 6.1 m (20 feet) or so of the dispenser housing, a heater in the main manifold 205, and a heater in the dispenser housing 194 which has chemical passageways that exit into the mixing module. In this way, from the initiation point all the way to the outlet tip, the chemical is maintained at the desired temperature (e.g., maintained in the sense of not being allowed to drop below a desired temperature 54.4°C (130°F) or with the option of applying additional heat to raise the level at to above an initial chemical hose temperature setting).

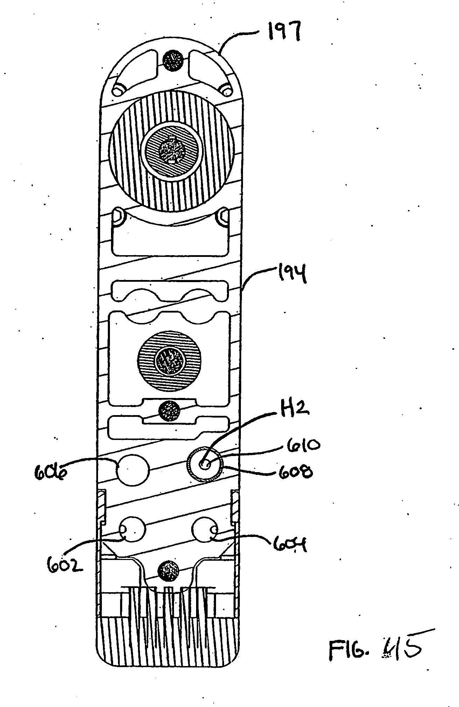

Manifold heaters to prevent cold shot by maintaining the metal mass temperature in an acceptable zone, which is typically in the 43.3°C to 54.4°C (110 to 130°F) range, have been developed in the prior art but not used particularly effectively. The problem is not so noticeable if the manifolds are heated to at least 43.3°C (110 degrees E). At this point, the visual indications of cold shot are reduced to a point where most users will not notice it. In an effort to eliminate cold shot as an issue entirely, the manifolds of the present invention are preferably heated to the same temperature as the chemical lines, which is preferably about 51.7°C to 62.8°C (125 to 145 degrees F). The manifold heaters in use in many prior art systems, have a heating power in the 10 to 20 watt range. This is not well suited to do the job as it takes about 15 to 25 minutes for the manifolds to get close to steady state temperature from a cold start. At this low power, the manifolds will only heat up to 43.3°C to 46.1°C (110 or 115 degrees F), if the operating environment is not much colder than normal room temperature, and possibly not even get up to that temperature if the room is significantly colder than normal, which is a common occurrence in the manufacturing environment. Under the present invention's "external to bag" manifold positioning and the way the manifolds and dispenser support are designed, there can be used a larger and much more powerful heater than what was possible in the noted prior art design. A preferred embodiment of the present invention has about 300 watts or more of manifold heating power available. A preferred embodiment of the invention uses two cartridge heaters, one is preferably mounted into a drilled hole in the main manifold 199 (the manifold block designated 205) and is represented by H1 in Figure 8A, and the other (H2 - Figure 45) is preferably installed into an extruded hole in the dispenser support and is of cartridge form meaning it has its own sensors and controls for making adjustments in coordination with a control board processor or with its own processor or reliance can be placed on the control sub-system for the manifold noted above. The cartridge heaters of the present invention can be replaced without having to handle any components that are likely to be in contact with foam, chemicals, or solvents and thus to service one does not have to deal with components that are contaminated with chemicals, solvents, and foam.

Common prior art systems use a small PTC heater, which is situated inside the dispenser manifold that is adjacent the mixing block. A PTC is an abbreviation for Positive Temperature Coefficient. Heaters with this designation are based on thermistors with a resistance vs. temperature curve that has a positive slope, meaning that its resistance goes up as the temperature goes up. Most thermistors are NTC, or Negative Temperature Coefficient, and have a resistance vs. temperature curve that has a negative slope. PTC type thermistors are often used in heating applications because of their self-limiting characteristic; as they get hot, they draw less power allowing for a small PTC heater to heat the dispenser manifold. This approach has the advantage of not needing a temperature sensor or a temperature control circuit, since the PTC is self-regulating and self-limiting. One disadvantage, among many, however, with the PTC approach is that there is no practical way to change the temperature setpoint. The resistance vs. temperature curve of the PTC, in conjunction with the thermal conductivity between the PTC and the adjacent materials, determines the final steady state temperature of the manifold. A preferred embodiment of the present invention has two manifolds (199 and dispenser housing 194 described below), each with its own independent cartridge heater, thermistor (H1 and H2), and control circuit; giving it the capability of controlling each manifold independently and at a wide range ofsetpoints if necessary (e.g., a number of setpoints falling between 3 to 20). The control circuits and thermistor sensors that are used in the manifolds of the present invention are easily capable of maintaining manifold temperatures to an accuracy of 1.1°C to 1.7°C (2 or 3°F), even if ambient temperatures in the work environment vary widely. The present invention also preferably uses the feature of having the temperature setpoints of the manifolds H1 and H2 follow and match the temperature setpoints of the chemical hoses. For example, if the operator sets the chemical line temperatures (e.g., 54.4°C (130 degrees F)) for chemical hoses 28' and 30' (see Figure 103) feeding from the in-line pumps to the dispensers). Thus, the system controller can automatically make the setpoint temperatures of the manifolds match the set chemical hose temperature (e.g., 54.4°C (130 degrees F)) unless instructed otherwise. If the operator later changes the line temperature setpoints to 140 degrees F, the system controller can automatically make the temperatures of the heaters in the manifolds set for 60°C (140 degrees F) in the chemical passing therepast.

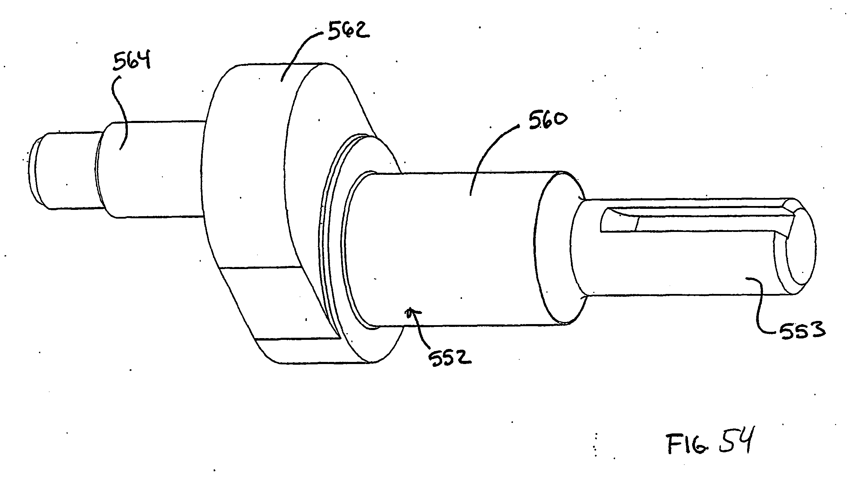

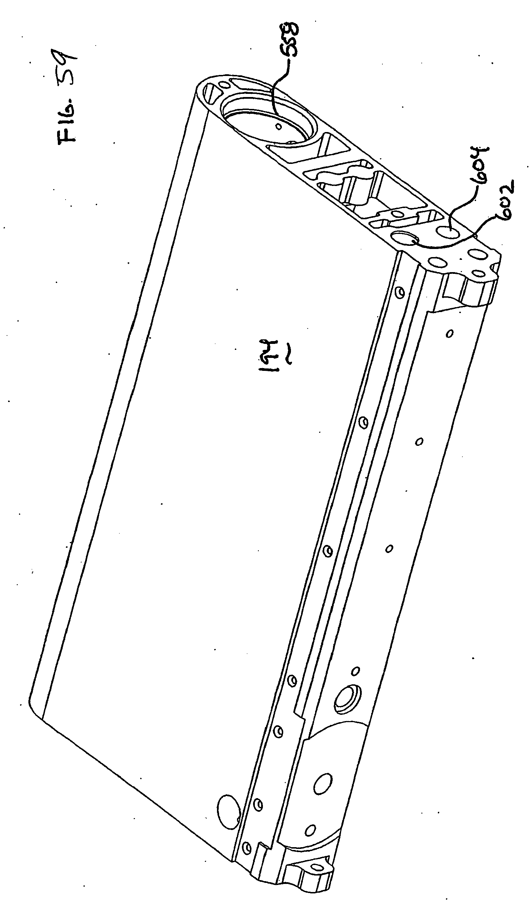

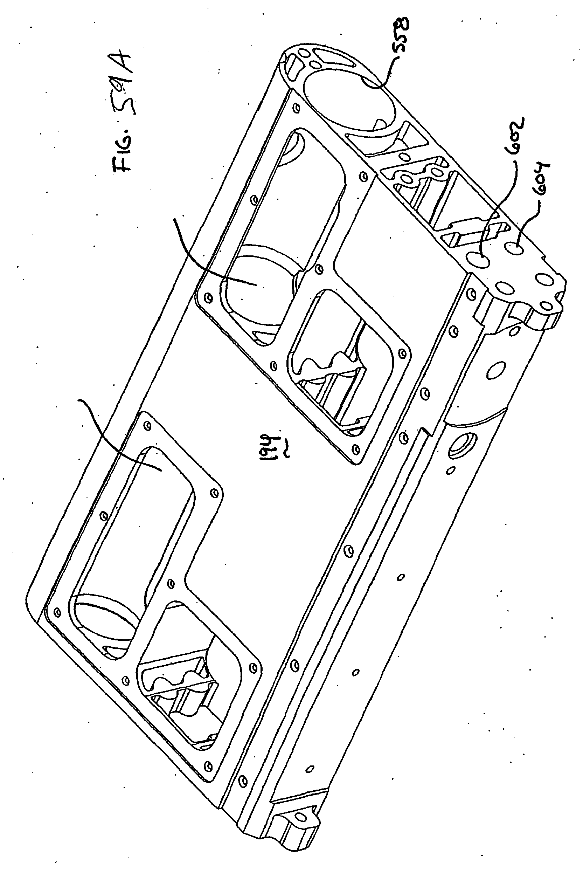

A preferred embodiment of the present invention also has no exposed electrical wires or cables inside of the bag. All electrical connections are made from the outside, or completely isolated inside the dispenser support 194 (which preferably based on an extruded main body as shown in Figures 54 and 59A).

Common prior art systems have one large multi-conductor electrical (e.g., motor) supply cable that is exposed inside of the bag, often together with a number of single conductor wires inside of the dispenser mechanism that are not protected from the seepage of chemicals and foams. Also, the common prior art designs have chemical hoses that run wide-open right into the middle of the bag, where they are regularly exposed to foam, chemicals, and solvents. These chemical hoses are especially vulnerable because their outer layer is a stainless steel braiding, which presents an obstacle to cleaning when the foam gets into it. Prior art chemical hose fittings, JIC swivel type, are also completely exposed to foam, which can make it more difficult to loosen the fittings, or to re-tighten them.

The conventional dispenser systems shutoff valves for chemical flow are located adjacent to the mixing block. They are fully exposed, right in the middle of the bag, where they are regularly contacted by foam. As seen from Figure 8A, for example, chemical line shut off valves 201 and 203 of the present invention are supported by manifold 205 and positioned far off from the bag (e.g., more than 5 and preferably more than 7 inches from the film edge FE).

Figure 8A further illustrates support bracket assembly 202 comprising main bracket body 204, having bracket plate 206 secured to an exterior bracket plate 208 by way of cross plate 207 with securement bolts 209 on which motor 200 is mounted, with dispensing system 192 also being secured to bracket assembly 202. Bracket assembly 202 further comprises dispenser rotation facilitator means 210 such as the hinged bracket support assembly 219 shown in its preferred positioning with the rotation axis being at its rearward most end whereby rotation of the dispenser from the dispense mode (e.g., a vertical orientation with chemical output along a vertical axis preferred) shown in Figure 8A to a servicing mode whereupon both the bracket assembly 202 and rigidly (or also hinged by) attached dispenser system 192 are rotated greater than 60 degrees (e.g., 90° transverse to original position) out toward the operator. Bracket support assembly 219 comprises securement clamp plate assembly 212 with opposing clamp plates 215, 217 with bolt fasteners 214 for securement to interior frame member 170 such that support bracket assembly 202 can be hinged (together with the dispenser assembly 192 with driving motor 200 out of the way and forward of the front face 181 of bagger assembly 64 (e.g., a counterclockwise rotation)).

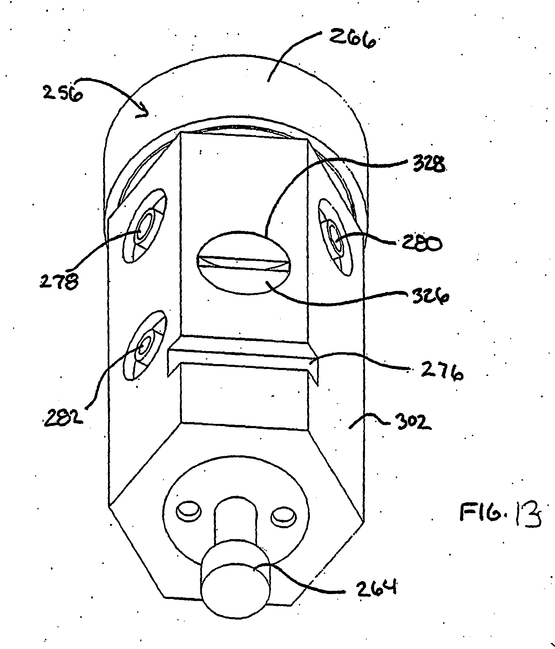

Thus, while dispenser apparatus 92 is preferably designed to have its outlet port vertically close to the bag's end seal location, it is also preferably arranged at a height relative to the upper end of support assembly providing mounting means 78 for the bagger assembly 64 to have freedom of adjustment between the dispensing position and the servicing position (e.g., see the curved forward wall 164 whose curvature provides for added clearance relative to the lower edge of dispenser 192). With this arrangement, when servicing is desired, the operator simply rotates the entire dispenser assembly toward the operator (a counterclockwise rotation for the dispenser assembly shown in Figure 13 (e.g., a 45-135° rotation with a preferred 90° rotation placing the axis of elongation of housing 194 transverse to the central axis of drive shaft 82)). Rotation bracket support assembly 202 is preferably made rotatable by way of a hinged connection 219 at the rear end of the support bracket 202, although other rotation arrangements are also featured under the present invention such as the dispenser 192 having a rotation access at its boundary region of bracket assembly 202 and dispenser housing 194 or inlet end section 198.

Figure 8B provides a side elevational view of dispenser system 192 and bracket assembly 202 in relationship to film 216 which in a preferred embodiment is a C-fold film featuring a common fold edge and two free edges at the opposite end of the two fold panel. While a C-fold film is a preferred film choice, a variety of other film types of film or bag material sources are suitable for use of the present invention including gusseted and non-gusseted film, tubular film (preferably with an upstream slit formation means (not shown) for passage past the dispenser) or two separate or independent film sources (in which case an opposite film roll and film path is added together with an added side edge sealer) or a single film roll comprised of two layers with opposite free edges in a stacked and rolled relationship (also requiring a two side edge seal not needed with the preferred C-fold film usage wherein only the non-fold film edging needs to be edge sealed). For example, in a preferred embodiment, in addition to the single fold C-fold film, with planar front and back surfaces, a larger volume bag is provided with the same left to right edge film travel width (e.g., 30.5 cm to 48.3 cm (12 inch or 19 inch)) and features a gusseted film such as one having a common fold edge and a V-fold provided at that fold end and on the other, interior side, free edges for both the front and rear film sheets sharing the common fold line. The interior edges each have a V-fold that is preferably less than a third of the overall width of the sheet (e.g., 6.35 cm (2½ inch) gussets).

As shown in Figure 8B after leaving the film roll and traveling past lower idler roller 114 (not shown in Figure 8B), the film is wrapped around upper idler roller 101 and exits at a position where it is shown to have a vertical film departure tangent vertically aligned with the nip contact edge of the nip roller sets. Because of the C-fold arrangement, the folded edge is free to travel outward of the cantilever supported dispenser system 192. That is, depending upon film width desired, the folded end of C-fold film 216 travels vertically down to the left side of dispenser end section 196 (from a front view as in relative to Figure 7) for driving nip engagement with the contacting, left set of nip rollers (74, 86). As further shown in Figure 8B the opposite end of film 216 with free edges travels along the smooth surface of dispenser housing whereupon the free edges are brought together for driving engagement relative to contacting right nip roller set (76, 84) whereupon the contacting free film edges are subject to edge sealer 91 to complete the side edge sealing for the bag being formed.

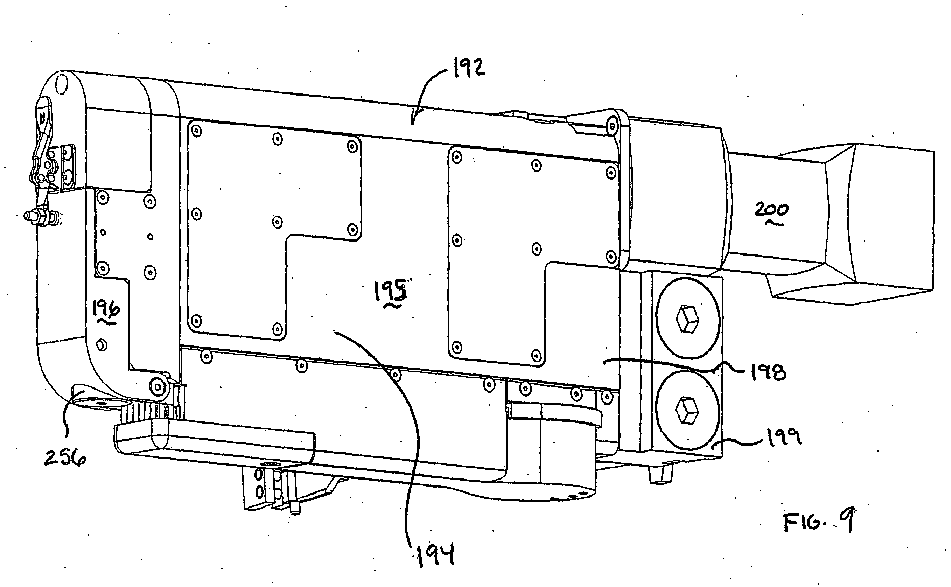

Figure 9 provides a view of dispenser system 192 in similar fashion to that shown in Figure 13, but from a different perspective angle. Figure 9 thus shows dispenser housing 194 comprising main housing section 195, dispenser outlet section 196 and dispenser inlet section 198. Dispenser drive motor 200 is shown mounted on dispenser housing 194. Figure 9 further partially illustrates chemical mixing module 256 from which mixed chemical is dispensed to an awaiting reception area such as a partially completed bag.

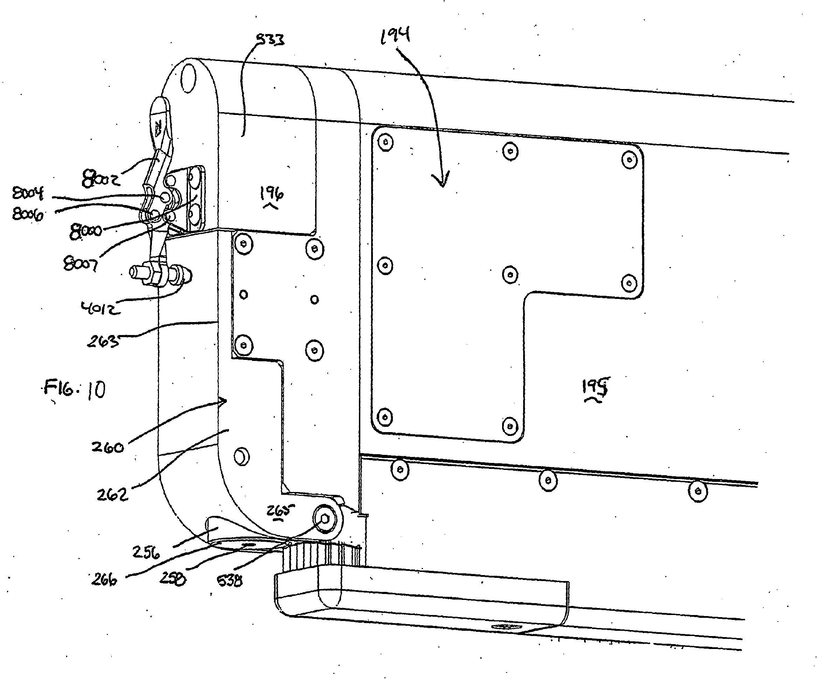

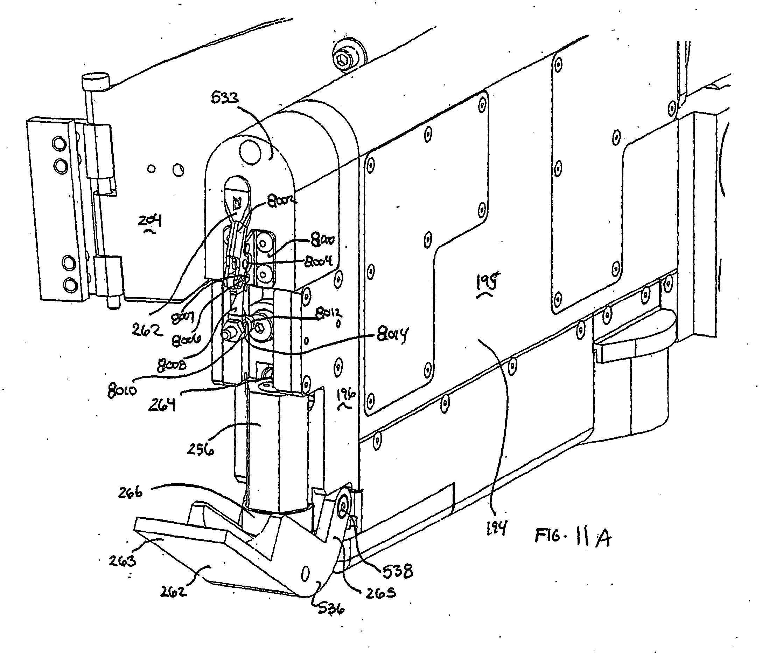

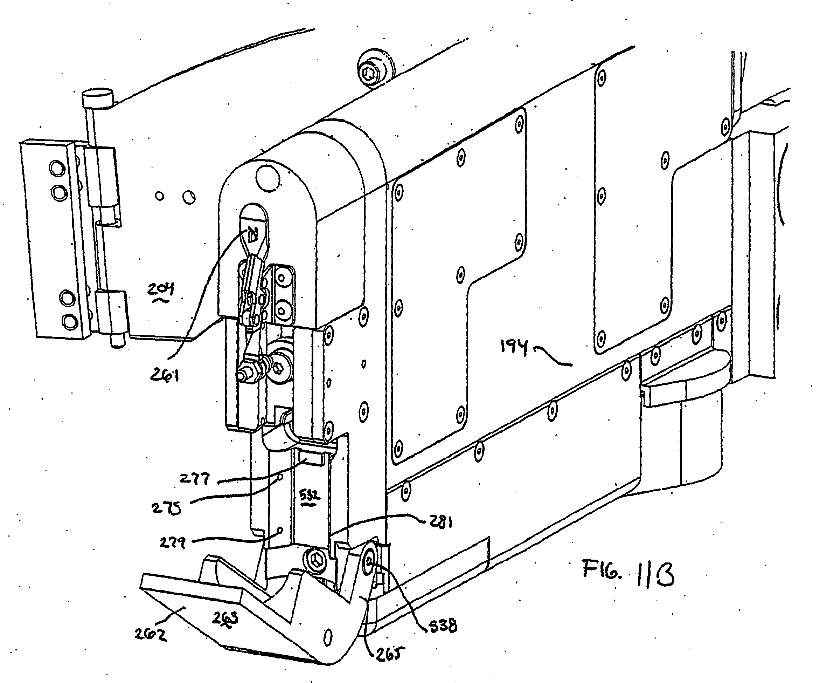

Figure 10 provides an enlarged view of dispenser outlet section 196 and illustrates the outlet port 258 of mixing module 256. Figure 10 further illustrates mixing module retention means 260 which in a preferred embodiment comprises adjustable door 262 comprising a first, outer, upper mixing module enclosure component 263 and a second pivotable base 265 engagement component with the pivot base shown engaged with hinge 538 (e.g., a pair of hinge screws with one shown in Fig. 10) supported by main housing 194. The first upper component 263 is designed for contact with an upper forward section of the housings dispenser outlet section 196 when in a closed mixing module retention and positioning state. Figure 10 illustrates door or closure device 262 in a closed state while Figures 11A and 11 B show door 262 in an open state. Door 262 is closed in position relative to a received mixing module 256 sandwiched between the door and the main housing, while providing a biasing function to facilitate a secure compression seal arrangement between the mixing module's chemical and solvent inlet seals and the corresponding chemical feed outlets of the main housing. Figure 11A illustrates closure device 262 in an open, mixing module access mode with mixing module 256 retained in an uncompressed position relative to main housing 194, and with the free end of valving rod 264 in an upper position and the mixing module outlet end cap 266 in a lower position which can be seen partially jutting out in the Figure 10 door closed state. Figure 11B shows a similar view to that of Figure 11A, but with the mixing module removed.

The mixing module mounting means of the present invention is designed to be entirely functional in a tool free manner which is unlike the prior art systems requiring tools to access the mixing cartridges for servicing or replacement and require that same tooling to fix back in position a mixing cartridge. Also, the area required for tool insertion in the prior art systems is also prone to foam coverage, making accessing and removal even more difficult. The tool free design of the present invention features toggle clamp 262 having its pivot base 8000 secured to dispenser housing 194 preferably at the forward face of upper housing cap 533 and supports in pivotable fashion, at first pivot pin 8004, "over center" toggle level handle 8002 which has a second pivot pin 8006 receiving, in pivotable fashion, compression lever 8008 having at its free end abutment member 8010 and which is supported on base 8000 with a third pivot pin 8007 to provide for over center latching which compression lever is preferably a threaded pin with a compressible (e.g., electrometric) tip 8012 at its interior end and its opposite and fixed by nut 8014 (which renders compression pin 8010 adjustable in the level of compression imposed while in the over center latch mode).

Figure 10 illustrates the mixing module closure door pivoted up into its closure state and with toggle clamp 262 in its initial contact immediately preceding being put in the toggle or over center latch state upon pivoting lever 4002 into its final over center state (pointing down and not shown in the drawings) which can be achieved with a simple one finger action (same true for release). Preferably tip 8012 is a hard rubber tip and the compression level is factory set so that the hinged door firmly clamps the mixing module when the toggle clamp is closed. Field adjustments can also be made. Various other mixing module mounting closure means are also featured under the present invention such as a rotating disk or lever with a cam riding surface ramp with temporary holding depression or a sliding wedge in bracket supported by housing 194. The toggle clamp provides, however, a system taking advantage of the mechanical advantage of the over center latch and housing arrangement. In the over center closed state with pin tip 8012 in a compression state, tip 8012 makes contact with the upper end of the pivoted door. The electrometric seals about the solvent ports and chemical ports sealing off the interchange between the dispenser housing 194 and mixing module are thus compressed into the desired sealing compression state. Thus, there is provided an easy manner for properly and accurately mounting the mixing module in dispenser 192 of the present invention.

Mixing module 256 of the present invention shares similarities with the mixing module described in co-pending U.S. Patent Application No. 10/623,716, filed on July 22, 2003 and entitled Dispenser Mixing Module and Method of Assembling and Using Same, which application is incorporated herein by reference in its entirety. Through the use of mixing chamber shift prevention means (313, Fig. 11B) there is prevented movement of a mixing chamber within its housing due to rod stick and compression and return of the compression means with the mixing chamber and thus there is avoided a variety of problems associated with the movement of the mixing chamber in the prior art. The present invention also preferably features mixing chamber shift prevention means used together with an additional solvent distribution system that together provide a tip management system with both mixing chamber position maintenance and efficient solvent application to those areas of the mixing module otherwise having the potential for foam build up such as the dispenser outlet tip.

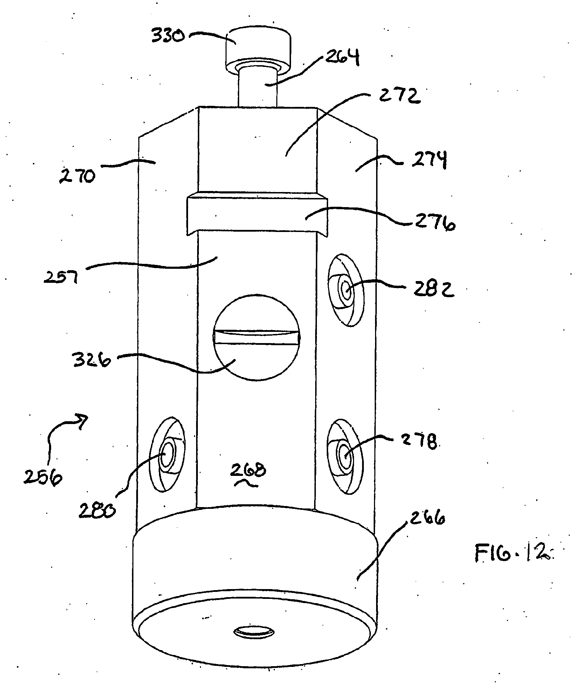

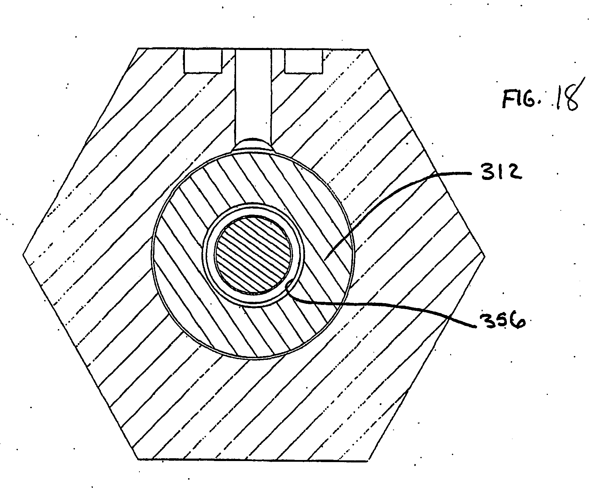

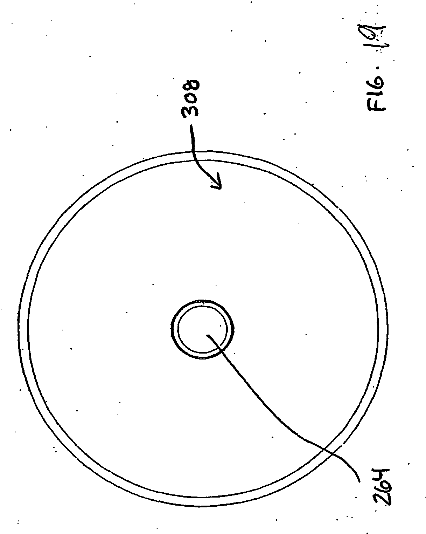

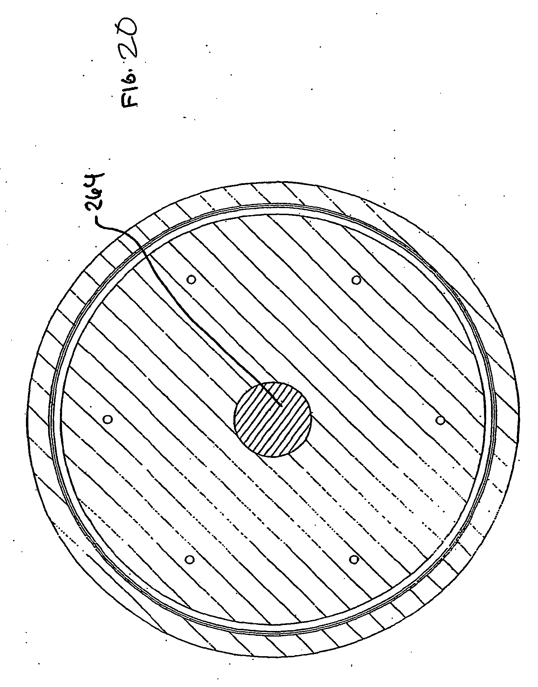

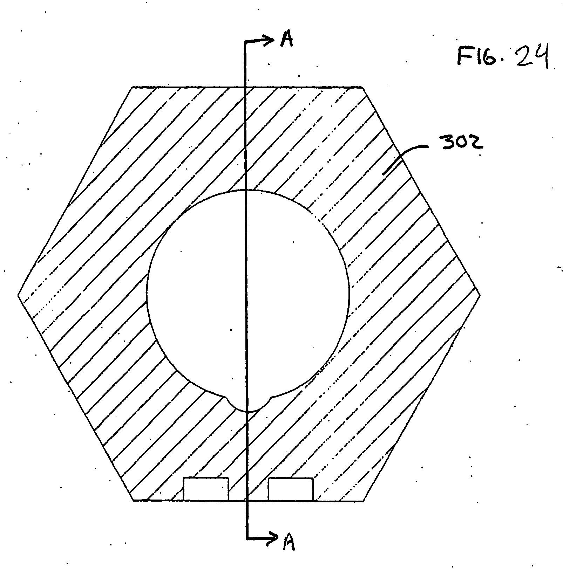

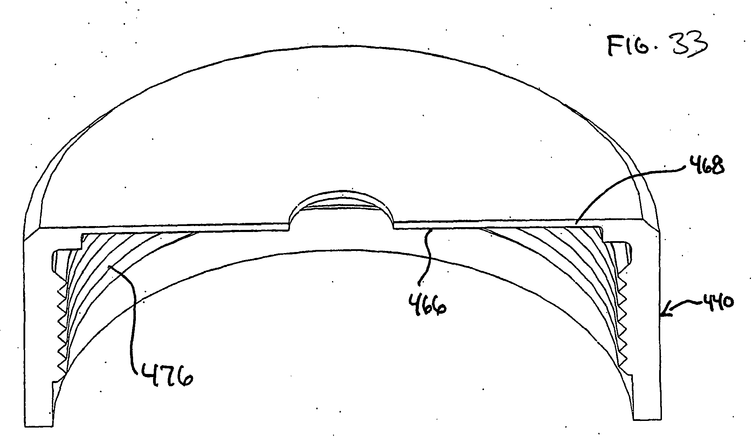

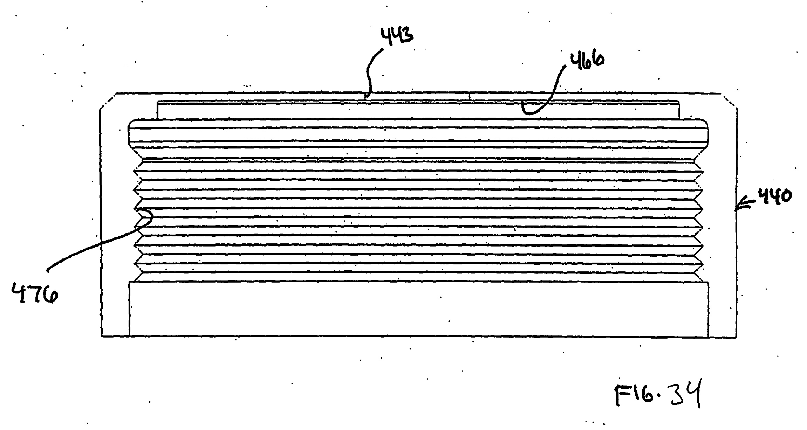

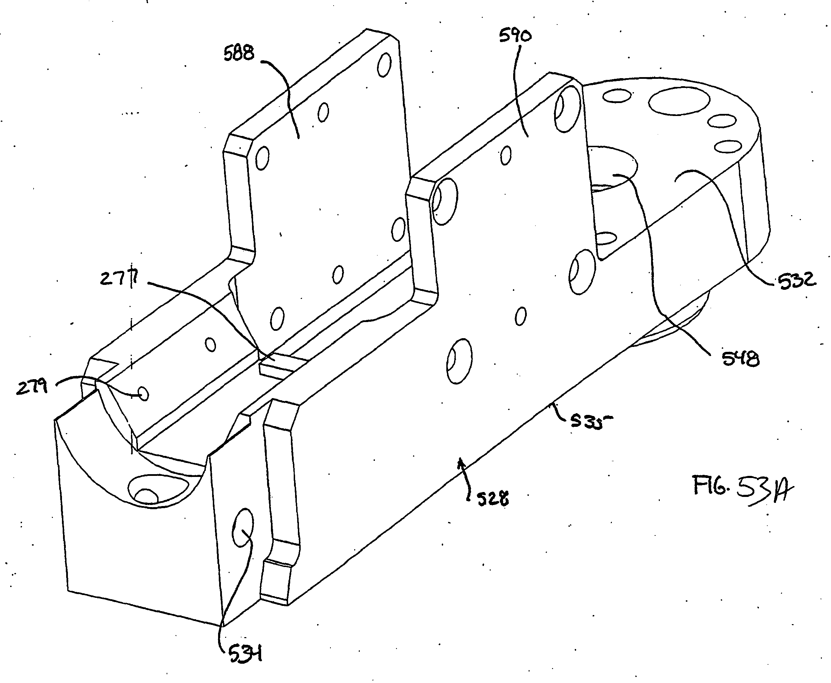

With reference to figures 12 to 35 there is provided a discussion of a preferred embodiment of mixing module 256 of the present invention. Figure 12 illustrates the contact side 268 of mixing module housing 257 encompassing mixing chamber 312 with shift prevention means 313 and also, preferably provided with solvent flow distribution means having solvent entrance port 282. Housing 257 features, first, second and third side walls 270, 272 and 274 which together provide housing contact side 268 representing half of the walls of the preferred hexagonal cross-sectioned mixing module. Wall 272 includes main housing positioner 276, with a preferred embodiment being a positioner recess configured to receive a corresponding positioner projection 277 provided in main housing component 532 (Figs. 11B and 53A). Positioner 276, when engaged by projection 277, acts to position first and second mixing module chemical inlet ports 278, 280 in proper alignment with chemical outlet feed ports 279, 281 of housing module support 532 (Fig. 11B). Similarly, the positioning means for the mixing module further aligns the mixing module solvent inlet port 282 in proper position relative to solvent outlet port 275 (Fig. 11B) of module support housing 532. While a two component system is a preferred embodiment of the present invention, the present invention is also suitable for use with single or more than two chemical component systems, particularly where there is a potential stick and move problem in a mixing or dispensing chamber of a dispenser (mixing being used in a broad sense to include multi-source chemical mixing or the spraying into a rod passageway of a chemical through a single, sole inlet source and an internal intermingling of the sole chemical material's constitution).

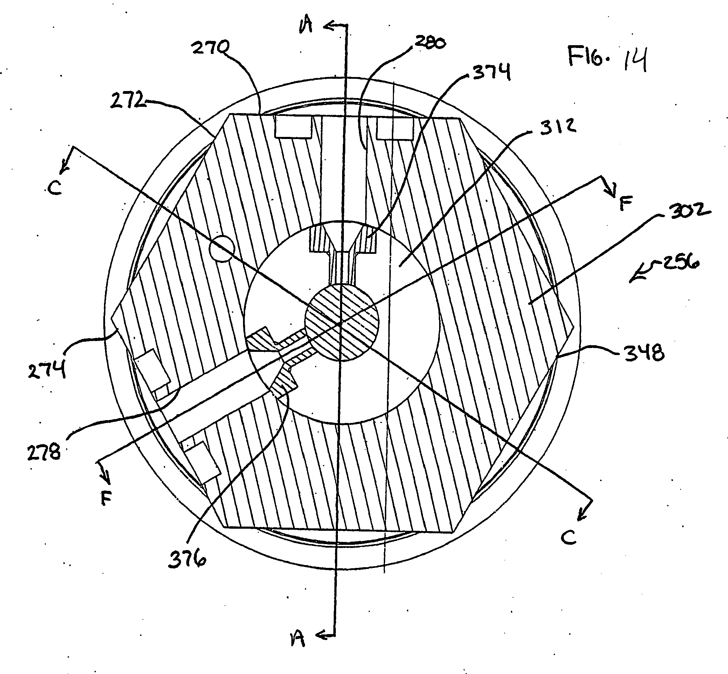

Figures 14 to 20 illustrate mixing module 256 in an assembled state comprising module housing 302 having a "front "(open) end 304 and a "rear" (open) end 306 with associated front end solvent dispensing front cap assembly 308 or cap covering and back cap 310. Front cap assembly 308 and back (e.g., compression) cap 310 retain in operating position mixing chamber 312, slotted cup-shaped spacer 314 and Belleville washer stack 316 (the preferred form of compression means). Each of the face cap assembly 308, mixing chamber 312, spacer 314, washer stack 316 and back cap 310 have an axial passageway for receiving valving or purge rod ("rod" hereafter) 264. Mixing module 256 also preferably has internal solvent chamber 322 with spacer 314 and back cap 310 preferably formed with solvent reception cavities (323,324). The Belleville washers in stack 316 are also shown as having an annular clearance space which facilitates solvent flow along the received portion of rod 318 and provides room for limit ring 332 for limiting axial movement of rod 264.

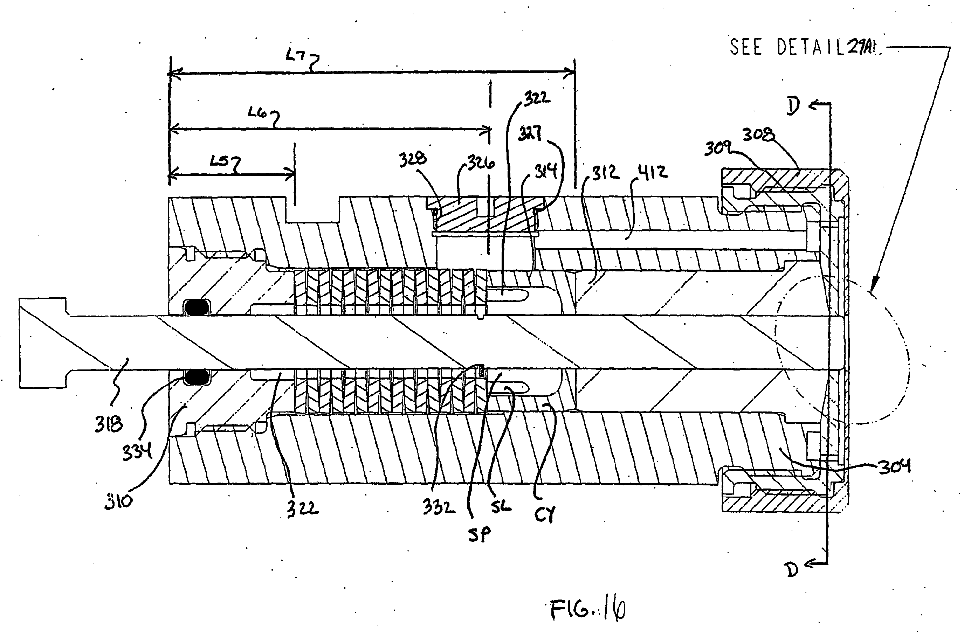

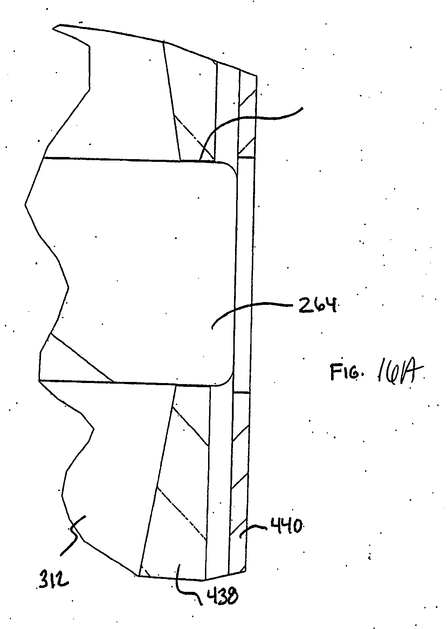

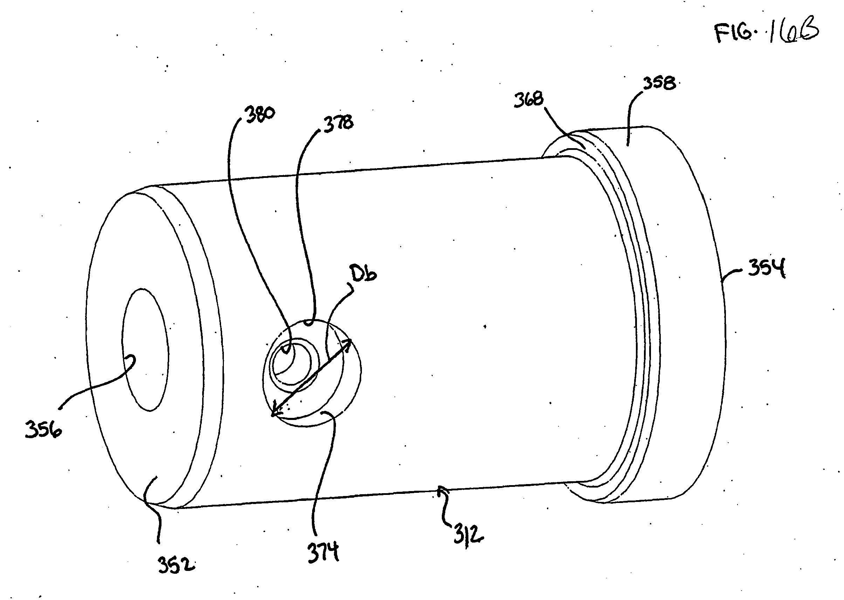

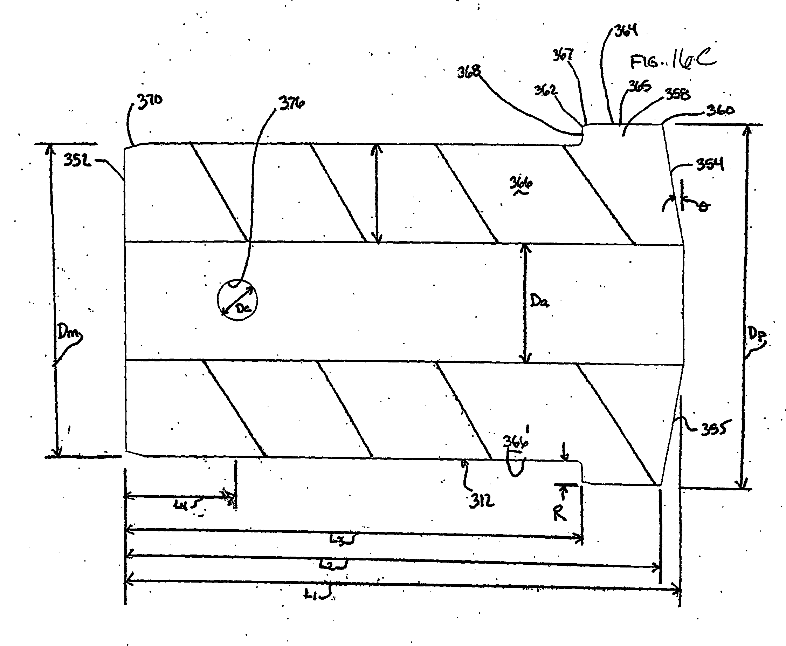

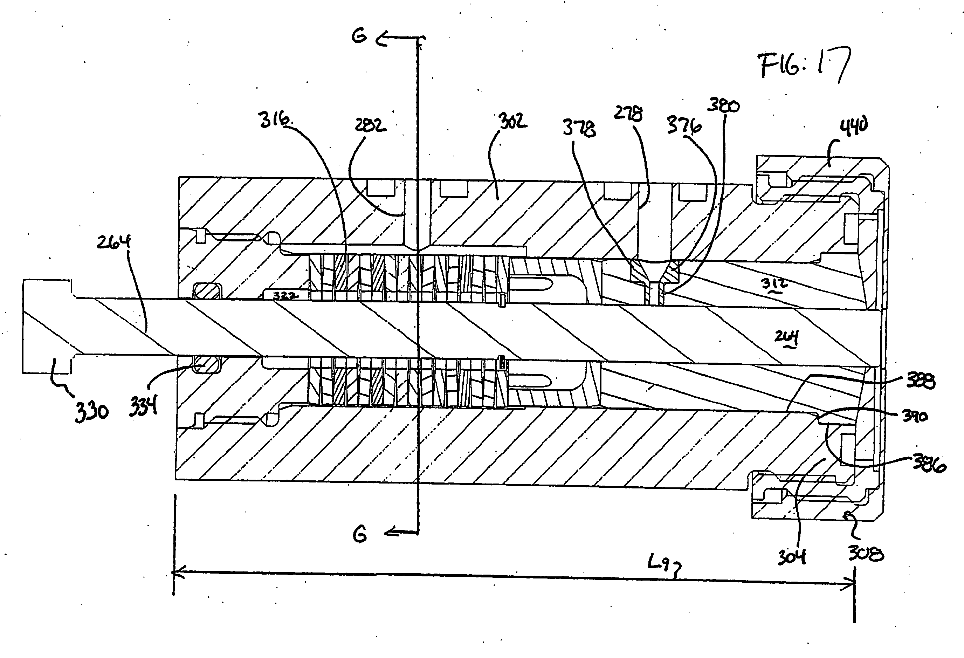

Solvent cap 326 (Fig. 16), is attached (e.g., threaded) to housing 302 to close off solvent access opening 328 formed in one of the sides (e.g., side wall 272) of the multi-sided housing 302. Solvent cap 326 is preferably positioned to axially overlap part of the internally positioned Belleville washer stack 316 and the spacer 314 positioned between the compression means 316 and Teflon block 312. The Belleville washer stack 316 is also preferably arranged in opposing pairs (e.g., 8 washer pairs with each pair set having oppositely facing washers) which provides a preferred level of 884.6 N (200 lbf.) relative to spacer contact with the mixing chamber. Solvent cap 326 provides an access port for emptying and filling the solvent chamber 322 which provides for a pooling of solvent (continuous replenishment flow pooling under a preferred embodiment of the present invention) at a location which retains fluid contact with an exposed surface of the valving rod as it reciprocates in the mixing chamber. As shown in Figure 17, there is further provided solvent feed port 282 which provides an inlet port for solvent from a separate source (preferably a pumped continuous or periodic flow solvent system as described below) for feeding the flow through dispenser tip cleaning solvent system for the front cap assembly 308 and replenishing solvent chamber 322 after its initial filling via access cap 326.

Valving rod 264 has a reciprocating means capture end 330 (e.g., an enlarged end as in a radially enlarged cylindrical end member) for attachment to a motorized rod reciprocator. Rod 264 axially extends completely through the housing so as to extend out past respective face and back caps 308 and 310. Rod 264 also comprises annular limit ring 332 (Fig. 16) to avoid a complete pull out of rod 264 from the mixing module. A rod contacting seal 334 is further preferably provided such as an inserted O-ring into an O-ring reception cavity formed in back cap 310. Housing 302 further includes chemical passage inlet holes 278, 280 (Fig. 14) formed at midway points across side walls 270 and 274 which are positioned to opposite sides of intermediate side wall 272 in the preferred hexagonal configured housing 302. Wall 348 is preferably diametrically opposed to wall 272. Walls 270 and 274 position chemical inlets 278, 280 in the preferred 120° chemical inlet spacing.

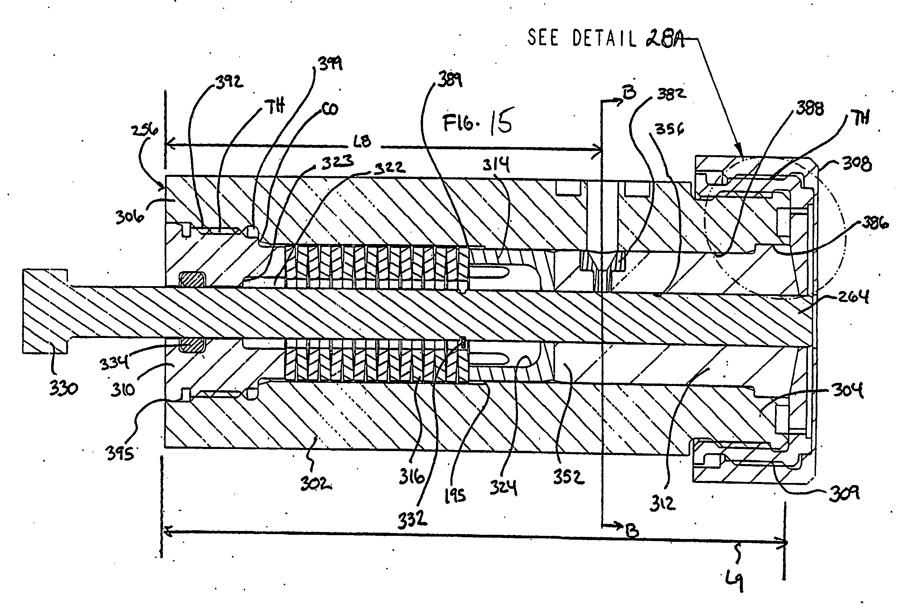

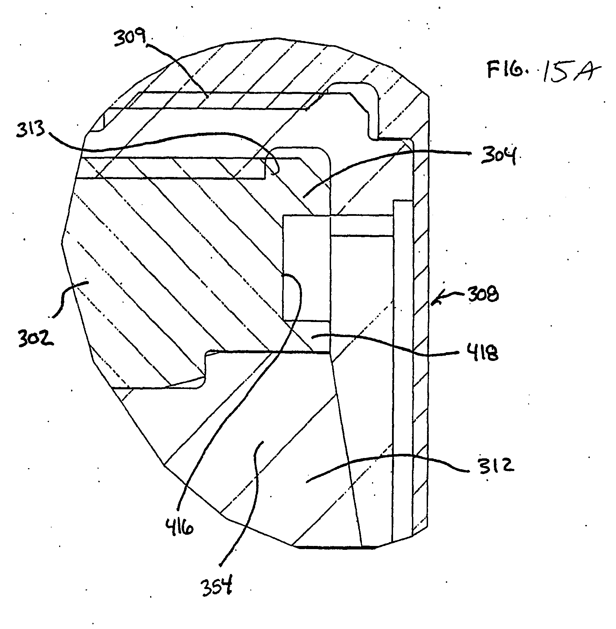

Reference is made to Figures 15A, 16B, 16C, 17 and 35 for a further discussion of mixing chamber 312 with locking or rod stick movement prevention means 313. Figures 16B and 16C provide different perspective views of a preferred embodiment for mixing chamber 312 which is preferably formed of a low friction material such as one having cold flow capability with Teflon being a preferred material. Mixing chamber 312 has first end (e.g., spacer sleeve contact end or rear end) 352 and second (e.g., front) end 354. As shown in Figure 16C, axial rod passageway (or through hole) 356 extends along through the central axis of chamber 312 (and also along the central axis of the mixing module housing 302 as well) so as to open out at the first and second ends.

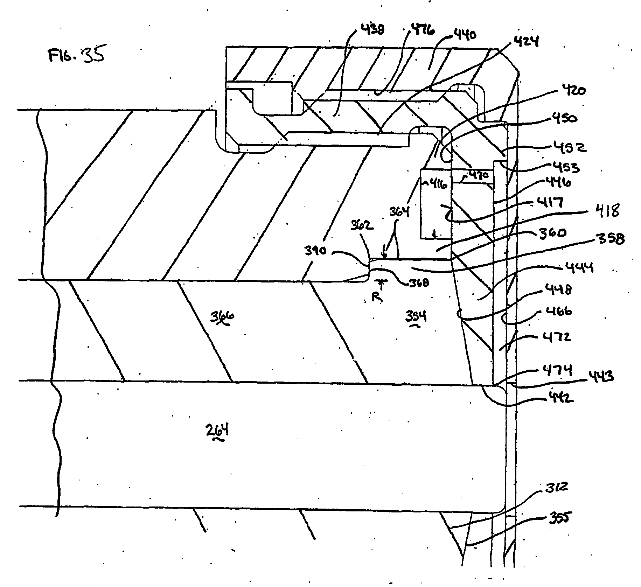

Figure 16C shows the preferred configuration for passageway 356 as a continuous diameter passageway of diameter Da (a range of 0.25 cm to 1.27 cm (.1 to .5 inches) is illustrative of a suitable diameter range Da with 0.38 cm to 0.76 cm (.15 to .3 inch) being a more preferred sub-range and 0.47 cm (.187 inch) being a preferred value for Da). It is noted that any dimensions provided in the present application are for illustrative purposes only and thus are not intended to be limiting relative to the scope of the present invention. Figures 16B, 16C and 35 further illustrate locking protrusion 358 forming a part of locking means 313, and which in a preferred embodiment is an annular extension having a forward edge 360 coinciding with the outer peripheral edge of front face 355, and rear edge 362 defining an axial inner edge of peripheral surface 364. Peripheral surface 364 preferably includes a cylindrical section 365 with rear chamfer edge 367. Locking protrusion 358 is preferably integral with main body portion 366, with main body 366 extending from the rear end to the front end of mixing chamber 312 (e.g., entire mixing chamber formed as a monolithic body and also preferably of a common material). As illustrated, the radial interior of step down wall ring 368, extends into main body portion 366 (with the main body being the illustrated cylindrical body extending from the front end to the rear end of mixing chamber 312 with the annular projection 358 extending radially out from a front end region of that main body preferably for 20% or less of the length of main body 312). Rear end 352 of main body portion 366 preferably features a chamfered peripheral edge 370 to facilitate insertion of mixing chamber 312 into the front open end of housing 302 prior to front cap assembly 308 securement to the front end 304 of the housing as by finger threading.

While the illustrated looking protrusion 358 can take on a variety of configurations (e.g., either peripherally continuous or interrupted with common or different length/height protrusion(s) about the periphery of the mixing chamber 312) as well as a variety of axial extension lengths and a variety of radial extension lengths (e.g., a radial distance R (Figure 16C) between surface 364 and the forward most outer, exposed surface 366' of main body 366, of 0.064 cm to 1.27 cm (.025 to .5 inch) with 0.089 cm to 0.127 cm (.035 to .05 inch) being suitable). The utilized axial length and radial protrusion for the locking projection 358 is designed to provide a sufficient locking in position function (despite rod stick due to the static friction/adhesion relationship between the rod and mixing chamber) while avoiding an inefficient use of material.

Figures 16B, 16C and 35 illustrate step wall 368 of locking protrusion 358 extending off from main body 366 with the overall locking protrusion diameter Dp being preferably of 0.64 cm to 2.54 cm .25 to 1.0 inch) with a preferred value of 1.42 cm (.56 of an inch). Diameter Dm is preferably 0.89 cm to 1.91 cm or more (.35 to .75 inch or more) preferably a value of 1.24 cm (.49 of an inch) with the difference (Dp-Dm=R) representing about 5 to 15% of Dp. Also, with a preferred diameter Da for rod passageway 358 of 0.25 cm to 1.0 cm (.1 to .4 inch) or 0.361 cm to 0.762 cm (.15 to .3 inch) with a preferred value of 0.462 cm (.19 inch). The main body portion's radial thickness of its annular ring "RT" is preferably 0.25 cm to 1.27 cm (.1 to .5 inch) with 0.38 cm (.15 inch) being preferred.

Port holes 374, 376 are shown in Figure 16B and 16C and are formed through the radial thickness of main body portion 366 and are shown circumferentially spaced apart and lying on a common cross-section plane (rather than being axially offset which is a less preferred arrangement). The central axis of each port hole 374, 376 is designed to be common with a respective central axis of inlet passage holes 278, 280, in housing 257 and the respective central axis for chemical output ports 279 and 281 feeding the mixing module. The central axis for port holes 374, 376 also are preferably arranged to intersect the central axis of passageway 356 at a preferred angle of 120°.

Also, port holes 374, 376 preferably have a step configuration with an outer large reception cavity 378 and a smaller interior cavity 380. The step configuration is dimensioned to accommodate ports 382, 384 (Fig. 15) which are preferably stainless steel ports designed to produce streams of chemicals that jet out from the ports to impinge at the central axis, based on, for example, a 120° angle orientation to avoid chemical cross-over problems in the mixing chamber cavity. As shown in Figure 16C, diameters Db and Dc are dimensioned in association with the dimensioning of ports 382, 384 with a preference to have the inlet end of ports 382 and 384 of a common diameter and aligned relative to the exit end of housing inlets 340, 342. Ports 382, 384 are shown to have an upstream conical infeed section and a cylindrical outfeed section each representing about 50% of the ports axial length.

Figures 16C illustrates length dimension lines L1 to L4 for mixing chamber 312 with L1 representing the full axial length of mixing chamber 312 or the distance from the outer back edge to the forward most front edge. L2 representing the axial distance from the back end 352 to the peripheral edge 360 of locking protrusion 358 (while taking into consideration the inward slope of the mixing chambers front face). L3 represents the axial length between the rear edge 352 to locking protrusion interior edge 362 of surface 364. L4 represents the distance from the rear edge 352 to the central axis of the closest chemical passageway such as the central axis of smaller interior cavity 380. Preferred value ranges for L1 to L4 are as follows: (1.27 cm to 5.04 cm (.5 to 2 inch) with 2.54 cm (.1 inch) suitable), (1.04 cm to 4.57 cm (.43 to 1.8) with 2.41 cm (.95 inch) suitable), (1.27 cm to 2.54 cm (.5 to 1.0 inch) with 1.88 cm (.74 inch) suitable), and 0.25 cm (.1 to .3 inch) with 0.46 cm (.18 inch suitable), respectively.

Figures 17 and 35 illustrate front end 304 of mixing module housing 302 having a larger diameter recess 386 which steps down to a lesser diameter housing recess 388. The different recess diameters define step up wall 390 formed between the larger and smaller diameter housing recess 386, 388 which is dimensioned to correspond with step down wall ring 368 of locking protrusion 358. The abutting relationship between walls 368 and 390 establishes an axial no movement locking relationship between mixing chamber 312 and housing 302 when the mixing module is in an assembled state, despite the establishment of a stick relationship between the reciprocating rod 264 and mixing chamber 312. Thus, the mixing chamber is not subject to rod stick movement against compressible comparison means, and avoids problems associated with this movement, such as port misalignment.

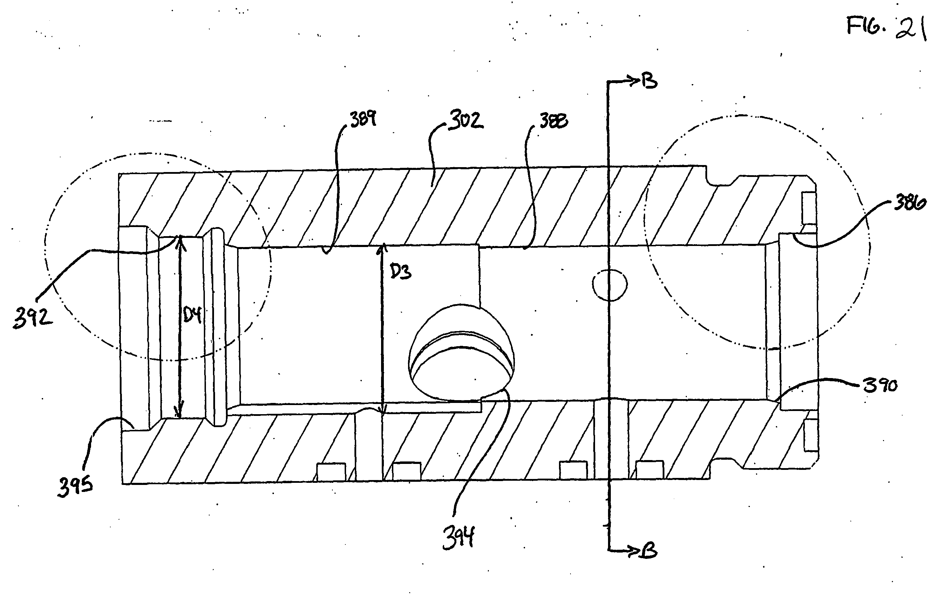

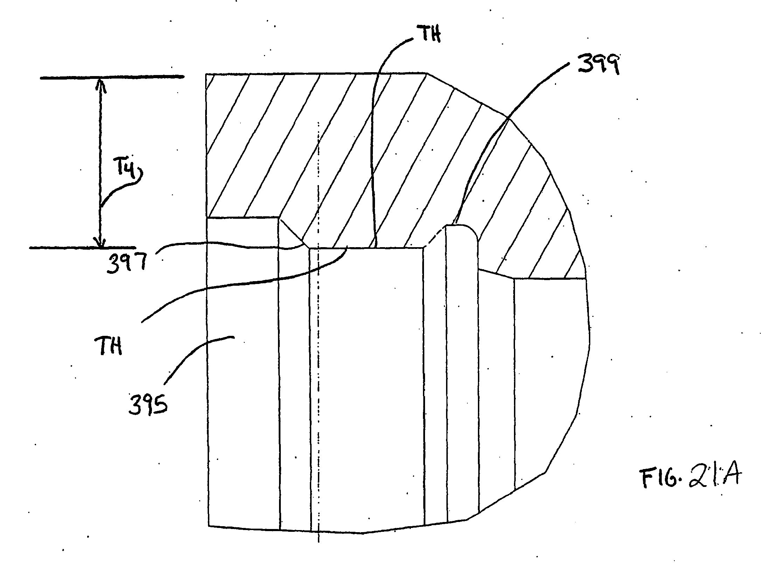

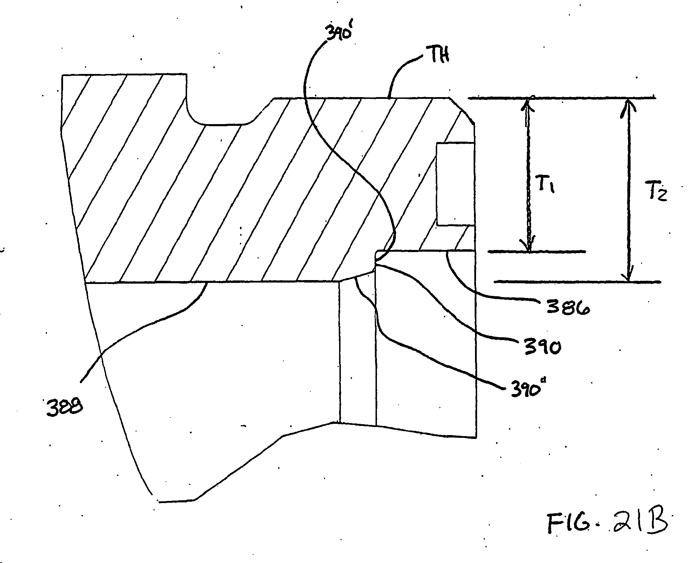

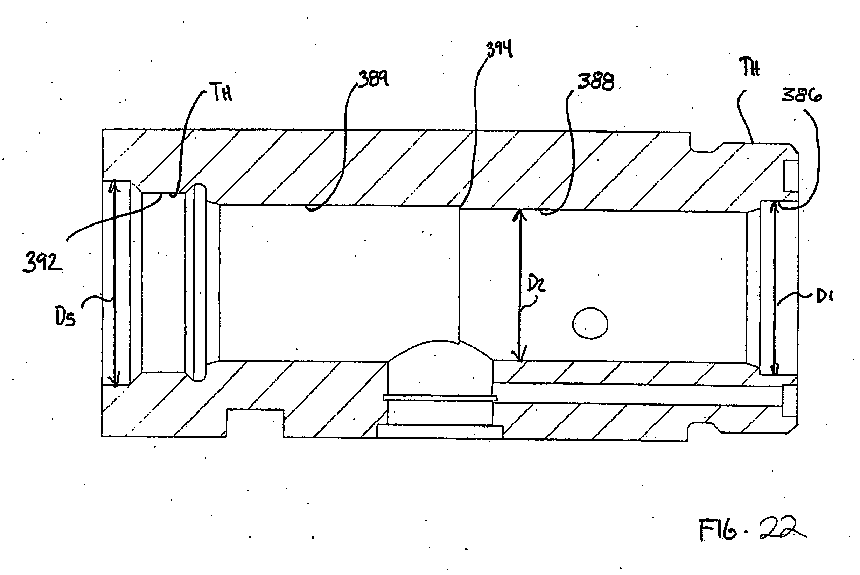

The housing configuration is further illustrated in Figures 21, 21A, 21B, 22, 23 and 24 showing perspective and cross-sectional views of housing 302 alone. These figures illustrate the above noted step up wall 390 formed between larger diameter recess 386 and interior recess 388 which preferably includes a first radially extending (transverse) section 390' and a sloping, chamfered section 390" defining a conical surface bridging the different diameter cylindrical sections 386, 288 which facilitates insertion of the mixing chamber. Section 390' preferably extends radially transverse to the central axis of the mixing chamber or oblique or in stepped fashion thereto (e.g., conically converging in a forward to rearward direction) which ensures the locking relationship between the housing and mining chamber. For example, with reference to Figure 21B housing 302 has a radial thickness T1 defining recess diameter D1 (Fig. 35) at its forward most end (e.g., 0.25 cm to 0.51 cm (0.38 cm) (.10 to .20 inch (.15 inch)) for T1, and 1.27 cm to 1.91 cm (1.42 cm) (.5 to .75 (e.g., .56 inch)) for D1, and with a radial thickness increase in going to T2 (e.g., 0.51 cm to 0.76 cm (.2 to .3) (e.g., 4.72 cm (2.25 inch)) and preferably a corresponding decrease in D2 of 1.0 cm to 1.52 cm (.4 to .6 inch) with 1.24 cm (.49 inch) being preferred). The reduced diameter housing cavity 388 is formed based on the difference in thickness and/or recess depth and defines housing recess diameter D2 which is bridged by step-up wall 390. Rearward of the recess 388 defining housing surface there is provided a slight step up 394 (Figure 22, e.g., a 0.018 cm to 0.025 cm (.007 to .01 inch) increase in going from D2 to D3) which leads to the larger diameter recess 389. This minor step up 394 and the larger diameter recess 389 provides additional clearance space receiving the mixing chamber in direct contact. The Belleville stack 316 is received within enlarged section 389 of the housing providing a degree of radial clearance to allow for compression adjustments in the compression means. Spacer 314 has an outer diameter generally conforming to D2 and axially bridges step up 394 (See Fig. 15).

As seen from Figures 15-17, mixing chamber 312 is preferably received entirely within housing recess 388 while Belleville washer stack 316 is preferably received entirely in larger diameter recess 386. Spacer 314 thus extends to opposite sides of step 394. At the rearward end of housing 302 there is provided back cap main reception recesses 392 of diameter D4 (e.g., 1.27 cm to 1.52 cm or 1.47 cm (.5 to .6 inch or .58 inch) as shown in Figs. 21 and 22) and thickness T4 (e.g., 0.64 cm to 0.76 cm or 0.71 cm (.25 to .3 inch or .28 inch) Fig. 21A) which opens even farther out at the rear most end to back cap flange reception recess 395 defining diameter D5 (1.52 cm to 1.78 cm or 1.68 ((.6 to .7 inch or .66 inch) Fig. 22). Recesses 392 and 395 are designed to receive back cap 310 which is dimensioned to occupy the area of recesses 392 and 395 and to also extend inward into recess 386 into contact with compression means 316. In this regard reference is made to Figure 16 wherein L5 illustrates axial length from the rear end of the housing into the rear end of compression means 316 (e.g., L5 is 0.76 cm to 1.52 cm or 1.14 cm (.3 to .6 inch or .45 inch) which is about 10 to 30% or more preferably 20% of the full axial length L9 (Fig. 15) of mixing module 256). L6 illustrates the axial length from rear end 306 of the housing to the central axis of the solvent access opening 328 which also is preferably generally commensurate with the forward end of the compression means 316 and the rear end of spacer compression 314 (e.g., 2.29 cm to 3.56 cm (.9 to .1.4 inches) or 40 to 60%); L7 represents the contact interface between the front end of spacer sleeve 314 and rear end of the mixing chamber 312 (e.g. 2.79 cm to 3.81 cm (1.1 to 1.5 inches) or 50 to 65%); and L8 (Fig. 15) representing the distance from the rear end 306 of the housing and the central axis of housing chemical inlet 278 (e.g., 3.30 cm to 4.83 cm (1.3 to 1.9 inches) or 55 to 85%).

Reception recess 392 includes means for axial locking in position back cap 310 which means is preferably one that can be removed without the need for first releasing the compression force. In a preferred embodiment a threaded recess is provided having relatively fine threads TH for facilitating axially locking in position back cap 310 at a desired compression inducing setting. As shown in Figure 21A to opposite axial sides of threads TH there is formed recess 395, which defines larger diameter D5 (e.g., 1.70 cm (.67 inch)), provides an annular ridge 397 providing an additional seat with the interiormost end back cap 310 being placed in contact with housing 302 which preferably is preset relative to compression means 316 to provide the desired level of compression in the cold flow material mixing chamber 312.

Historically, packaging foam mixing cartridges have been assembled using clip rings on the back of the compression cap. In order to install the clip ring, the back cap must be forced into the Belleville washer stack, an action that requires about 889.6 N (200 lbs of force) to accomplish. This method of assembly of the prior art mixing cartridges requires the use of machines like arbor presses and some special holding and alignment fixtures to put a mixing cartridge together making the process difficult. Also, assembly of these prior art mixing cartridges cannot be done by hand tools normally found in a tool kit. These prior art designs are difficult to assemble, and even more difficult to disassemble, as the clip rings can be difficult to remove with the heavy spring load on the back cap. In view of this, mixing module 256 of the present invention is designed to be easier to assemble and disassemble.

Also, under the Belleville stack compression forces imposed on prior art mixing chambers and mixing cartridges prior art housing tend to deform at their front face when considering the thinness desirability relative to a purge rod front face passageway travel. This deformation can occur in prior art assemblies even after only moderate usage in the field. That is, the front cover of prior art mixing chambers are often swaged onto the housing and the design is not always strong enough to carry the load. This deformation can cause a number of reliability problems for the mixing cartridge. The present invention helps avoid this prior art tendency for the front cap of the housing to deform, or bulge due to the force imposed by the Belleville washer stack on the mixing chamber front face.

A preferred embodiment of the present invention includes the feature of having non-permanent, releasable fixation means for back cap 310, with a preferred embodiment featuring threads TH (Fig. 21A) provided in back cap reception recess 392 or some other releasable fixation means as in, for example, a key/slot engagement (e.g., helical), although fine threads are preferred for facilitating small step compression inducement and release in the compression means contacted by the back cap. The interior threads of the back cap reception recess 395 are designed to mate with the exterior threads on the back cap 310. The opposite front end 304 of housing 302 also preferably is provided with releasable front end closure means as in front cap assembly 308 releasably secured with the exterior of the front end 304 of housing 302 through, for example, exterior threads TH on front end 304 that are designed for threaded engagement with the internal threads of front cap assembly 308 (a preferred embodiment has the front cap assembly in the form of a multicomponent and/or double walled front cap assembly).

This releasable securement relationship at both the front and back of the mixing chamber allows a mechanic of minimal skills, without special fixture or exotic tools, to assemble and disassemble mixing module 256. The assembly technique under the present invention featuring "releasable securement" (e.g., threaded construction) also has a variety of other advantages. For example, the securement construction is much easier to assemble without the prior art clip ring that holds the back cap in place against the pressure of the Belleville stack. The present invention also provides for easier disassembly in a current foam production setting as the securement construction makes the mixing module easier to rework without sending out to a special service location for a rework.

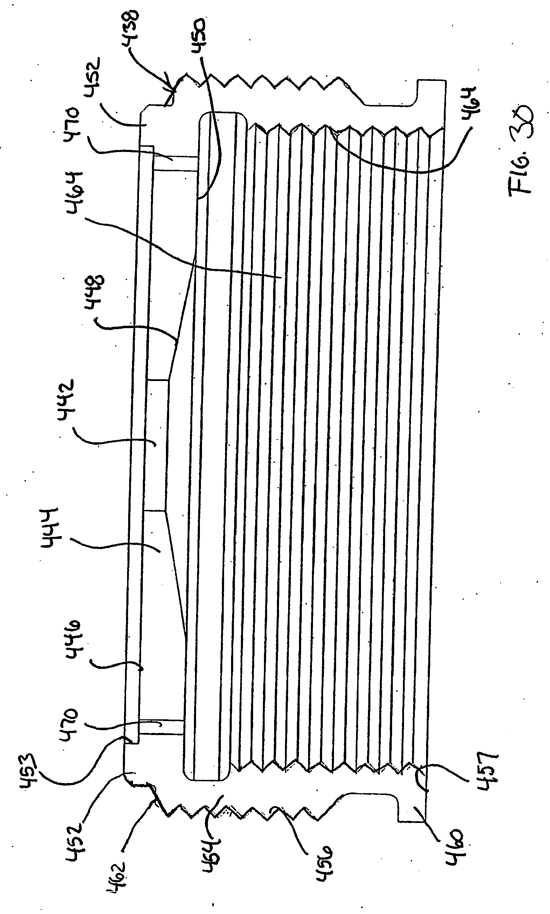

The manner of attachment and construction of the assembly of front cap covering 308 (particularly inner front cap component 438 shown in Fig. 30) on the front end of housing 302 provides for a more solid construction in the front cap. For example, the means for releasable connection allows for the front cap to be more easily designed so that it is better able to avoid distortion under load. The present invention is thus designed to avoid the aforementioned problems associated with swaged prior art front caps, including difficulty in proper installation, strength parameters that are difficult to predict, and a tendency for deformation under high load. This ease of assembly and disassembly of the mixing module design in the production setting also makes for easy assembly and disassembly in the field and at any service location.

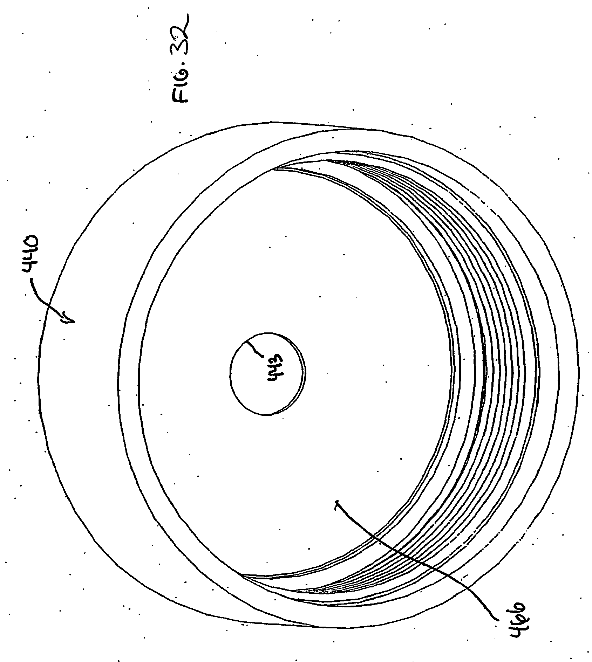

With the arrangement of the present invention, it is easier to install the mixing chamber 256 from the front, instead of from the rear of the mixing module housing 302. The mixing chamber locking means 358 (Fig. 35) in the front end of the mixing chamber 312 and releasable securement face cap assembly 308 provides the advantage of being able to install a mixing chamber from the front of the mixing module housing as compared to the more difficult rear installation in the prior art housing design. For example, the front loading potential makes it much easier to orient the chemical feed ports in the mixing chamber into correct alignment with the through holes in the mixing module housing. Also, to facilitate the assembly and disassembly of the mixing module of the present invention, the outer cap 440 (Fig. 32) of front cap assembly 308 is preferably provided with a circumferential knurled surface for preferred finger contact only tightening into position and release for access.

An additional feature of the mixing module 256 is that it can be assembled in its entirely, and access to the solvent port is still made possible based on the relative positional relationship between, for example, the threaded solvent cap access port 328 and the spacer sleeve's recessed areas (described below in greater detail). This ability to completely assemble mixing module 256 and then introduce the solvent via solvent cap 326 and the coordinated solvent chamber positioning and solvent chamber forming component portions allows, for example, easy solvent filling without the spillage problem and filling level uncertainties of the prior art. It also makes it easy to open the solvent cap for an initial check as to the solvent level (although less preferable the back cap can be removed as well for a solvent check after the mixing module has been fully assembled as it is much easier to remove and reposition compared to prior art designs). A review of multiple mixing modules filled with solvent and sealed, and then set on the shelf for a few days, prior to being opened, indicated there is often significantly less solvent than originally thought to exist. For example, a solvent chamber may appear to be full after the initial filling operation, but a significant quantity of air can be trapped in the solvent chamber as the viscosity of commonly used solvents can be quite high at room temperature. The trapped air precludes a full fill under the prior art systems. The present invention further addresses this under fill problem through heating of the solvent to around 54.4°C (130° F) before filling. This solvent heating during, for example, initial supplying of the module with solvent represents a preferred step as it lowers the viscosity significantly and works well with the improved visibility and access provided under the present invention's design. During system operation, a similar above 37.8°C (100°F) and more preferably above 48.9°C (120°F) temperature is maintained under the present inventions heated solvent re-supply flushing arrangement which preferably includes passing solvent by manifold and/or dispenser housing heaters placed in line with the solvent flow.

Thus, under the present invention with the large diameter (e.g., .25 to .75 inch) solvent access cap 326 strategically positioned relative to the solvent chamber to provide solvent chamber access means, the invention provides for complete filling of the chamber in a fashion that is easy and achievable without the introduction of air bubbles or overflows or other problems associated with filling prior art solvent chambers. Because the threaded solvent access hole allows for easy filling, there is also less chance that air pockets will be trapped when the chamber is sealed. Since mixing module life is proportional to solvent quantity, eliminating any trapped air in the solvent chamber is beneficial to prolonged life. Also, an easy refill on the solvent chamber without special tools is possible with the threaded solvent filler cap being readily removed with a small screwdriver any time there is a desire to check conditions on the inside of the mixing module. The solvent chamber therefore can easily be refilled with solvent, and the cap re-installed.

As shown in Figure 16, O-Ring seal 327 is provided on the solvent cap to help in preventing solvent from leaking as in during shipping. Less leakage means longer life, and the sealed cap can be opened and resealed multiple times with minimal degradation in seal quality. With the solvent access means of the present invention, the mixing module can be initially built and assembled at a manufacturing or assembly site without solvent if long-term storage is required. There are applications that require long-term storage of system mixing modules in warehouses and/or the placement of mixing modules in harsh climates. In these situations, mixing module solvent, and any elastomeric seals in contact with the solvent, can degrade over time if pre-inserted at initial assembly. The present invention provides for either no solvent insertion at the time of assembly or ready access to replace the old solvent and seals after an extended period. This storage feature can be an advantage, for example, in some military applications, as well as in other environments and/or storage needs.

Figures 16 and 17 illustrate spacer sleeve 114 having solid cylindrical forward section CY, which is integral with its forward compression contact face, a valve rod reception opening and, at its rear end, a spacer separated by one or more spacer slots SL. These slots are formed between sleeve extensions SP as can be seen by the sequence of extensions and adjacent slotted openings in the sleeve which slots are preferably spaced continuously around the sleeve's circumference. The slots are preferably aligned with solvent housing access opening(s), and in a preferred embodiment, there are multiple spacer extensions SP (e.g., 3-10 with 6 preferred), which provide ready solvent flow access from the capped solvent opening into solvent sleeve reception cavity 322.

Prior to describing the additional upstream components associated with feeding chemical to the dispenser outlet, a discussion of solvent supply system 400 and its in line relationship with the above described mixing module 256 is provided. As described in the background of the present application, the outlet dispenser region or tip area of the mixing module 256 is an area highly prone to hardened foam build up. If not addressed, it can cause problems such as misdirected output shots or spraying into areas external to the intended target. This in turn can further increase build up problems as the misdirected output hardens on other areas of the solvent dispenser system.

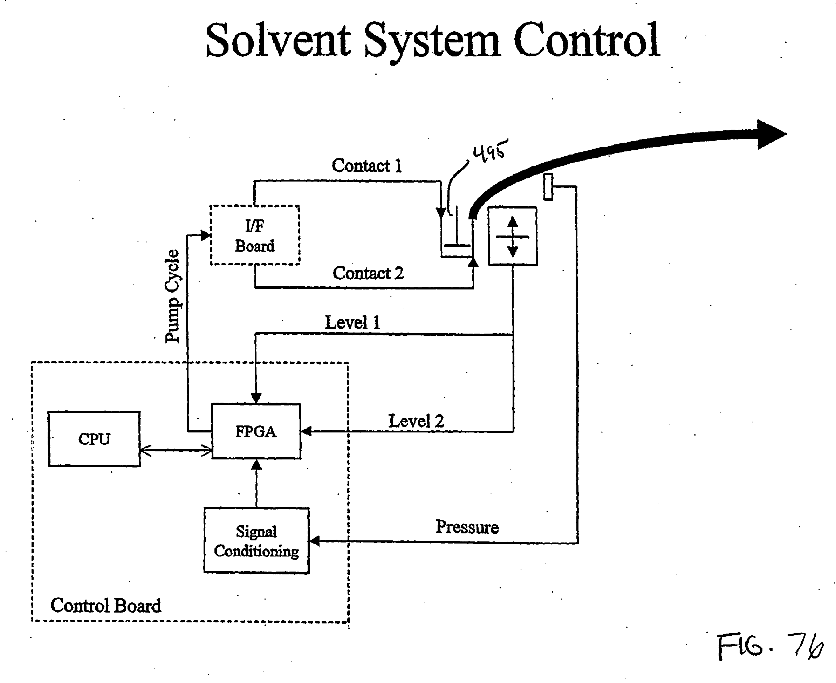

With reference to Figure 3 and Figures 36-40 there is illustrated solvent supply system 400 comprising supply tank 402 having solvent conduit 404 providing flow communication between solvent tank 402 and solvent valve control unit 406, which is in communication with the control processor. Downstream from valve control unit 406, the solvent line is in flow communication with main support housing 194 having a solvent conduit which extends through main housing 194 and opens out into the module support housing 532 (Fig. 11B). From there the solvent passes via port 275 (Fig. 11B) into solvent port 282 (Fig. 12) in mixing module 256 when mixing module 256 is properly positioned in dispenser system 192. Solvent is preferably supplied based on a preprogrammed sequence such as one which provides heavy flow volumes at completion of a use cycle or periodically, over periods of non-use (e.g., overnight prior to a daytime shift) as well as periodically during use (e.g., after a predetermined number of shots (e.g., after each shot to every 5 shots) and/or based on a time cycle independent of usage. Preferably, the solvent flow control activates valve mechanism 408 based on open or shut off signals, with an opening signal being coordinated with solvent pump operation. The controller sub-system is shown in Figure 76.

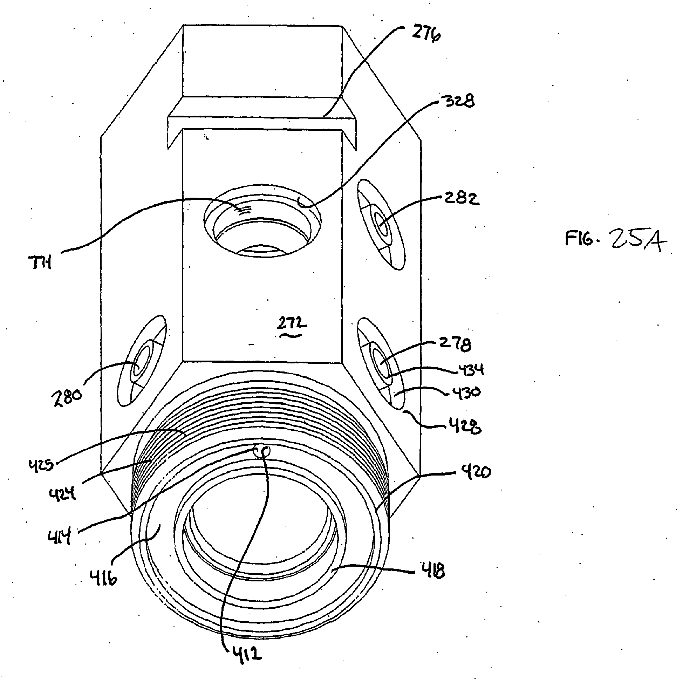

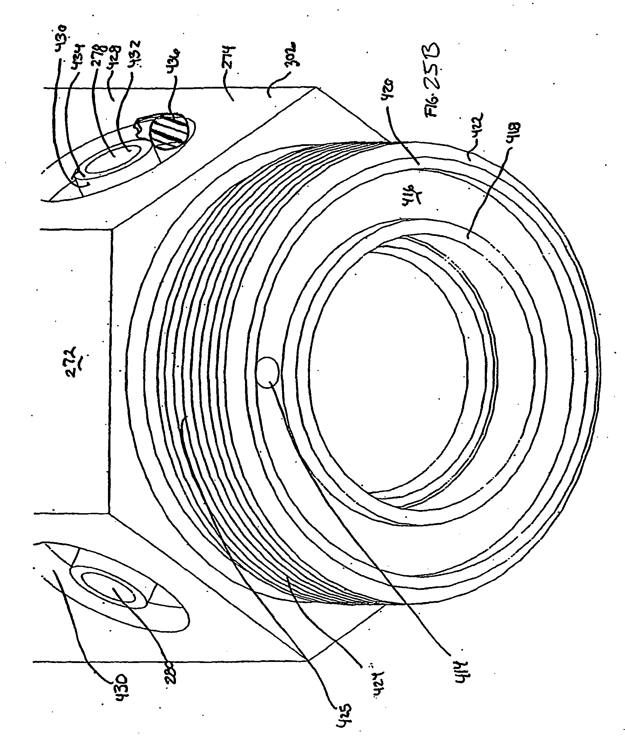

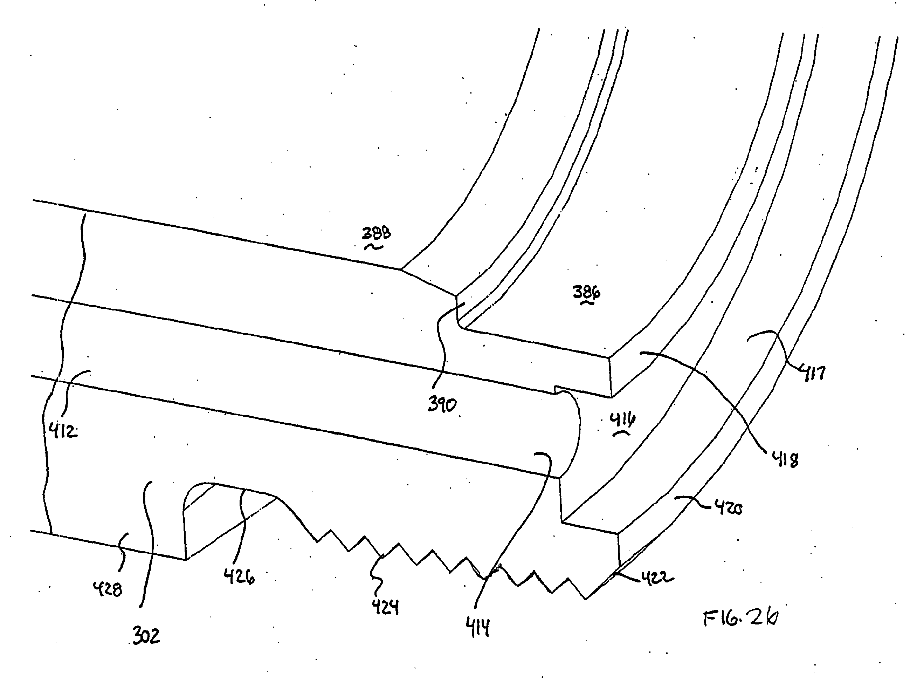

As seen from a comparison of Figures 12, 16 and 17, housing solvent inlet port 282 (Fig. 17) opens into internal solvent chamber 322 as does the separate access solvent opening 328 blocked off by solvent cap 326. Figure 17 illustrates solvent port 282 having a central axis that is axially positioned on the housing such that its central axis extends through a central region formed between the compression cap 310 and spacer 314. Figure 16 illustrates solvent passage 412 which is in solvent flow communication with solvent chamber 322 and is preferably formed in the annular thickness of housing 302 such as an annular port opening out into chamber 322 at its rear end and extending axially toward the front end of housing 302 through a peripheral central region of one of the illustrated housing walls. Figures 25A, 25B and 26 show solvent passageway with front outlet opening 414. One axial passageway of, for example, 0.1 cm to 0.2 cm (.04 to .08 of an inch) (e.g., 0.15 cm (.06 in) diameter) is preferred, although alternate embodiments featuring multiple, circumferentially spaced axial solvent passageway (e.g., of the same size or smaller solvent ports diameters can be provided to achieve a desired flushing solvent flow rate through the front of the housing). Outlet opening 414 is formed in recessed front housing surface 416 extending about the circumference of the front end of housing 302. Recessed front housing surface 416, in conjunction with the interior surfaces of circumferential (or peripheral if other than circular cross-section) radially internal flange 418 and radially external flange 420, is formed at the forward end of housing 302. External flange 420 includes chamfered outer wall 422 which defines the outer surface of front flange projection 420. Exterior housing wall 424 is preferably threaded on its exterior with threads 425 and extends into annular recess 426 (Fig. 26) positioned axially internally of main body 428 with the latter preferably defining a portion of the above described hexagonal wall configuration for housing 302.

Figure 25A and 25B also provide added detail as to chemical inlet ports 278, 280 which are shown as including annular seal recess 430 concentrically extending about the applicable chemical passageway 278, 280 which are defined by the illustrated cylindrical projections 434 inward of the remaining surrounding body portion of hexagonal housing main body 428. Figure 25B further illustrates seal 436 preferably in the form of an O-ring with seal 436 being dimensioned for compression and/or tensioning (stretched about the inner passageway projection 434) state retention within seal recess 430 (e.g., seal stays in place during handling and shipping and is thus ensured to be in proper position upon mixing module mounting). Thus, for chemical ports as well as the solvent ports in housing 302, sealing means can be provided on the mixing module itself which is beneficial in assuring proper, centered seal positioning despite slight tolerance deviations in the mounting of the mixing module in the dispenser (e.g., avoiding partial obstruction of a housing inlet port).

Figure 25A also shows the relative positioning of solvent housing inlet port 282, solvent access opening 328 with threads TH, and outlet 414 of solvent passageway 412. Which opens out as surface 416 formed between flanges 418, 420, and extends axially along a line that bisects the solvent access opening 328 and extends along common side wall 272, and preferably parallel to the purge rod passageway.

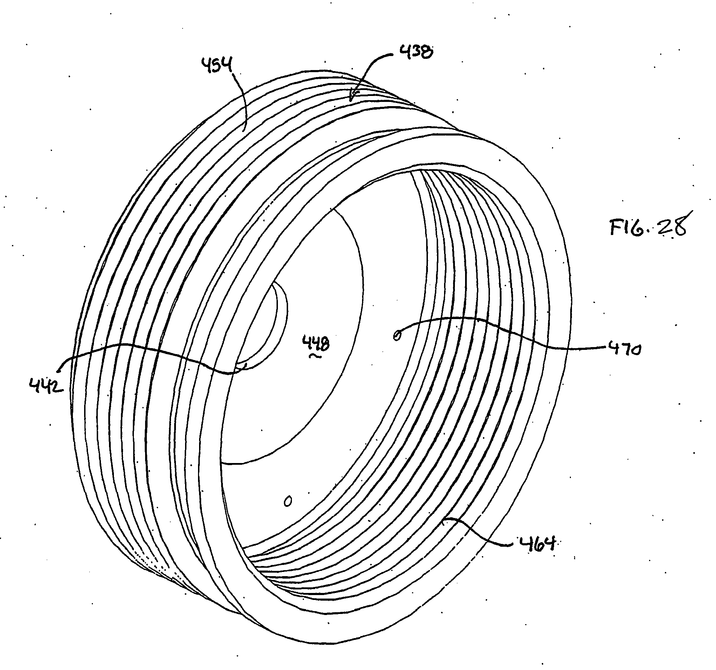

Figures 16A and Figures 27-30, and 35 provide additional detail as to the arrangement of front cap assembly 308 which comprises inner front cap 438 and outer front cap 440. Front inner cap 438 performs the function of providing a rigid support for the Teflon mixing chamber 312 subject to the compressive load of compressions means 316. This function being similar to that of the front cap described in co-pending U.S. Application No. 10/623,716 filed on July 22, 2003 and entitled "Dispenser Mixing Module and Method of Assembling and Using Same," which is incorporated by reference. Front cap rod aperture 442 also provides an exit for the reacted foam, with slight clearance for the valving rod 264. As seen from Figures 28 and 30, cap 438 has forward face wall 444 having a planer exterior surface 446 and a sloped inner surface 448 with a planer radial outer inner surface 450. Annular projection 452 is shown extending forward and peripherally about forward face wall 444. Figure 30 shows front inner cap 438 having sidewall 454 having exterior threads 456 in a relatively upper region of front inner cap 438 that originate at the bottom end of upper chamfer wall 462, with wall 462 extending obliquely out from the base of annular projection 452. On the inner side of annular projection 452 there is located step down annular edge 453 that extends down to planar exterior recessed surface 446 of inner front cap 438. Sidewall 454 also has interior threads 464 on its inner side and at a level that extends at a height level intermediate the range of outer threads 456 and then down below to the free rim 457 (which also preferably is chamfered on an interior edge).

Interior threads 464 are designed for threaded engagement with external threads 425 provided on front projection wall 424 of housing 302 which can involve alternate securement means as described above for the rear cap, but the threaded attachment is preferable to handle the forces involved. The space can also be formed in other ways relative to facing surface portions of the forward and more interior front cap components as in a series of radial channels between opposing outward/interior front cap components. The illustrated double wall with each cap component releasably supported by the front end of the main housing body is preferred as it functions well as providing a full circumferential solvent wetting of the rod and is easily formed simply by attachment of the preferred releasable outward and interior front cap components. Upon full securement of front inner cap 438 onto the housings front projection wall 424 there is achieved a releasable securement provided by the threaded engagement of the front inner cap's threads 464 to the housing's externally threaded front end. In addition, the threaded securement of threaded surfaces 464 and 425 places the planar radial outer surface 450 of front inner cap 438 into abutment with the forward most surface of annular projection 452 of the Teflon mixing chamber 312. As seen from Figure 35, this abutting relationship forms a double wall, solvent accumulation disk space 472 between the interior surface 466 of outer front cap 440 and recessed surface 446. Threaded exterior wall 456 of front inner cap 438 provides a threaded attachment location for the outer front cap 440 discussed in greater detail below.

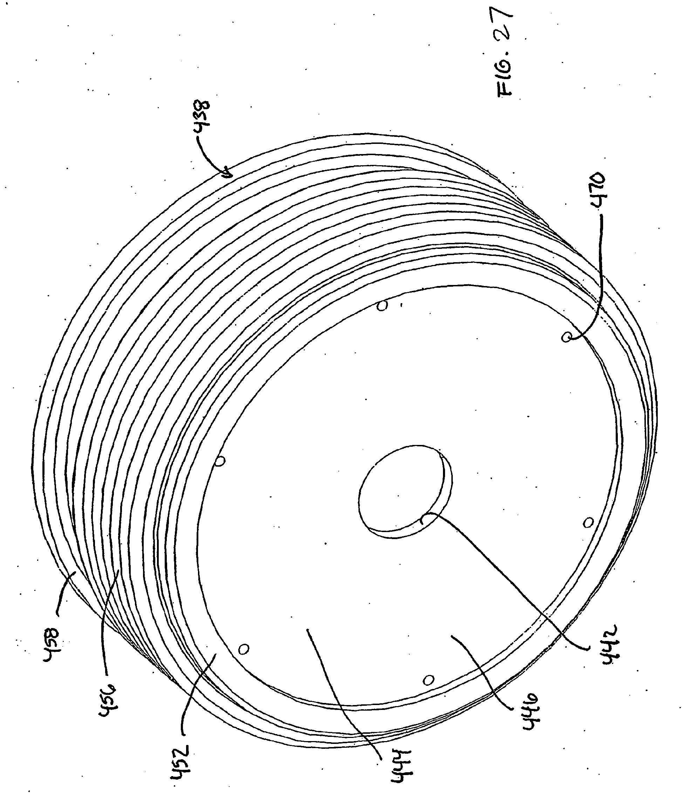

Figures 27-30 further show a plurality (e.g., 3 to 10 with 6 shown) solvent flow holes 470 that pass through the forward face wall 444 (e.g., are drilled through the face of the inner cap) to allow solvent flow from the ring groove on the face of the housing 302 to the thin disk space 472 that is created between the outer face 446 of the inner cap 438 and the inner face 466 of the outer cap 440. In a preferred embodiment, there are six solvent cap holes and the preferred hole diameter is .015 to .03 with .020 being preferred. The axial clearance length between the double wall solvent pooling area of the front cap assembly is preferably about .01 to .05 in with .02 in being suitable.

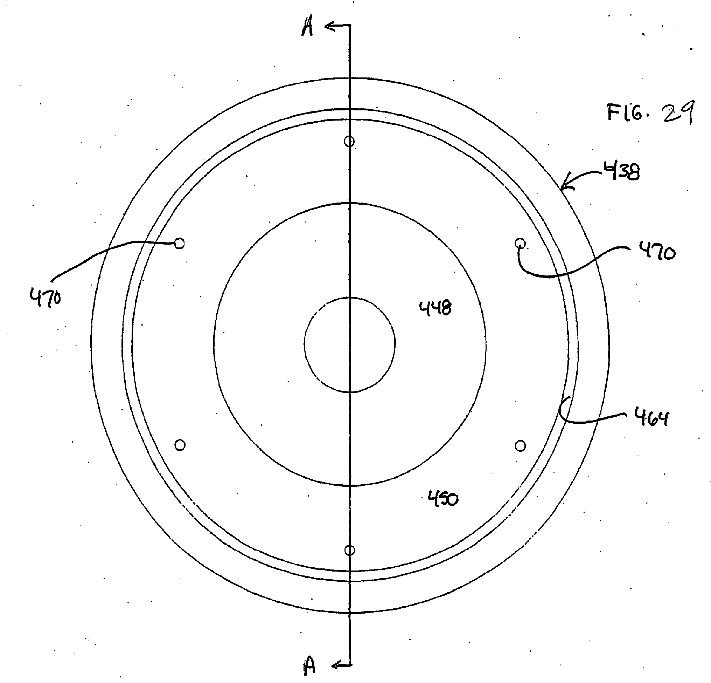

In addition, solvent holes 470 are preferably arranged in the radial external portion of forward face wall (e.g., the radial outer quarter region) and just inward (e.g., .02 to .06 of an inch) of the interior annular wall surface 453. Thus, as shown in Figures 29 and 35 solvent face holes 470 are circumferentially equally spaced about front wall 444 (e.g., 6 at 60° spacing) and radially positioned to be in fluid communication with annular solvent recess 417 formed by surface 416 (Figs. 26 and 35), flanges 418, 420 and covering wall 468 of outer front cap 440. As further shown in Figure 35, the axially extending solvent holes 470 are preferably arranged so as to have a radially exterior surface aligned with the interior wall surface of outer flange 420.

Inner front cap 438 is preferably made from a high strength material such as steel (e.g., 17-4 PH steel that is hardened to be strong enough to withstand the compression means pressure on mixing chamber 312 without significant deformation, and to minimize material thickness of the front face at the center hole 442 where the inside diameter of the center hole comes in close proximity with the outside diameter of the valving rod 264). That is, the thickness of the central circular edge 442 of the inner front cap in preferably made as thin as possible (e.g., .02 inch) as there is lacking the lower friction benefit of Teflon material there. Thus the interior surface 448 of the front inner cap slopes outward while the outer end surface 446 stays planar. As seen from Figure 35 the outer front cap 440 can be made relatively thin (e.g., .03 to .06 inch) as it is not subjected to the forces compression means 316 as is inner front cap 438.

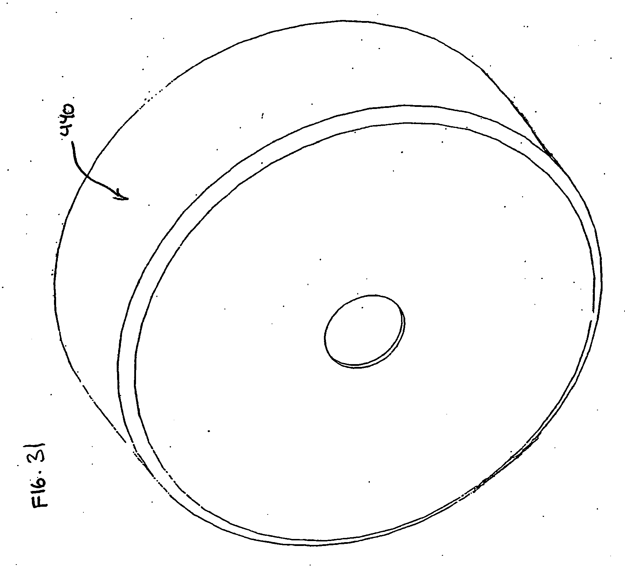

Figures 31-34 illustrate in greater detail outer front cap 440 which attaches via threads 476 to the front inner cap 438. Outer front cap 440 is designed to be readily removable from inner cap 438 for cleaning (although the below described cleaning member (e.g., steel bristle brush) and associated reciprocation is effective in maintaining the cap clean). That is, the entire outer cap 440 can easily be removed, cleaned, or replaced without affecting the integrity of the mixing module. The inner cap on the other hand, since its removal can disrupt and possibly damage the Teflon mixing chamber which has its front face conforming to surfaces 448 and 450 formed therein, is typically not removed for cleaning but is releasable for other purposes such as servicing (e.g., mixing chamber replacement). It is therefore more difficult to reattach the inner cap after removal because the Belleville washers relative to outer cap 440 would have to be compressed to get it back on, although, as explained above in the discussion of the ease of assembly as compared to the prior art, the releasable back end cap can be removed to allow the front inner cap to be threaded on, followed by back cap threading and compression of a positioned mixing chamber or vice versa. Outer front cap 440 is, preferably made from stainless steel to withstand abrasion from the tip cleaning brush bristles (described below). Also, the exterior surface 478 of outer cap 440 is preferably knurled to facilitate hand or toolless removable and insertion onto front inner cap 438.

The cross-sectional view of the front end of mixing module 256 in Figure 35 shows the solvent path front the ring groove 417 on the front of the housing 302, through the small drilled holes 470 in the front inner cap 438, through the thin disk of open space 472 formed between the inner cap 438 and outer cap 440, and finally out the small gap formed between the radiuses tip 474 ofvalving rod 264 and the center hole 442 in the outer cap 440. That is a small gap is formed between the tip of the valving rod and the outer cap that allows solvent to exit. Also, the central aperture 445 in outer cap 440 is preferably slightly larger (e.g., 0.013 cm to 0.025 cm (.005 to .010 inch)) than aperture 442 to provide for solvent passages in the opening between the outer surface of the rod and the surface forming aperture 442. Accordingly, the solvent outlet onto the rod is in a highly effective location as it maintains a fresh solvent supply on the tip location as well as the area immediately adjacent (common boundary wall) the non-Teflon inner cap portion.

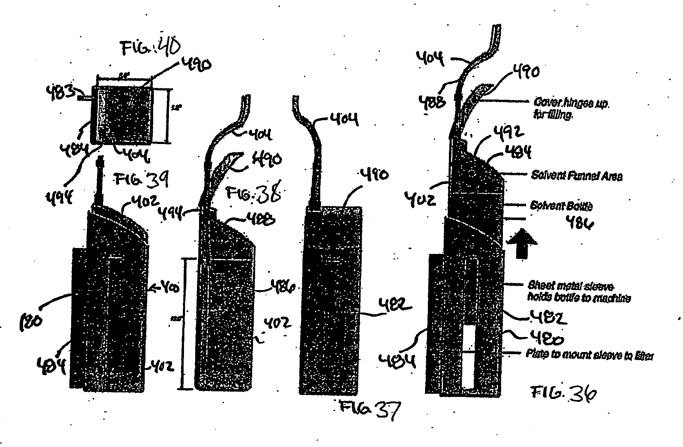

Figures 36 to 40 illustrate a preferred solvent tank supply system 400 which includes tank holder 480 which is shown as a cup-shaped with an open top, base and four side walls at least one and preferably all three exposed side walls being provided with view transparent or translucent slot 482 to allow for direct solvent level viewing. Tank holder 480 also preferably comprises mounting plate 484 formed on the back tank holder wall and having mounting means (e.g., a bolt fastener) for mounting tank holder 480 to lifter 40 (Figure 5) such that the tank holder and solvent tank 402 rise together thus minimizing the length of solvent tubing involved, although the present invention also includes an embodiment where the solvent tank is retained stationary while the lifter rises with extra solvent conduit length provided to accommodate, for example, a two foot rise.

Figure 36 illustrates the bottle shaped tank 484 partially removed from holder 480 while Figure 38 shows tank 402 completely removed from holder 480 with float 486 and sensor line 488 extending down to monitor the solvent level in tank 484. Sensor line extends together with solvent conduct 404 to the control unit (solvent control system illustrated in Fig. 76). A two position level detector (e.g., a float and reed type) is provided as tank level sensing means in the illustrated embodiment (e.g., a warning provided at first level and a shut down at a sensed reaching of the second level) with the solvent level detactor being in communication with the control figure system of the present invention as illustrated in Figures 71 and 76. Tank 402 preferably has a hinged upper lid 490 covering an upper funnel 492 area of bottle and shown closed in Figure 37 and open in Figure 36 and 38. Bottle 402 is preferably vertically elongated (e.g., a height of 38.1 cm to 63.5 cm (15 to 25 inches)) with a width generally conforming to the width of lifter 40 (e.g., about 10.16 cm to 20.32 cm (4 to 8 inches)) so as to provide a small base footprint and to minimize space usage. Tank 402 is preferably a 7.576 to 15.14 (2 to 4 gallon) containers with 11.36 l ( 3 gallons) being well suited for purposes of the present invention. A fill line is provided at a specific volume to facilitate the monitoring and resupply of solvent usage by the control system shown in Fig. 76. Figure 38 also illustrates solvent conduit 404 extending down close to the bottom of bottle 402 and fixed in position with an upper clamp 494.

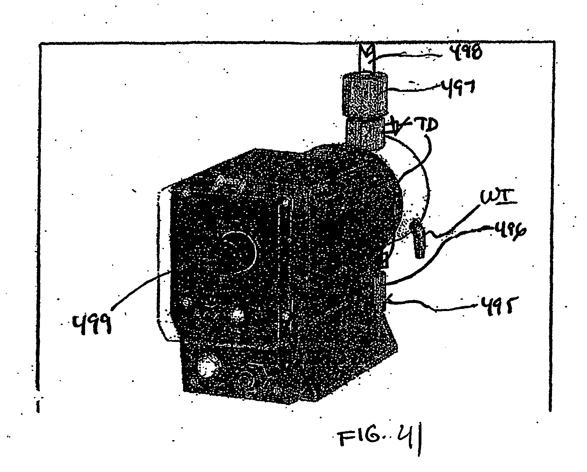

Figure 41 illustrates a preferred solvent pump 495 which is mounted at any convenient location such as in the exit port regions of the solvent bottle. Pump 495 has an inlet port 496 which is connected to the outlet end of solvent conduit 404. Pump 495 includes outlet port 497 to which is connected a downstream solvent conduit 498 feeding to the inlet valve 406 feeding manifold 205. A preferred embodiment of solvent metering pump is a solenoid driven diaphragm metering pump such as a Teflon coated diaphragm driven by a solenoid powered by electronic wiring WI and capable of generating over 0.97 MPa (140 psi.). Pump 495 preferably also includes adjustment means 499 for adjusting the volumetric output per stroke of the diaphragm (e.g., a volume shot of solvent per stroke). A suitable pump source of manufacture is a ProMinent® Concept b pump manufactured by ProMinent Fluid Controls, Inc. of Pittsburgh, Pennsylvania, USA.

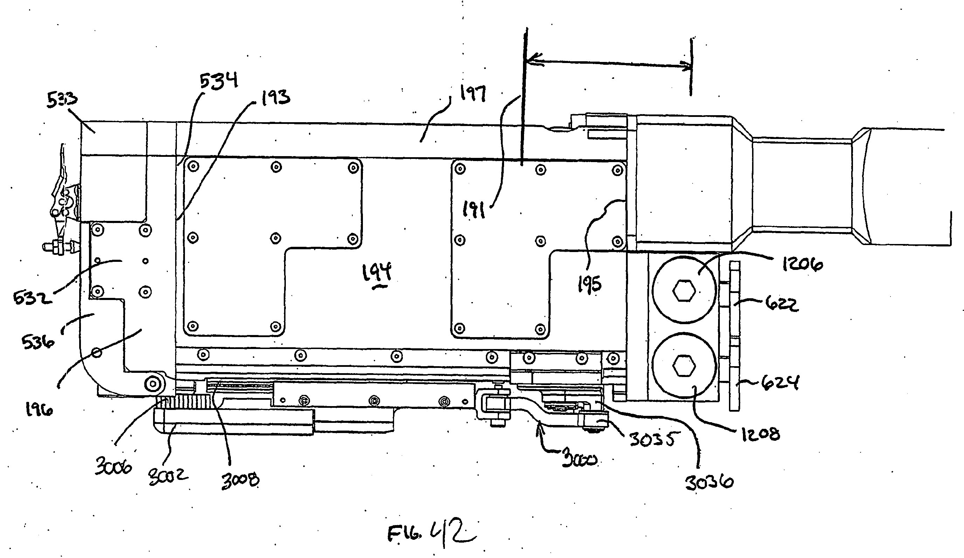

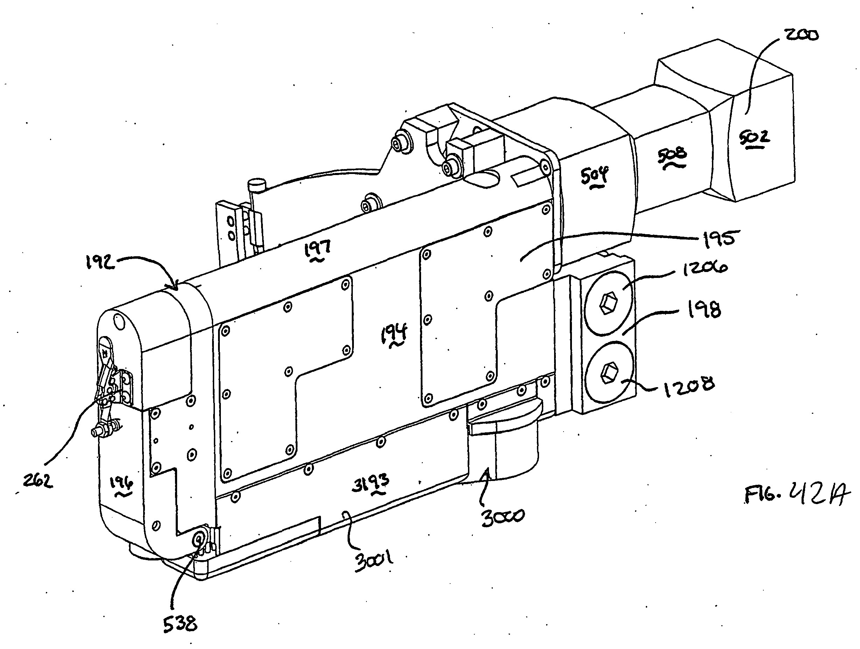

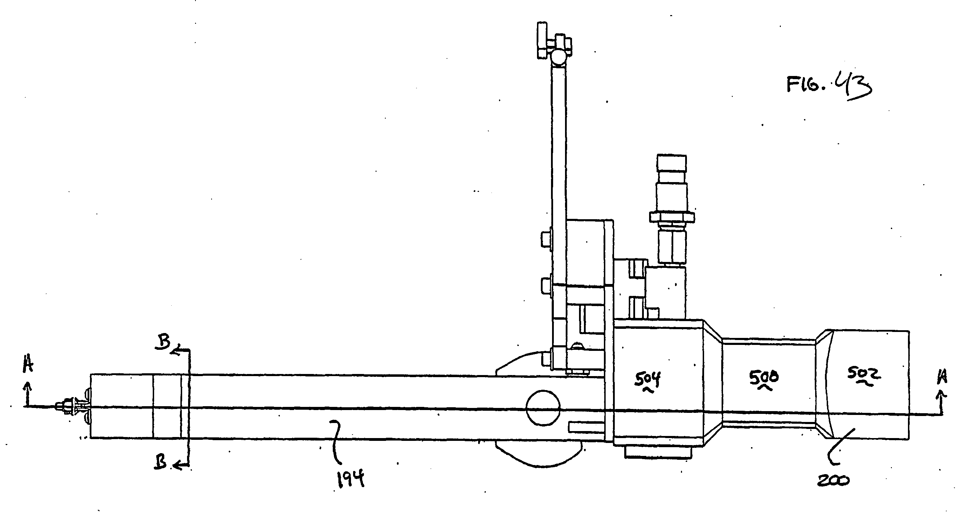

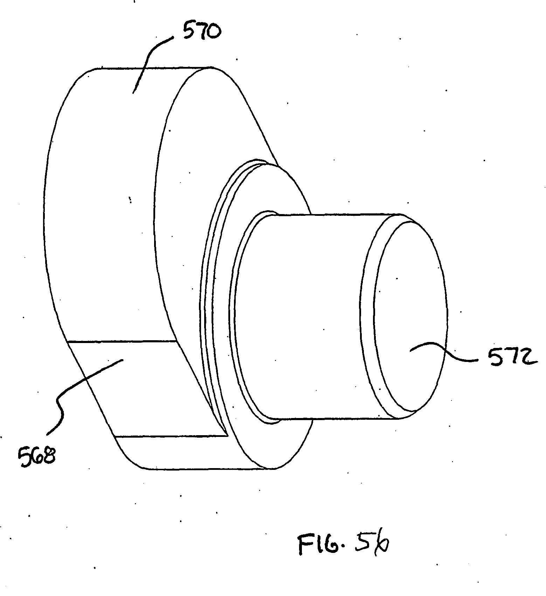

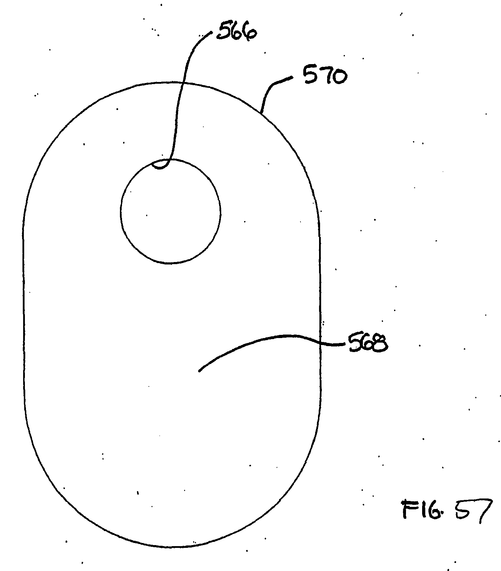

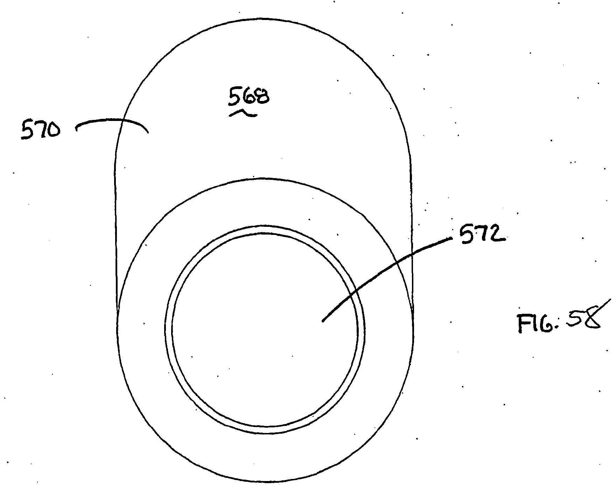

As a means for reciprocating rod 264 and thus controlling the on-off flow of mixed chemicals from the mixing module, reference is now made to the mixing module drive mechanism 500 of a preferred embodiment of the present invention. In this regard, reference is made to, for example, Figures 42 to 63 for an illustration of a preferred embodiment of the means for reciprocating purge/valve rod 264 extending in mixing module 256.

Figure 42A provides a perspective view of dispenser system 192 (similar to Figure 9 but at a different perspective angle). Dispenser system 192 is shown in these figures to include dispenser housing 194 with main housing 195 section, dispenser end section 196 and chemical inlet section 198, with at least the main housing and dispenser end sections each having an upper convex or curved upper surface 197 corresponding in configuration with each other so as to provide a smooth, non-interrupted or essentially seamless transitions between the two. The preferably parallel side walls of the main housing 194 and dispenser end section 196 of dispenser apparatus 192 also fall along a common smooth plane and are flush such that corresponding side walls of each provide an uninterrupted or essentially seamless transition from one to the next (the access plates shown being mounted so as to be flush with the surrounding dispenser housing side walls with, for example, countersunk screws). Dispenser apparatus thus provides smooth, continuous contact surfaces on the top and sides of the portion of dispenser apparatus 192 forward of line 191 representing generally the back edge location of the film being fed past dispenser apparatus 192.

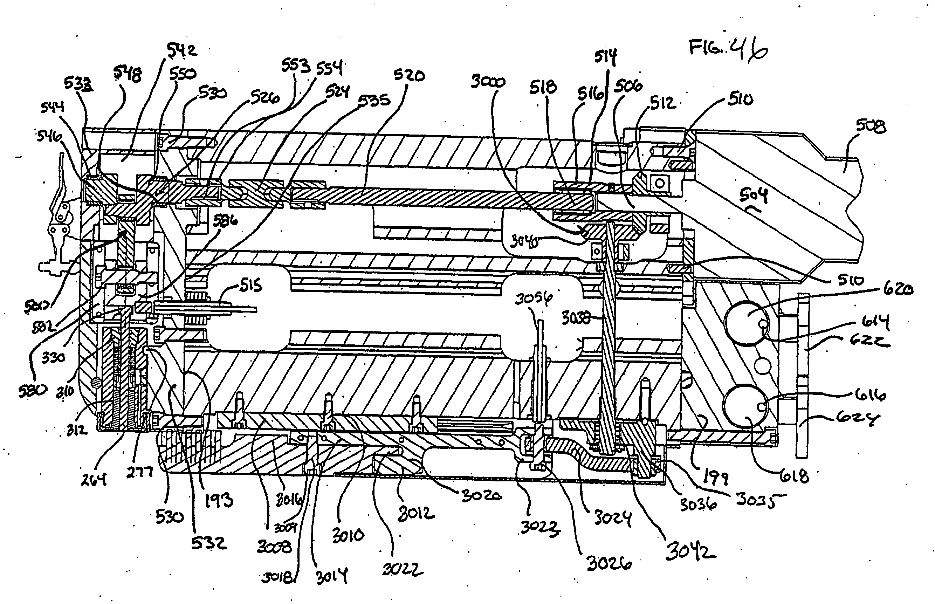

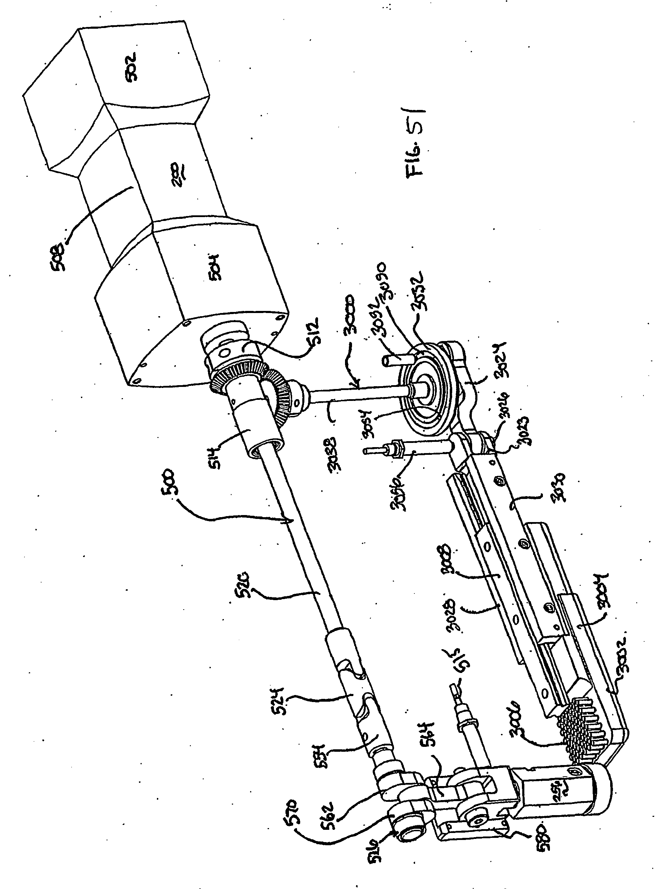

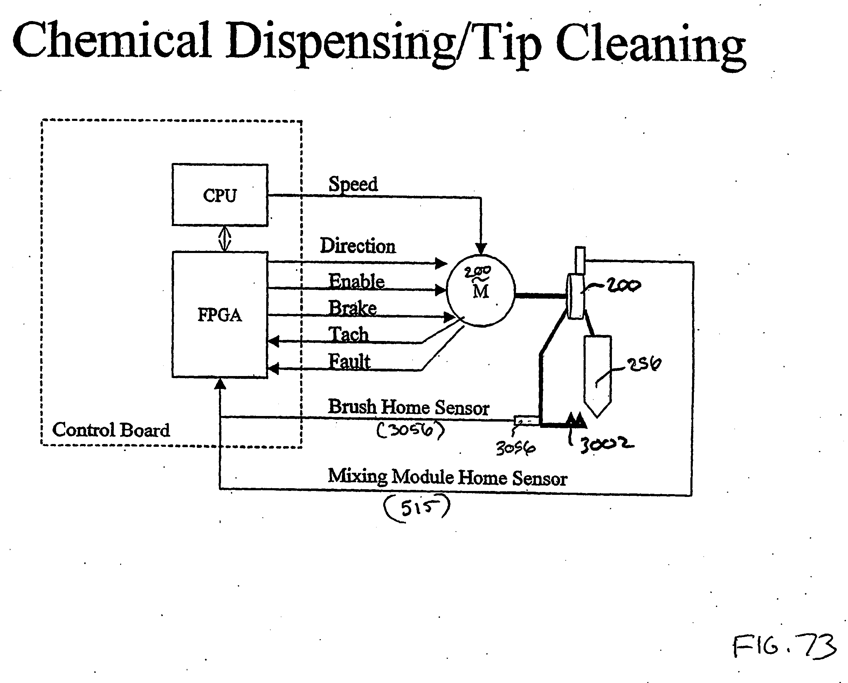

With reference particularly to figures 46 and 51 there is illustrated dispenser drive mechanism 500 which is used to reciprocate rod 264 within mixing module 256 and is housed in dispenser system 192 and, at least, for the most part, is confined within the smoothly contoured housing of dispenser system 192. Dispenser drive mechanism 500 includes dispenser drive motor system 200 ("motor" for short which entails either a motor by itself or more preferably a motor system having a motor, an encoder means and/or gear reduction means). Motor 200 (the system "driver") preferably comprises a brushless DC motor 508 with an integral controller 502 mounted to the back section of the motor and encased within the motor housing, and gear reduction assembly 504. Motor controller 502 provides encoder feedback (e.g., a Hall effect or optically based encoder system) to the controller such as one provided as a component of main system control board which is used to determine speed and position of the various drive components in the drive mechanism 500. Figures 71 and 73 illustrate the control system for operating, monitoring and interfacing the data concerning the rod drive mechanism. The motor controller input from the main system control board preferably includes a 0 to 5 volt speed signal from the main system controller, a brake signal, a direction signal and an enable signal. Motor 200 further preferably includes a gear reduction front section 504 out from which motor output drive shaft 506 extends (Figure 46). The motor drive source is located in the central section 508.

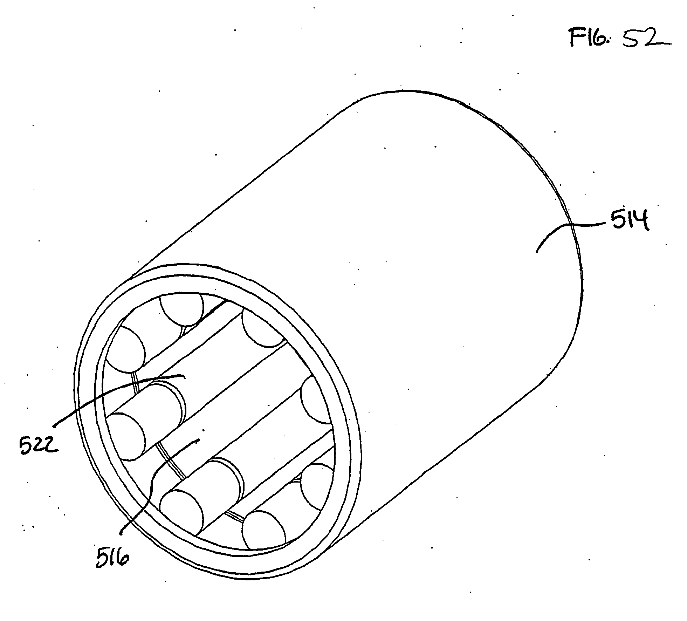

As seen from Figure 46, front section 504 of motor 200 is mounted with fasteners 510 (e.g., pins and bolts) to the rear end dispenser housing 194. As shown by Figures 46 and 51, output shaft 506 has fixed thereon bevel gear 512 and one-way clutch 514. One way clutch 514 (Figure 52) is fixedly attached to drive shaft 506 and has clutch reception section 516 receiving first end 518 of main drive shaft 520. Clutch reception section 516 includes means for allowing drive transmission during one direction of rotation (e.g., clockwise) such that rod 264 is reciprocated in mixing module 256, while one way clutch 514 freewheels when drive shaft 506 rotates in an opposite direction (e.g., counter clockwise) such that bevel gear 512 can drive the below described tip brush cleaning system rather then the reciprocating rod. This provides an efficient means of assuring the timing of any dispenser tip brushing and dispenser output avoiding an extension of this cleaning brush described below at a time when chemical is being output. Figure 52 further illustrates the interior rollers/cam lock up mechanisms 522 of one way clutch 514 which provide for device lock up to transmit torque when rotating in a first direction with near zero backlash. It is noted that clutch 514 is included in a preferred embodiment of the invention wherein motor 200 is dual functioning and reversible in direction based on the control system's instructions, (e.g., reciprocation of valving rod and reciprocation of a cleaning brush or some other means for clearing off any material that accumulates at the end of the dispenser). A single function embodiment wherein motor 200 is used for opening and closing the mixing module only with or without another driver for the cleaning brush is also featured, however, under the present invention (e.g., either without a tip cleaning function or a tip cleaning system which derives power from an alternate source).

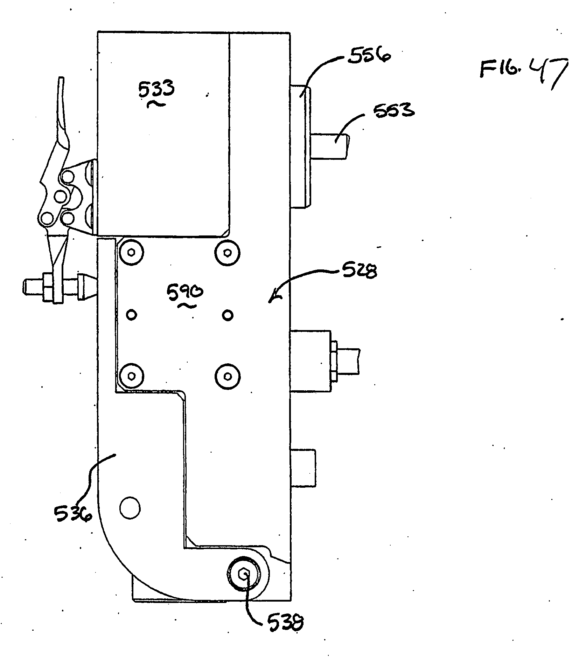

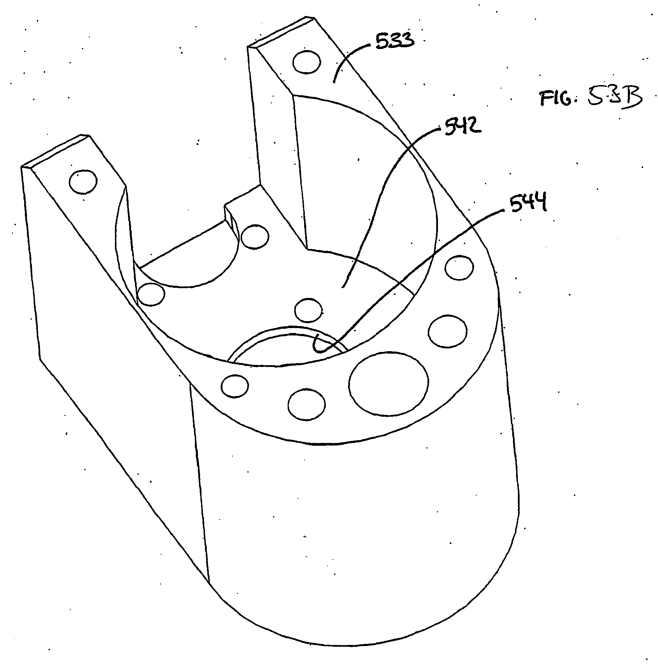

In a preferred embodiment the second end of main drive shaft 520 is connected to flexible coupling 524, although other arrangements, as in a direct force application without flexible coupling 524, is also featured under the present invention. Flexible coupling 524 is in driving engagement with dispenser crank assembly 526 (Figure 51). Dispenser crank assembly 526 is contained in dispenser component housing (see Figures 42 and 53A). Dispenser component housing 528 is a self contained unit that is connected to the front end of main housing portion 195 as previously discussed and forms forward dispenser end section 196. The connection is achieved with suitable fasteners such as fasteners 530 shown in Figure 46 (three shown in cross -section). Dispenser component housing 528 comprises main crank (and mixing module) support housing component 532 (see Figure 53A) and upper dispenser housing cap 533 (Fig. 53B), with support housing 532 having a generally planar interior end 535 for flush engagement with the forward end 193 of support housing 194. Dispenser component housing 532 includes pivot recesses 534 (one shown-Fig. 53A) to which is pivotably attached closure door 536 (see Figures 9 and 47 for a closed closure door state and Figures 11A and 11B for an open closure door state) by way of pivot screws 538 (one shown) or the like.

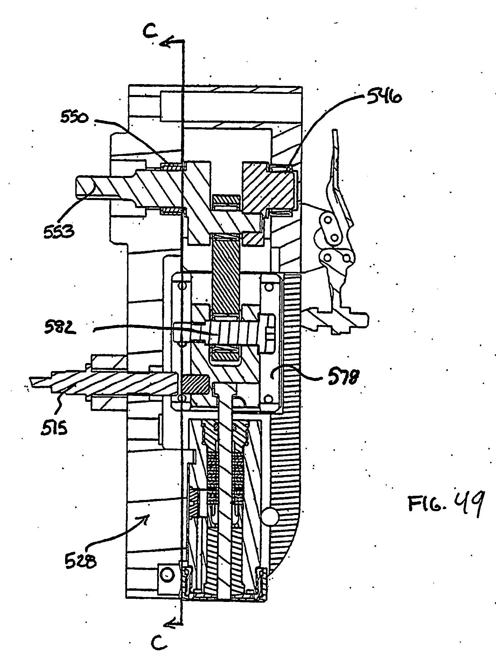

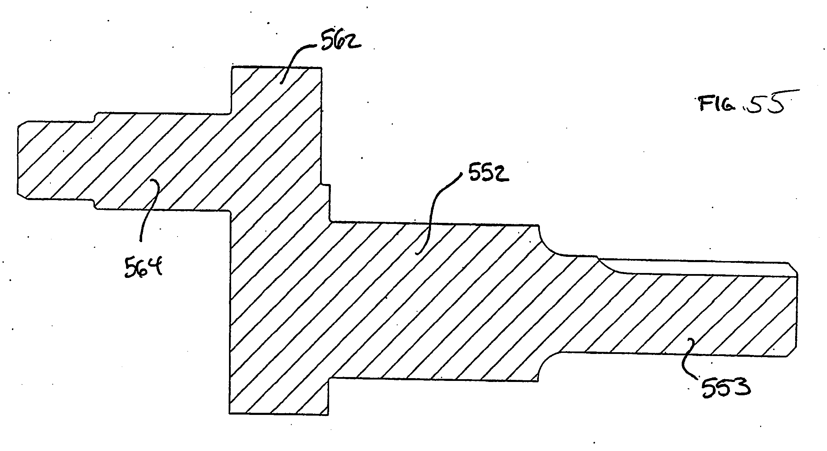

Dispenser housing cap 533, illustrated in Figs. 46, 47 and 53B is secured to the top front of support structure 194 and is shown as having a common axial outline with support structure 194 (such that all potentially film contact surfaces of dispenser 192 are made with a non-interrupted smooth surface). Figure 53B illustrates housing cap 533 having a large crank clearance recess 542 and a bearing recess 544 sized for receipt of a first of two bearings such as the illustrated first (forwardmost) needle bearing 546 shown in Figures 46 and 49. Housing cap 533 is secured in position on the forward top face of main crank support housing component 532 by suitable fasteners (not shown). Bearing recess 544 is axially aligned with inner bearing recess 548 provided on the forward face of housing component 532 (Fig. 53A). Inner bearing device 550 (Fig. 46) represents the second of the two bearings within cap 533 and is received in inner bearing recess 548. Crank assembly 526 has opposite ends rotatably received within respective inner and outer bearings 545, 550 and is preferably formed of two interconnected components with a first crank assembly component 552 being shown in Figures 54 and 55 with key slot shaft extension 553 designed to extend past the innermost surface of main housing component 532 and into driving connection with the forward flexible coupling connector 554.

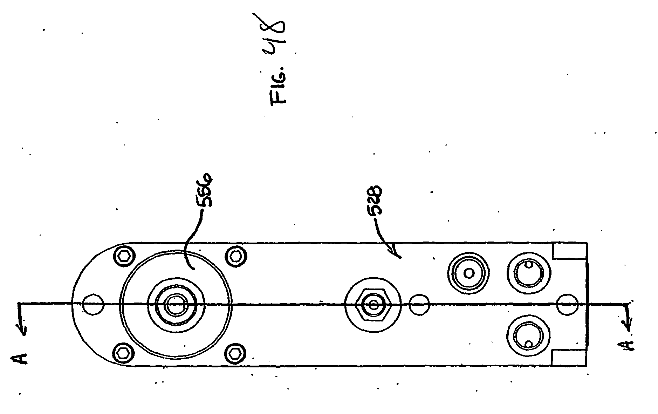

For added stability and positioning assurance, rear end 534 of housing component 532 further includes annular projection 556 (see Figure 48), that is dimensioned for friction fit connection with circular recess 558 (Fig. 59) formed in support housing structure 194. First crank assembly component 552 further includes bearing extension 560 sized for bearing engagement with inner bearing 550 and is positioned between slotted shaft extension 553 and inner crank extension 562. Inner crank extension is elliptical is shape and has bearing extension 560 having a central axis aligned with a first end (foci) of the ellipsoidal inner crank extension and crank pin 564 extending forward (to an opposite side as extension 560) from the opposite end (foci) of inner crank extension 562. Crank pin 564 has a reduced diameter free end which is dimensioned for reception in pin reception hole 566 formed in outer crank extension 568 of second crank component 570 having a peripheral elliptical or elongated shape conforming to that of the first crank component. At the opposite end of the elliptical extension 568, and aligned with the central axis of first or inner bearing extension 560, is provided outer or second bearing extension 572. Second bearing extension 572 is dimensioned for reception in outer bearing 546.

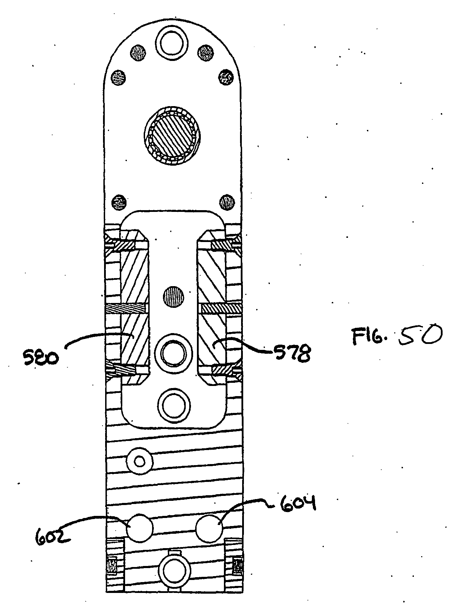

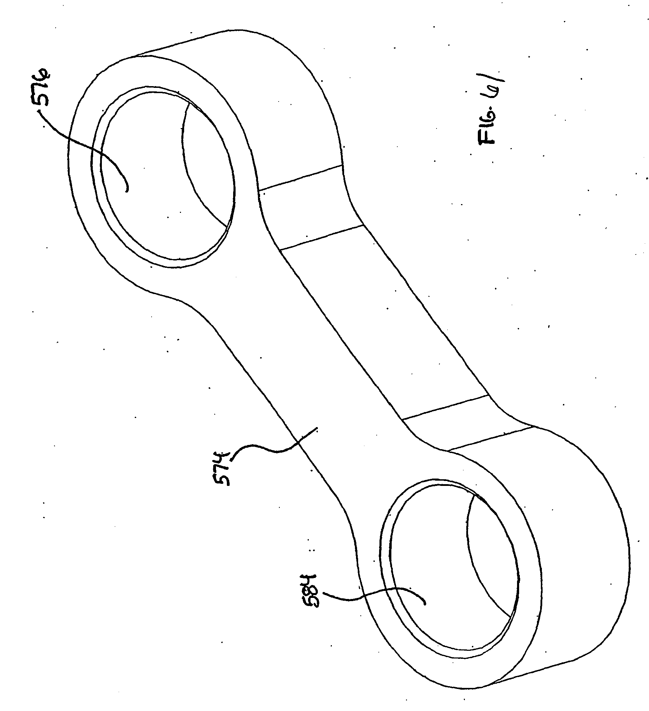

Figure 61 illustrates connecting rod 574 having first looped connecting end 576 designed for driving connection with respect to crank pin 564. This upper connection is shown in cross-section in Figure 59 and in perspective in Figure 51. Figure 51 shows connecting rod 574 extending down between a parallel set of guide shoes 578, 580 (both shown in cross-section in Fig. 50) and into engagement with hinge pin 582 as shown in Figures 46 and 49 (where one of the two sliding plates is removed in cross-section). Hinge pin 582 is received within second looped connecting end 584 of connecting rod 574 and is secured at its opposite ends to slider mechanism 586 which functions in piston like fashion as it slides between and in contact with guide shoes 578, 580. Thus, connecting rod 574 functions as means to connect the crank assembly to the slider mechanism which provides for a translation of the rotation of the main drive shaft 520 into linear motion of the slider within the two guide shoes.

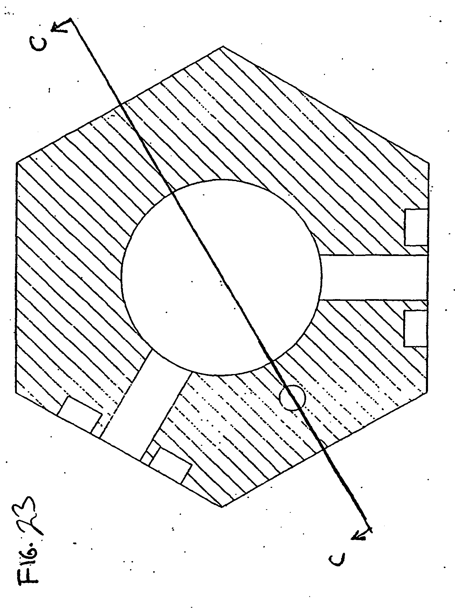

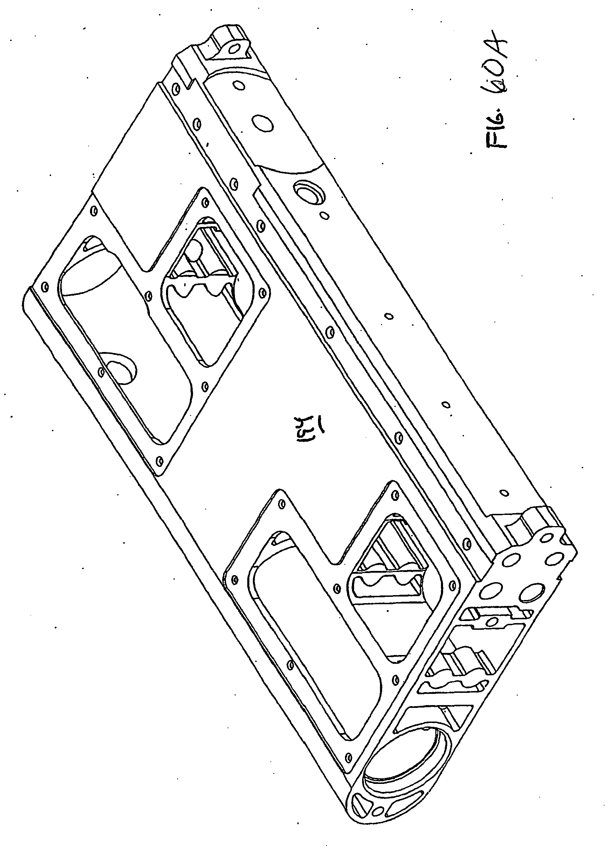

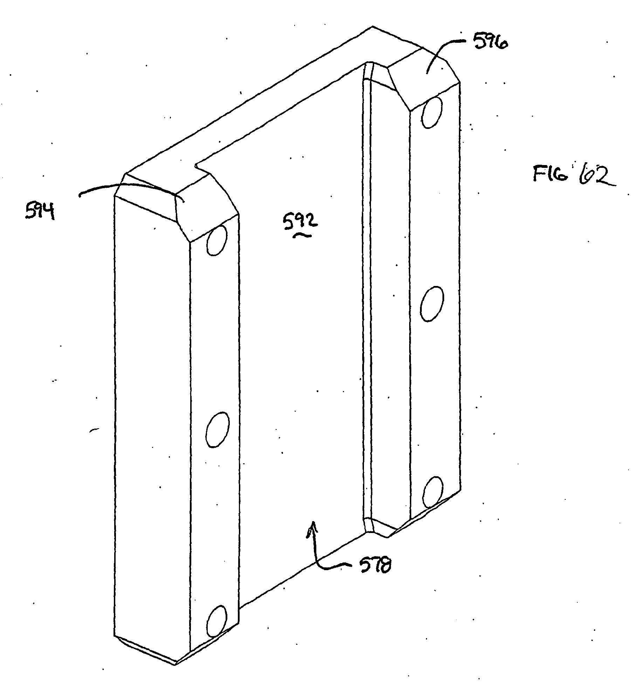

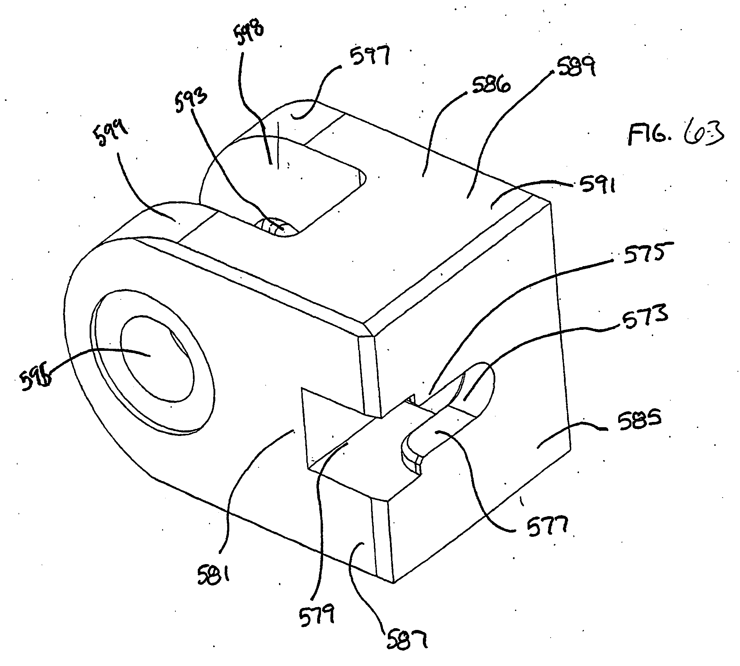

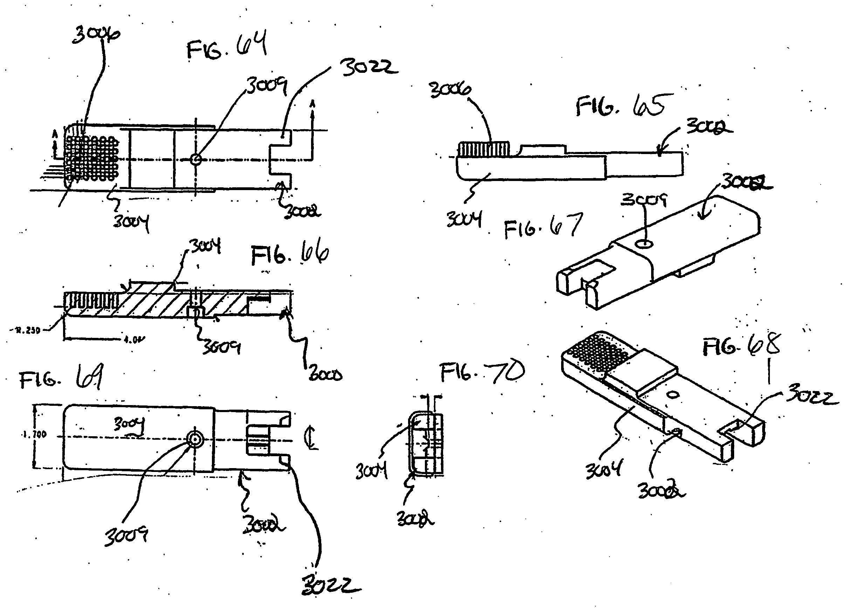

Figure 62 illustrates one of the two guide shoes 578 with the opposite one being the same but for its fixation position to an opposite one of the two main housing component's shoe support brackets 588 and 590 shown in Figure 23A. As seen from Figures 46 and 47, shoe support brackets 588 and 590 support corresponding shoes 578 and 580 in mirror image fashion with the back wall 592 of each flush against an interior surface of a corresponding bracket and with flange rims 594 and 596 extending out toward each other to define a peripherally closed sliding area. Fastener holes are formed in each bracket and in the flange rims for fastening the shoe assembly together (e.g., four larger corner bolts with two smaller intermediate bolts holes aligned in each as depicted in Figures 60 and 66). Thus, the guide shoes provide means for guiding piston 586 (Fig. 63) as it slides linearly in response to the forces transmitted from connecting rod 574. A preferred material for the guide shoes is "TORLON" material of DuPont, because it has high load bearing properties coupled with low sliding friction, although other materials can be relied upon to provide a sliding piston guiding function under crank and connecting rod loads.

Figure 63 illustrates slider mechanism 586 having upper trunnion end 598 with forward trunnion extension 599 and rearward trunnion extension 597. In trunnion extensions 597 and 599 there is formed pin reception holes 595 and 593 for receipt of respective ends of hinge pin 582 (e.g., a threaded engagement although threading not shown). As seen from Figure 63, trunnion end 598 has smooth side walls at the base of extensions 597 and 599 which extend into smoothly contoured semi-circular upper trunnion extension portions. Slider mechanism further includes rod capture base 591 having smooth shoe contact side walls 589 and 587 as well as base bottom 585 within which is formed rod capture recess 583 which has an enlarged rod end insert opening that opens out at front face 581 and an elongated base slot 573 that narrows in opening width in its rear portion due to the extension of two opposing rod capture ribs 577 and 575. At its rear end, slot 573 has a curvature matching the curvature of the enlarged rod head 330 of rod 264 and capture recess extends rearward past the rear end of slot 573 so as to provide a capture reception region relative to the enlarged head of rod 330 shown in Figure 12, for example. Accordingly the connecting rod 574 converts the rotational motion of crank arm or connecting rod 574 into linear motion in the slider mechanism 586 which in turn, based on its releasable capture connection with the enlarged end 330 of rod 264, reciprocates rod 264 within the mixing chamber to purge and/or perform a valve function relative to the chemical mixing chamber feed ports.

The mixing module drive means of the present invention, which derives its power from motor 200 and achieves rod reciprocation, is highly effective in the environment of a mixing module dispenser in that it coordinates its cycle of high force push and pull levels with the ends of travel of slider mechanism 586 which corresponds with the reciprocation end points of the rod 264 between a forward purge extension to a rearward (upward in the illustrated Figure 51) valve open retracted position. The calculated pulling or pushing force is over 1000 lbf at these two positions. This higher pushing/pulling force will not necessarily be applied to the mixing module as it is only applied when needed (e.g., the drive mechanism will only apply enough force to move whatever is attached to it). If the item does not want to move (e.g., stuck), the drive mechanism can generate its maximum force level attributable to the system at that point to break any resistance to movement. This feature is well suited for the mixing module's characteristics as the high force is available at the start of the opening stroke, exactly where it is needed, because this is the location where prior art mixing modules have a tendency to bind up if they are left idle for even a few minutes. For example, if urethane is building up on the inside diameter of the mixing chamber, it will bond the valving rod to the chamber. The drive mechanism of the present invention can effectuate rod reciprocation even if there is a lot of urethane buildup, unlike the prior art wherein an increase in "stick" from urethane build up which often occurs at the end of idle periods and/or when the solvent runs out or gets contaminated. In the prior art systems the binding forces can be high enough to stall, for example, the drive mechanism of the prior art mechanisms leading to a shut down signal and/or breakage of a rod or some other component.

The placement of the motor 200 external or out away from the film edging and bag forming area allows for a much more robust motor than utilized in the prior art (e.g., a weight difference of, for example, 3.18 kg (7 pounds) (for drive motor, gearbox and controller) relative to for example 0.34 kg (12 ounces) for a typical prior art systems motor, gearbox and controller positioned inside or between the film edges). A conventional motor drive system sized for insertion between the bag film edges (e.g., a ball screw motor drive system) has about 271.16 Nm (200 pounds) when operating at optimum performance levels which was not often the case. This difference provides in the present invention, for example, a torque of at least 5 to 10 times greater than the noted prior art motor and the capability to run at peak torque for the full life of the motor. The preferred motor type for the mixing module driver of the present invention is a brushless DC motor (for example, a Bodine Brushless Torque motor with RAM of 100 to 2000 RPM. The built in encoder of the present invention's brushless motor provides for accurate dispenser use and avoidance of cold shots in that a preferred embodiment of the invention features a built in encoder that generates a position feedback signal to the control means (i.e., a closed loop system unlike the prior art open loop system). Thus unlike the prior art systems that run open loop and have no way of knowing the positioning of the mixing module rod relative to the axial length of the mixing module passageway and direction of travel therein, the present invention's closed loop arrangement allows the controller to monitor at all times the status of the drive system and hence whether the mixing module is in an opening or closing cycle. This information is valuable in monitoring the drive performance and the early flagging of potential problems (e.g., build up of hardened foam in the mixing chamber) before the potential problems build up to a level causing major problems. Figures 46 and 49 further illustrate drive mechanism home position sensor 515 that identifies the starting position of the drive mechanism so as to provide added feedback for performance monitoring of the mechanism including operation of the encoder itself. If there is sensed a position problem by the home sensor (e.g., a broken crank) a stop signal is generated to prevent additional system damage (similar functions can be provided by the moving jaw home sensor 4036 as well as the cleaning brush reciprocation system home sensor 3056 discussed below). Figures 71 and 73 illustrate the control system and with Figure 73 showing the mixing module home sensor in conjunction with the chemical dispensing and tip cleaning control and monitoring sub-system.

As described in the background section, the outlet tip region of a dispensing mixing module is a particularly problematic area with regard to foam buildup and disruption of the desired foam output characteristics. Once the output nozzle is sufficiently blocked, the foam stream is deflected from its normal path and can easily be deflected 90° if left unattended having negative consequences in the build up of essentially non-removable foam in other areas of the dispensing system. It is believed that left unattended such a build up can happen in as little as 20 shots. The aforementioned features of the present invention's tip management means including providing a solvent supply system to the front end of the mixing module with a high pressure solvent pump, flow through or flushing/continuous replenishment solvent chamber, heated solvent and directed tip region flow of solvent through the face of the mixing module and around the valving rod is highly effective in precluding build up. However, even with the advantages or arrangement described above, foam can accumulate at the tip of the dispenser in a softened state during solvent flow supply with the potential to harden during periods where the system is shut down and during times in which solvent flow may not be provided. The present inventions tip management means thus preferably includes an auxiliary cleaning component which is directed at physical removal of any chemical build up in the tip region or outlet port region of the mixing module such as in a wiping or brushing fashion. In a preferred embodiment there is provided a brush or a alternate physical chemical build up removal means preferably connected with means for reciprocating or moving that cleaning member (e.g., brush) between cleaning contact and non-contact states relative to the nozzle tip.

Figures 42, 42A, 46, 51 and 64-69 illustrate various features of a preferred embodiment of physical nozzle tip cleaning means 3000.

Figure 42 shows physical nozzle tip cleaning means 3000 (which preferably works in conjunction with the solvent or chemical cleaning means as part of an overall tip management system) with its cover removed while Figure 42A shows cover 3001 (multi or single unit casing) included at the bottom region of the dispenser 192. As shown in Figure 51 nozzle tip cleaning means 3000 comprises a physical contact with tip cleaning member 3002 preferably formed of a brush having brush base 3004 with a plurality of bristles (e.g., plastic; but more preferably steel). The bristles are arranged and of a height to come in contact with the nozzle outlet tip most prone to foam build up with the amount of contact being preset (or adjusted with height adjustment means as in wedge adjustments (not shown) to have the bristles deflect to some extent to achieve improved wiping, while avoiding an over contact or unnecessary degree of contact with the nozzle end. This relative spacing can be seen from Figure 46 with, for example, an overlap similar to the thickness of the outer and inner front cap components combined. Figure 46 illustrates linear slide base 3008 which is secured to the underside of main dispenser having 194 by fasteners 3010. Slide base 3008 is preferably formed of TORLON 4301 of DuPont, a high performance plastic used in harsh bearing applications and includes V-Shaped grooves extending along its elongated body. Figure 46 also illustrates line or slide yoke or brush drive transmission connection means 3012 having an extended forward end 3014 which lies flush on a central axial elongation area of brush base 3002. Forward end 3014 is fastened to brush base 3002 with fastener 3018. Yoke 3012 includes a hook section 3020 with a notch which receives flange extension 3022 of the brush base. As its opposite end, yoke 3012 includes U-Shaped connector 3023 with vertically spaced legs having a central aperture in each. One end connecting rod 3024 is received between the legs and held in place by threaded pin 3026 which pivotably receives rod 3024. First and second linear slide rails 3028 and 3030 are secured the respective sides of yoke 3012 and include projections that ride within the elonged recesses of linear slide base 3008 (or vice versa). Connecting rod 3024 is secured to crank 3032 by way of its pivot extension 3034 extending into the aperture in the looped yoke end 3031. Crank 3036 is secured to the bottom end of shaft 3038 which extends through a corresponding series of vertically aligned holes in dispenser housing 194 with suitable bearing mounting into one way clutch 3042 which joins crank 3032 for rotation in one direction of shaft rotation 3038 and freewheels when a shaft 3038 rotates in the opposite direction. At the top end of shaft 3038 there is connected bevel gear 3040 which is connected to the previously described bevel gear 512.

Thus, when motor 508 rotates in a first direction (e.g., clockwise) it reciprocates the mixing module rod (e.g., opens and closes the chemical ports to the mixing chamber while purging the same) and when it runs in the opposite direction it drives the cleaning component (e.g., brush). Motor 508 turns main drive shaft 520, which turns smaller drive shaft 3038, arranged perpendicular thereto, through the bevel gear connection. One way clutch 3042 at the lower end of drive shaft 3038 only transmits rotation when turning in a predetermined direction. If the shaft 3038 is rotating in the opposite direction, shaft 3038 will free ride in clutch 3042 and not activately reciprocate the cleaning brush (at which time main shaft 520 is activately transmitting reciprocating force to the rod) when the shaft 3038 is rotated in the opposite direction (at which time main shaft 520 is not rotated due to the one way clutch 516 being in a freewheel state relative thereto) shaft 3038 is rotating in a direction which turns crank 3036 driving connecting rod 3024 which translates the rotary motion of the shaft 3038 to liner motion in the brush slide assembly. Brush 3002 is preferably mounted to an aluminum yoke, attached to the TORLON slider centered between the two side bearings 3028, 3030, which support the yoke assembly as it moves back and forth. The brush base is preferably machined of a polypropylene plastic, with the bristles being arranged of a sufficient width to sufficiently clean the nozzle and is arranged in a grid pattern or spiral pattern. The brush can easily be replaced when warn by removal of the fastener. The number of reciprocating strokes is determined by the controller which instructs motor 508 as to which direction to turn as shown by the control arrangement shown in Figure 73. In a preferred embodiment, the brush is reciprocated a multiple number of times sufficient to clean all build up subjected to solvent application, again based on controller input (automatic or operator set). That is, the number of brush reciprocation's (time motor running in certain direction) and the period between cycles (time between off states or switching from one direction to another direction) is based on the needs of the system (e.g., solvent type, chemical type, length of inactivity etc.). For example, an extra cleaning cycle both with regard to solvent application and brushing is preferably performed when the system has an extended multi-hour period of shut down such as during a nighttime shut down or other long idler periods (servicing). Preferably this cleaning cycle is performed with the solvent above (e.g., 65.6°C to 71.1°C (150 to 160°F)) its normal (e.g., 54.4°C (130°F)) heated temperature (a controller interface relationship between reciprocating brush control and solvent pump supply and manifold heaters (see Figure 75)). The higher temperature increases the solvation power of the dispenser cleaning solution and extended brushing period will help remove any preexisting build up from the last dispenser run period.

Figure 51 illustrates some additional features of the physical nozzle tip cleaning means. As shown, the upper, relatively flat side of crank 3032 features groove 3050 of semi-circular cross-section that concentrically encircles the center hole of the crank. Spring loaded plunger 3052 is mounded (e.g., on housing 194) so its retractable tip rides in the groove. Plunger 3052 allows the crank to rotate freely in the brush operating direction because of the nature of the groove design with its ramp up arrangement with wall drop off 3054 which does not preclude crank rotation in the noted direction, but will lock up the crank (relative to a free ride state) if the crank moves in the opposite direction. This feature avoids the possibility of the brush being accidentally moved when the valving rod is the one being moved by the motor such as if there is a minor degree of friction drag in the slip clutch or the brush is in some way accidentally hit in a direction that would force it forward, during potential dispensing of foam, although the cover essentially protects against such an event.

Figure 51 further illustrates proximity sensor 3056 for home position determination. Thus, in conjunction with the encoder of motor 508, the actual position of brush 3006 relative to its reciprocation travel can be monitored at all times in similar fashion to the location of the reciprocating rod with the proximity sensor 515 (e.g., position monitoring means) ensuring proper operation of the encoder based position monitoring system. Either of these sensors can be moved up or downstream relative to the respective transmission lines in which they exist.

With reference to Figures 45-50, 59 and 60, there is illustrated the chemical feed housing conduit system 600 passing from the inlet section 198 of dispenser apparatus 192 (via manifold 205) to dispenesr housing 194. Chemical outlets (see Figs. 45 and 59) 602 and 604 corresponding with those in the chemical front end dispenser housing component 528 feeding into the mixing module housing 302. Chemical conduits 602 and 604 are preferably formed in conjunction with an extrusion process used in forming the basic structure of main housing 194 (e.g., main housing section 195). As further shown in Figure 45 positioned above conduits 602 and 604 there is a second set of conduits with conduit 606 providing a solvent flow through passageway in main housing 194 and with the adjacent conduit 608 providing a cavity for reception of a heater cartridge 610 (or H2) (e.g., an elongated cylindrical resistance heater element) that is inserted into conduit 608 and has its electrical feed wires (not shown) feeding out the inlet end 198 side to the associated power source and control and monitor systems of the control means of the present invention as shown in Figure 75. Heater cartridge 610 features a heat control sub-component system which interfaces with the control means of the present invention as illustrated in Figure 75 and, is preferably positioned immediately adjacent (e.g., within an inch or two or three of the two chemical conduits 602 and 604) and runs parallel to the chemical passage to provide a high efficiency heat exchange relationship relative to the main housing preferably formed of extruded aluminum. The heat control sub-system of the present invention preferably is designed to adjust (e.g., automatically and/or by way of a temperature level setting means) the heater to correspond or generally correspond (as in averaging) with the temperature setting(s) set for the chemicals passing through the heater wires associated with the chemical feed lines 28' and 30' so as to maintain a consistent desired temperature level in the chemicals fed to the dispenser. Heater cartridge 610 is also within an inch or two of the solvent flow through passageway and thus is able to heat up the solvent flow being fed to the mixing module (e.g., a common 54.4°C (130°F) temperature). A temperature sensor is associated with the heater cartridge which allows for a controller monitoring of the heat output and the known heat transmissions effect on the chemical passing through the adjacent conduit through the intennediate known material (e.g., extruded aluminum).

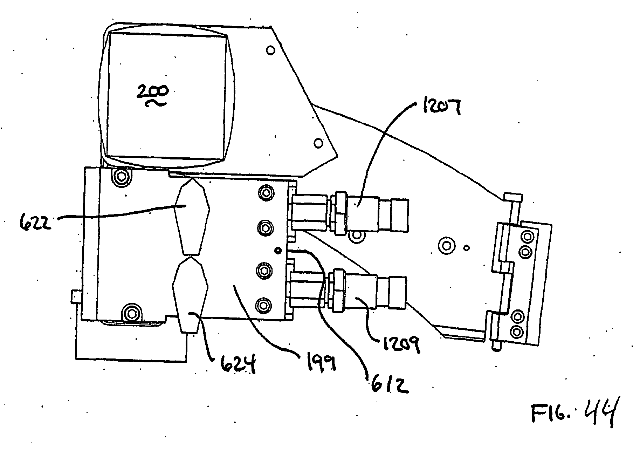

With reference to Figure 44 there is illustrated inlet manifold 199 formed of block 205 with the manifold cavities including one for inlet manifold heater 612 which functions in similar fashion to heater 610 in heating the surrounding region and particularly the chemical flowing through manifold 199 to preferably maintain a consistent chemical temperature level in passing from the heater wire conduit exits to the mixing module. Heater 612 also includes a temperature monitoring and control means associated with the main control board of the present invention to monitor the temperature level in the manifold block and make appropriate heat level adjustments in the manifold block to achieve desired chemical output temperature(s), as shown in Figure 75.

Figures 44 and 46 also illustrate manifold 199 as having A and B chemical passageways 614, 616 which feed into corresponding main housing A and B chemical conduits 602 and 604 also running adjacent the manifold heater 612 to maintain a desired temperature level in the chemical for all points of travel through the main manifold 199. The cross-section in Figure 46 illustrates filter reception cavities 618, 620 within which are received filters 4206 and 4208 (Fig. 42) which are readily inserted (e.g., screwed or friction held) into place so as to receive a flow through of respective chemicals A and B. Chemicals A and B passing through manifold 199 are also subject to flow/no flow states by way of chemical shutoff valves 622 and 624 which feature readily hand graspable and turnable handles and are preferably color coded to correspond with the A and B chemicals. Pressure sensing means (e.g., transducers) 1207 and 1209 also sense the chemical pressure of the chemicals passing in manifold 199 and convey the information to the control board where a board processor determines whether the pressure levels are within desired parameters and, if not, sends out a signal for making proper system adjustments as in a reduction or increase in pump output (see the general schematic in Figure 71).

With reference to Figures 6A, and 8B, there is illustrated the path of film exiting the film roll supported on the spindle extends tangentially off the top of the film roll and into contact with the forward side of idler roller 114, and then up as shown in Figure 8B into engagement with the rear side of upper idler roller 101 where it is redirected downward. From idler roller 101, film 216, in its preferred C-fold form, is separated over a portion of its non-fold side (the fold side passing externally and in front of the front end 196 of the dispenser 192) and then brought back together as both sides of the film enter the nip roller assembly comprised of drive nip roller pair 84 and 86 supported on shaft 82 and driven nip roller pair 74,76 on shaft 72 (in a preferred embodiment a pair of rollers is supported on each shaft with a preferred intermediate spacing although alternate arrangements are also featured under the present invention such as single, full length rollers provided on each shaft).

Three of the main supply requirements for a foam-in-bag dispenser are film (for bags), chemicals (for foam) and solvent (to prevent foam build up in the valving/purge rod and a tip of dispenser). To monitor solvent, there is provided a certain volume solvent container (e.g., 3.78 l (3 gallons) that is in line with a metering pump (e.g., a pump that dispensers a fixed volume of fluid with every cycle as in the one illustrated in Figure 54 (e.g., .57 ml based on a preferred 3 pump pulses of .19 ml per bag cycle). As shown in Figure 76, the controller thus receives signals from the pump as to cycles and/or correlates with bag cycle history such that by monitoring the number of cycles of known solvent volume usage there can be determined usage of solvent and when re-supply is needed. The solvent container also has a float valve or the like which signals when a first low level is reached and sends out a warning via controller interfacing. There is also provided an even lower level sensor that when triggered shuts down system to prevent purge rod binding and other problems involved with no solvent flow is provided. With the monitoring of solvent level based on usage and/or container levels, a new supply of solvent can be automatically sent out from a supplier when there is reached either a certain level of closed amounts or a container level signal following a review of history of usage for machine (re-supply could be triggered by the first low signal or at a higher level depending on re-supply time etc.).

One way to monitor the film usage is to use the encoder on the nip roller set to determine number of rotations and with estimated film passage length per rotation can compare against overall length on a roll of film or film source. Under the present invention there is an alternate way to monitor film usage and that is to utilize facets of film web tensioning characteristics wherein the output of the film tensioning system (e.g., the encoder of a web tension torque motor having a torque drive transmission system in direct engagement with a roll core drive insert) and the output of a motor driving the nip roller set are used with the controller to compare the interrelationship, and with a review of roll unwinding charcteristics a determination can be made as to how much film has been fed out from the roller. The comparison of motor torque method is the preferred method since it is independent of the machine keeping track of when a roll of film is changed and how much film is on the roll. The DC motor on the film unwind shaft is constantly being monitored and compared to the film advance motor to compensate for the continual decrease in mass of a roll of film.

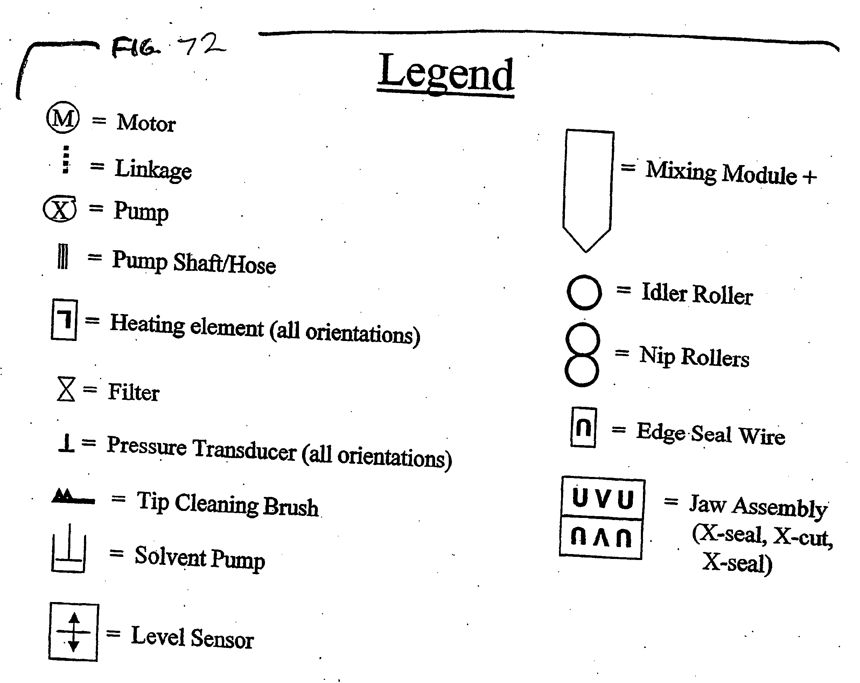

Figure 71 shows an overall schematic view of the display, controls and power distribution for a preferred foam-in-bag dispenser embodiment which provides for coordinated activity amongst the various sub-assemblies like that for the foam-in-bag dispenser system described above (and for which component reference numbers are provided in addition to the key legend of Figure 72). The present invention preferably comprises an electrical package comprised of two board assemblies, the main control board and an operator interface. The boards are interlinked via a single shielded cable, which can be separated up to 8 feet. The operator interface includes an LCD display, keypad, control board and enclosure. It can be separated from the bag machine via a single shielded umbilical cord. Because the operator interface is a separate item from the rest of the machine, different interfaces can be either separate or integrated. For example, the display panel with button control 63 in Figure 3 is preferably pivotably attached to the front of the dispenser and provides for both control of dispenser system and initiating other functions such as remote access via a modem or the like to a service provider Provided below are some preferred electrical specifications for a display system.

## Claims

1. A foam dispenser component drive mechanism comprising:
a motor driver (508; 200);
a foam dispenser chemical purge rod drive transmission (526) comprising a crank and slide assembly (526; 574; 586) driven by said motor driver (508; 200), and **characterised in that** said crank and slide assembly (526; 574; 586) is in driving engagement with a purge rod (264).

2. The drive mechanism of claim 1, wherein said drive transmission (526) includes a transmission housing (528) and said crank and slide assembly (526; 574; 586) includes a crank (526; 574) pivotably supported by said housing (528) and a slide member (586), which slide member (586) is linearly reciprocated by said crank (526; 574) and engaged with the purge rod (264).

3. The drive mechanism of claim 2 wherein said crank and slide assembly (526; 574; 586) comprises a connecting rod (574) driven by said crank (526) and said slide member (586) is driven by said connecting rod (574).

4. The drive mechanism of claims 1 to 3 wherein said drive mechanism comprises engagement means (583) for engagement with the purge rod (264).

5. The drive mechanism of claim 4 wherein said engagement means (583) comprises an engagement slot (583) designed to receive and retain an engagement head (330) of the purge rod (264).

6. The drive mechanism of claims 1 to 5 wherein the purge rod (264) is a valve rod (264) relative to a chemical chamber (312) provided in the foam dispenser within which the purge rod (264) travels, which valve rod (264) functions, when in a valve closure mode, to directly block off a chemical feed passageway (278; 280) feeding into the chemical chamber.

7. The drive mechanism of claim 3 wherein said slide member (586) is in sliding engagement with a guide shoe (578) supported by said housing (528) and of a material of a lower friction coefficient level than that of said housing (528).

8. The drive mechanism of claim 3 wherein said slide member (586) is a multi-walled piston member in sliding engagement with a pair of guide shoes (578) supported by said housing (528).

9. The drive mechanism of claim 3 further comprising a connection pin (582), said connecting rod (574) having a first looped end (576) in engagement with said crank (526) and a second looped end (584), said connection pin (582) extending into said second looped end (584) and into engagement with said slide member (586).

10. The drive mechanism of claim 9 wherein said crank (526) includes a first crank component (552) and a second crank component (570) releasably interconnected with said first crank component (552), and said first and second components (552; 570) being detachable and interconnectable to provide for engagement of said crank (526) with the first looped end (576) of said connection rod (574).

11. The drive mechanism of claims 2 to 10 further comprising first and second bearings (550; 560; 546; 572) wherein said crank includes a first extension (560) and a second extension (572), and said housing includes a first bearing reception recess (550) receiving said first bearing (560) and first extension (560), and a second bearing reception recess (546) receiving said second bearing (572) and second extension (572).

12. The drive mechanism of claims 2 to 11 wherein said housing (528) includes a main housing section (532) and a detachable cap housing section (533) with said main housing (532) section defining said first reception recess (542) and said cap housing section (533) defining said second reception recess (544).

13. The drive mechanism of claims 1 to 12, wherein said drive transmission comprises a drive shaft (520) in line between said driver (508; 200) and the crank and slide assembly (526; 574; 586), with said drive shaft (520) driving said crank and slide assembly (526; 574; 586).

14. The drive mechanism of claim 13 further comprising a flex coupling (524) positioned in line between said drive shaft (520) and crank and slide assembly (526; 574; 586).

15. The drive mechanism of claims 13 to 14 further comprising a one way clutch (514) in line between said driver (508; 200) and crank and slide assembly (526; 574; 586).

16. The drive mechanism of claims 13 to 15 wherein said driver (508; 200) is reversible in drive rotation direction and said drive mechanism further comprising a secondary drive transmission (3038) which is activated/deactivated depending on direction of drive rotation.

17. The drive mechanism of claims 1 to 16 further comprising a driver (508; 200) that is a DC brushless motor.

18. The drive mechanism of claims 1 to 17 further comprising a home sensor positioned in drive transmission line for monitoring a position status of a component in said drive mechanism.

19. The drive mechanism of claims 1 to 18 further comprising a home sensor (515) which senses a position of a component that is of said drive transmission or is driven by said drive transmission and positioned downstream of a crank (526) in said crank and slide mechanism (526; 574; 586).

20. The drive mechanism of claims 1 to 19 wherein said driver (508; 200) includes an encoder.

21. The drive mechanism of claim 1 to 20 wherein said drive mechanism generates a cycling of push and pull forces varying in levels on the engaged purge rod (264) with maximum push and pull levels being coordinated with reciprocation end points of the purge rod (264).

22. The drive mechanism of claim 1 further comprising a dispenser housing (528) within which is positioned said crank and slide assembly (526; 574; 586) and wherein said dispenser housing (528) includes means (532) for receiving a mixing module (312) and means (278; 280) for feeding foam precursor chemical to said mixing module (312), and wherein the purge rod (264) is driven by said drive transmission within the mixing module (312) and functions as a contact seal-off valve rod (264) relative to a chemical passageway (278; 280) formed in the mixing module (312).

23. An apparatus for driving a reciprocating chemical purge rod of a foam dispenser mixing module, comprising a foam dispenser component drive mechanism as claimed in any one of claims 1 to 22, and comprising:
a drive shaft (520);
the crank (526) driven by said drive shaft (520);
the slider assembly (586) driven by said crank (526); and
a mixing module purge rod engagement section (583),
wherein said slider assembly (586) comprises a slide mechanism which includes said mixing module purge rod engagement section (583).

24. The apparatus of claim 23 wherein said slide mechanism comprises a slide piston (264) and said slide assembly further comprises a connecting rod (574) having a first end (576) connected with said crank (526) and a second end (584) connected with said slide piston (264).

25. The apparatus of claim 24 wherein said engagement section (583) includes a slotted section in said slide piston (264).

26. The apparatus of claims 23 to 25 further comprising a one way clutch (514) in driving engagement with said drive shaft (520).

27. The apparatus of claims 23 to 25 further comprising a flex coupling (524) provided with said drive shaft (520).

28. A foam dispenser drive system for a mixing module reciprocating purge rod, comprising:
a driver (508; 200) and
means for converting (526; 574; 586) a rotational drive force into a linear reciprocation drive force being capable of providing higher force push and pull levels in coordination with reciprocation end points of travel in the purge rod (264), **characterised in that** the means for converting (526; 574; 586) is in driving engagement with the purge rod (264) and produces variable push and pull levels on the purge rod (264).

29. The drive system of claim 28 wherein said linear drive force has a linear direction coincident with a linear reciprocation of the mixing module purge rod (264) reciprocated by said drive system.

30. The drive system of claim 28 or 29, wherein said means for converting a rotational drive force into a linear drive force includes a crank and slider mechanism (526; 574; 586).

31. The drive system of claims 28 to 30 wherein said means for converting (526; 574; 586) includes a sliding member (586) with engagement means (583) for engagement with said mixing module purge rod (264).

32. The drive system of claim 31 wherein said sliding member (586) is a piston with a slot dimensioned for catching engagement with the mixing module rod (264).

33. The drive system of claim 32 further comprising a pair of guide shoes (578) and wherein said piston (264) is in sliding engagement with said pair of guide shoes (578).

34. The drive system of claim 30 to 33 further comprising a dispenser transmission housing (528), and wherein said crank and slider mechanism (526; 574; 586) includes a crank (526) driven by said driver (508; 200), a connection rod (574) having a first end (576) in connection with a crank pin section (582) of said crank and a second end (584) in engagement with a slider member (586) of said crank and slider mechanism (526; 574; 586).

35. An apparatus comprising a foam dispenser drive system as claimed in any one of claims 28 to 34 for driving the reciprocating purge rod (264) having a full retraction position and a full extension position relative to a mixing module of the dispenser, comprising:
drive transmission means (526; 574; 586) with said drive transmission means (526; 574; 586) being arranged to coincide maximum chemical purge rod (264) reciprocation force application coincident with the full extension and full retraction positions of the reciprocating rod (264).

36. A method for reciprocating a chemical purge rod of a chemical mixing module comprising:
rotating a crank (526) with a drive assembly wherein said drive assembly includes a motor (508; 200) for rotating said crank (526);
driving a slide assembly (586) with the rotating crank (526) so as to move the slide assembly (586) in linear fashion, and
moving the purge rod (264) together with said slide assembly, **characterised in that** the moving is by way of said slide assembly (586) being in driving engagement with the purge rod (264).

37. The method of claim 36 further comprising monitoring a position of said purge rod (264) either directly or indirectly with a home sensor (515).

38. The method of claims 36 or 37 wherein said motor (508; 200) includes an encoder and said method further comprising using the encoder to further monitor positioning of said purge rod (264).

39. The method of claim 36 to 38 which purge rod (264) is dimensioned relative to the mixing module as to function as a valve rod (264) relative to a chemical feed passageway (278; 280) of the mixing module which valve rod (264) functions, when in a valve closure mode, to directly block off a chemical feed passageway (278; 280) feeding into the mixing module (312).

## Patentansprüche

1. Antriebsmechanismus für eine Schaumspenderkomponente, umfassend:
einen Motorantrieb (508; 200);
ein Antriebsgetriebe (526) für eine Chemikalien-Reinigungsstange eines Schaumspenders, umfassend eine durch den Motorantrieb (508; 200) angetriebene Kurbel- und Schieberanordnung (526; 574; 586), und **dadurch gekennzeichnet, dass** sich die Kurbel- und Schieberanordnung (526; 574; 586) in Antriebseingriff mit einer Reinigungsstange (264) befindet.

2. Antriebsmechanismus nach Anspruch 1, wobei das Antriebsgetriebe (526) ein Getriebegehäuse (528) umfasst und wobei die Kurbel- und Schieberanordnung (526; 574; 586) eine von dem Gehäuse (528) schwenkbar gehaltene Kurbel (526; 574) und ein Schieberelement (586) umfasst, wobei das Schieberelement (586) von der Kurbel (526; 574) linear hin und her bewegt wird und mit der Reinigungsstange (264) in Eingriff ist.

3. Antriebsmechanismus nach Anspruch 2, wobei die Kurbel- und Schieberanordnung (526; 574; 586) eine von der Kurbel (526) angetriebene Verbindungsstange (574) umfasst und wobei das Schieberelement (586) von der Verbindungsstange (574) angetrieben ist.

4. Antriebsmechanismus nach den Ansprüchen 1 bis 3, wobei der Antriebsmechanismus ein Eingreifmittel (583) für den Eingriff mit der Reinigungsstange (264) umfasst.

5. Antriebsmechanismus nach Anspruch 4, wobei das Eingreifmittel (583) einen Eingreifschlitz (583) umfasst, welcher dafür ausgebildet ist, einen Eingreifkopf (330) der Reinigungsstange (264) aufzunehmen und zurück zu halten.

6. Antriebsmechanismus nach den Ansprüchen 1 bis 5, wobei die Reinigungsstange (264) eine Ventilstange (264) bezüglich einer in dem Schaumspender vorgesehenen Chemikalienkammer (312) ist, in welcher sich die Reinigungsstange (264) bewegt, wobei die Ventilstange (264), wenn sie sich in einem Ventilverschließmodus befindet, funktioniert, um einen Chemikalienzufuhrweg (278; 280), welcher in die Chemikalienkammer führt, direkt zu blockieren.

7. Antriebsmechanismus nach Anspruch 3, wobei sich das Schieberelement (586) in Schiebeeingriff mit einem Führungsschuh (578) befindet, welcher von dem Gehäuse (528) gehalten ist und aus einem Material gebildet ist, das einen geringeren Reibungskoeffizientenwert aufweist als dasjenige des Gehäuses (528).

8. Antriebsmechanismus nach Anspruch 3, wobei das Schieberelement (586) ein mehrwandiges Kolbenelement in Schiebeeingriff mit einem Paar von dem Gehäuse (528) gehaltener Führungsschuhe (578) ist.

9. Antriebsmechanismus nach Anspruch 3, welcher ferner einen Verbindungsstift (582) umfasst, wobei die Verbindungsstange (574) ein erstes schleifenförmiges Ende (576) in Eingriff mit der Kurbel (526) und ein zweites schleifenförmiges Ende (584) umfasst, wobei sich der Verbindungsstift (582) in das zweite schleifenförmiges Ende (584) und in Eingriff mit dem Schieberelement (586) erstreckt.

10. Antriebsmechanismus nach Anspruch 9, wobei die Kurbel (526) eine erste Kurbelkomponente (552) und eine lösbar mit der ersten Kurbelkomponente (552) verbundene zweite Kurbelkomponente (570) umfasst, und wobei die erste und die zweite Komponente (552; 570) lösbar und verbindbar sind, um einen Eingriff der Kurbel (526) mit dem ersten schleifenförmigen Ende (576) der Verbindungsstange vorzusehen.

11. Antriebsmechanismus nach den Ansprüchen 2 bis 10, welcher ferner erste und zweite Lager (550; 560; 546; 572) umfasst, wobei die Kurbel eine erste Verlängerung (560) und eine zweite Verlängerung (572) aufweist, und wobei das Gehäuse eine erste Lageraufnahmeaussparung (550) umfasst, welche das erste Lager (560) und die erste Verlängerung (560) aufnimmt, und eine zweite Lageraufnahmeaussparung (546) umfasst, welche das zweite Lager (572) und die zweite Verlängerung (572) aufnimmt.

12. Antriebsmechanismus nach den Ansprüchen 2 bis 11, wobei das Gehäuse (528) einen Hauptgehäuseabschnitt (532) und einen lösbaren Kappengehäuseabschnitt (533) umfasst, wobei der Hauptgehäuseabschnitt (532) die erste Aufnahmeaussparung (542) definiert und wobei der Kappengehäuseabschnitt (533) die zweite Aufnahmeaussparung (544) definiert.

13. Antriebsmechanismus nach den Ansprüchen 1 bis 12, wobei das Antriebsgetriebe eine Antriebswelle (520) auf einer Linie zwischen dem Antrieb (508; 200) und der Kurbel- und Schieberanordnung (526; 574; 586) umfasst, wobei die Antriebswelle (520) die Kurbel- und Schieberanordnung (526; 574; 586) antreibt.

14. Antriebsmechanismus nach Anspruch 13, welcher ferner eine elastische Kopplung (524) umfasst, die auf einer Linie zwischen der Antriebswelle (520) und der Kurbel- und Schieberanordnung (526; 574; 586) positioniert ist.

15. Antriebsmechanismus nach den Ansprüchen 13 bis 14, welcher ferner eine Einwegkopplung (514) auf einer Linie zwischen dem Antriebselement (508; 200) und der Kurbel- und Schieberanordnung (526; 574; 586) umfasst.

16. Antriebsmechanismus nach den Ansprüchen 13 bis 15, wobei das Antriebselement (508; 200) in der Antriebsdrehrichtung umkehrbar ist und wobei der Antriebsmechanismus ferner ein Sekundärantriebsgetriebe (3038) umfasst, welches abhängig von der Richtung der Antriebsdrehung aktiviert/deaktiviert wird.

17. Antriebsmechanismus nach den Ansprüchen 1 bis 16, welcher ferner ein Antriebselement (508; 200) umfasst, das ein bürstenloser Gleichstrommotor ist.

18. Antriebsmechanismus nach den Ansprüchen 1 bis 17, welcher ferner einen Ausgangssensor umfasst, der in der Antriebsgetriebelinie positioniert ist, um einen Positionsstatus einer Komponente in dem Antriebsmechanismus zu überwachen.

19. Antriebsmechanismus nach den Ansprüchen 1 bis 18, welche ferner einen Ausgangssensor (515) umfasst, welcher eine Position einer Komponente erfasst, welche zu dem Antriebsgetriebe gehört oder von dem Antriebsgetriebe angetrieben ist und stromabwärts einer Kurbel (526) in der Kurbel- und Schieberanordnung (526; 574; 586) positioniert ist.

20. Antriebsmechanismus nach den Ansprüchen 1 bis 19, wobei das Antriebselement (508; 200) einen Kodierer umfasst.

21. Antriebsmechanismus nach den Ansprüchen 1 bis 20, wobei der Antriebsmechanismus einen periodischen Ablauf von in der Stärke variierenden Druck- und Zugkräften auf die eingegriffene Reinigungsstange (264) erzeugt, wobei maximale Druck- und Zugstärken mit Hinundherbewegungs-Endpunkten der Reinigungsstange (264) koordiniert sind.

22. Antriebsmechanismus nach Anspruch 1, welcher ferner ein Spendergehäuse (528) umfasst, in welchem die Kurbel- und Schieberanordnung (526; 574; 586) positioniert ist, und wobei das Spendergehäuse (528) ein Mittel (532) zum Aufnehmen eines Mischmoduls (312) und ein Mittel (278; 280) zum Zuführen einer Schaumvorläuferchemikalie zu dem Mischmodul (312) umfasst, und wobei die Reinigungsstange (264) durch das Antriebsgetriebe in dem Mischmodul (312) angetrieben ist und als eine Kontaktabdichtungsstange (264) bezüglich eines in dem Mischmodul (312) gebildeten Chemikalienzufuhrwegs (278; 280) dient.

23. Vorrichtung zum Antreiben einer sich hin und her bewegenden Chemikalien-Reinigungsstange eines Schaumspender-Mischmoduls, umfassend einen Schaumspenderkomponenten-Antriebsmechanismus nach einem der Ansprüche 1 bis 22, umfassend:
eine Antriebswelle (520);
die von der Antriebswelle (520) angetriebene Kurbel (526);
die von der Kurbel (526) angetriebene Schieberanordnung (586);
und
einen Mischmodul-Reinigungsstangen-Eingreifabschnitt (583),
wobei die Schieberanordnung (586) einen Schiebemechanismus umfasst, welcher den Mischmodul-Reinigungsstangen-Eingreifabschnitt (583) umfasst.

24. Vorrichtung nach Anspruch 23, wobei der Schiebemechanismus einen Schiebekolben (264) umfasst und wobei die Schieberanordnung ferner eine Verbindungsstange (574) mit einem ersten mit der Kurbel (526) verbundenen Ende (576) und einem zweiten mit dem Schiebekolben (264) verbundenen Ende (584) aufweist.

25. Vorrichtung nach Anspruch 24, wobei der Eingreifabschnitt (583) einen geschlitzten Abschnitt in dem Schiebekolben (264) umfasst.

26. Vorrichtung nach den Ansprüchen 23 bis 25, welche ferner eine Einwegkopplung (514) in Antriebseingriff mit der Antriebswelle (520) umfasst.

27. Vorrichtung nach den Ansprüchen 23 bis 25, welche ferner eine mit der Antriebswelle (520) vorgesehene elastische Kopplung (524) umfasst.

28. Schaumspender-Antriebssystem für eine sich hin und her bewegende Mischmodul-Reinigungsstange, umfassend:
einen Antrieb (508; 200) und
ein Mittel (526; 574; 586) zum Umwandeln einer Drehantriebskraft in eine lineare Hinundherbewegungs-Antriebskraft, welche in der Lage ist, höhere Druck- und Zugkraftwerte in Koordination mit Hinundherbewegungs-Endpunkten an der Reinigungsstange (264) vorzusehen, **dadurch gekennzeichnet, dass** sich das Umwandlungsmittel (526; 574; 586) in Antriebseingriff mit der Reinigungsstange (264) befindet und variable Druck- und Zugwerte auf die Reinigungsstange (264) ausübt.

29. Antriebssystem nach Anspruch 28, wobei die lineare Antriebskraft eine lineare Richtung aufweist, die mit einer linearen Hin- und Herbewegung der durch das Antriebssystem hin und her bewegten Mischmodul-Reinigungsstange (264) zusammenfällt.

30. Antriebssystem nach Anspruch 28 oder 29, wobei das Mittel zum Umwandeln einer Drehantriebskraft in eine lineare Antriebskraft einen Kurbel- und Schiebermechanismus (526; 574; 586) umfasst.

31. Antriebssystem nach Anspruch 28 bis 30, wobei das Umwandlungsmittel (526; 574; 586) ein Schieberelement (685) mit einem Eingreifmittel (583) für den Eingriff mit der Mischmodul-Reinigungsstange (264) umfasst.

32. Antriebssystem nach Anspruch 31, wobei das Schieberelement (586) ein Kolben mit einem Schlitz ist, welcher für einen Fangeingriff mit der Mischmodulstange (264) dimensioniert ist.

33. Antriebssystem nach Anspruch 32, welcher ferner ein Paar Führungsschuhe (578) umfasst, und wobei der Kolben (264) in Schiebeeingriff mit dem Paar Führungsschuhe (578) ist.

34. Antriebssystem nach Anspruch 30 bis 33, welches ferner ein Spendergetriebegehäuse (528) umfasst, und wobei der Kurbel- und Schiebermechanismus (526; 574; 586) eine von dem Antrieb (508; 200) angetriebene Kurbel (526), eine Verbindungsstange (574) mit einem ersten Ende (576) in Verbindung mit einem Kurbelstiftabschnitt (582) der Kurbel und einem zweiten Ende (584) in Eingriff mit einem Schieberelement (586) des Kurbel- und Schiebermechanismus (526; 574; 586) umfasst.

35. Vorrichtung, umfassend ein Schaumspenderantriebssystem nach einem der Ansprüche 28 bis 34 zum Antreiben der sich hin und her bewegenden Reinigungsstange (264) mit einer vollständigen Rückzugstellung und einer vollständigen Erweiterungsstellung bezüglich eines Mischmoduls des Spenders, umfassend:
ein Antriebsgetriebemittel (526; 574; 586), wobei das Antriebsgetriebemittel (526; 574; 586) dazu angeordnet ist, mit einer maximalen Hinundherbewegungskraftausübung auf die Chemikalien-Reinigungsstange (264) zu koinzidieren, welche mit der vollständigen Rückzugstellung und der vollständigen Erweiterungsstellung der sich hin und her bewegenden Reinigungsstange (264) koinzidiert.

36. Verfahren zum Hin- und Herbewegen einer Chemikalien-Reinigungsstange eines Chemikalien-Mischmoduls, umfassend:
Drehen einer Kurbel (526) mit einer Antriebsanordnung, wobei die Antriebsanordnung einen Motor (508; 200) zum Drehen der Kurbel (526) umfasst;
Antreiben einer Schieberanordnung (586) mit der Drehkurbel (526) zum Bewegen der Schieberanordnung (586) auf lineare Weise, und
Bewegen der Reinigungsstange (264) zusammen mit der Schieberanordnung, **dadurch gekennzeichnet, dass** das Bewegen **dadurch** erfolgt, dass die Schieberanordnung (586) in Antriebseingriff mit der Reinigungsstange (264) ist.

37. Verfahren nach Anspruch 36, welches ferner das Überwachen einer Stellung der Reinigungsstange (264) entweder direkt oder indirekt mittels eines Ausgangssensors (515) umfasst.

38. Verfahren nach den Ansprüchen 36 oder 37, wobei der Motor (508; 200) einen Kodierer umfasst und wobei das Verfahren ferner das Verwenden des Kodierers umfasst, um die Positionierung der Reinigungsstange (264) weiter zu überwachen.

39. Verfahren nach Anspruch 36 bis 38, wobei die Reinigungsstange (264) bezüglich des Mischmoduls so dimensioniert ist, dass sie als eine Ventilstange (264) bezüglich eines Chemikalienzufuhrwegs (278; 280) des Mischmoduls funktioniert, wobei die Ventilstange (264), wenn sie sich in einem Ventilverschließmodus befindet, funktioniert, um einen Chemikalienzufuhrweg (278; 280), welcher in das Mischmodul (312) führt, direkt zu blockieren.

## Revendications

1. Mécanisme d'entraînement d'organe d'un distributeur de mousse comportant :
un dispositif d'entraînement à moteur (508 ; 200) ;
une transmission (526) d'entraînement de tige de purge chimique du distributeur de mousse comportant un ensemble à manivelle et coulisse (526 ; 574 ; 586) entraîné par ledit dispositif d'entraînement à moteur (508 ; 200), et
**caractérisé en ce que** ledit ensemble à manivelle et coulisse (526 ; 574 ; 586) est en prise d'entraînement avec une tige de purge (264).

2. Mécanisme d'entraînement selon la revendication 1, dans lequel ladite transmission d'entraînement (526) comprend un carter (528) de transmission et ledit ensemble à manivelle et coulisse (526 ; 574 ; 586) comprend une manivelle (526 ; 574) supportée de façon pivotante par ledit carter (528) et un élément à coulisse (586), lequel élément à coulisse (586) est animé d'un mouvement alternatif linéaire par ladite manivelle (526 ; 574) et en prise avec la tige de purge (264).

3. Mécanisme d'entraînement selon la revendication 2, dans lequel ledit ensemble à manivelle et coulisse (526 ; 574 ; 586) comporte une bielle (574) entraînée par ladite manivelle (526) et ledit élément à coulisse (586) est entraîné par ladite bielle (574).

4. Mécanisme d'entraînement selon les revendications 1 à 3, lequel mécanisme d'entraînement comporte un moyen d'engagement (583) destiné à entrer en engagement avec la tige de purge (264).

5. Mécanisme d'entraînement selon la revendication 4, dans lequel ledit moyen d'engagement (583) comporte une rainure d'engagement (583) conçue pour recevoir et retenir une tête d'engagement (330) de la tige de purge (264).

6. Mécanisme d'entraînement selon les revendications 1 à 5, dans lequel la tige de purge (264) est une tige (264) de soupape associée à une chambre chimique (312) prévue dans le distributeur de mousse à l'intérieur duquel la tige de purge (264) se déplace, laquelle tige (264) de soupape fonctionne, lorsqu'elle est dans un mode de fermeture de soupape, pour bloquer directement un passage (278 ; 280) d'alimentation en substance chimique menant dans la chambre chimique.

7. Mécanisme d'entraînement selon la revendication 3, dans lequel ledit élément à coulisse (586) est en engagement coulissant avec un patin de guidage (578) supporté par ledit carter (528) et en une matière d'un niveau de coefficient de frottement inférieur à celui dudit carter (528).

8. Mécanisme d'entraînement selon la revendication 3, dans lequel ledit élément à coulisse (586) est un élément à piston à parois multiples en contact de glissement avec deux patins de guidage (578) supportés par ledit carter (528).

9. Mécanisme d'entraînement selon la revendication 3, comportant en outre un maneton (582), ladite bielle (574) ayant une première extrémité à boucle (576) en engagement avec ladite manivelle (526) et une seconde extrémité à boucle (584), ledit maneton (582) s'étendant dans ladite seconde extrémité à boucle (584) et en engagement avec ledit élément à coulisse (586).

10. Mécanisme d'entraînement selon la revendication 9, dans lequel ladite manivelle (526) comprend une première pièce (552) de manivelle et une seconde pièce (570) de manivelle reliée de façon amovible à ladite première pièce (552) de manivelle, et lesdites première et seconde pièces (552 ; 570) pouvant être séparées et pouvant être reliées entre elles pour établir un engagement de ladite manivelle (526) avec la première extrémité à boucle (576) de ladite bielle (574).

11. Mécanisme d'entraînement selon les revendications 2 à 10, comportant en outre des premier et second paliers (550 ; 560 ; 546 ; 572), dans lequel ladite manivelle comporte une première extension (560) et une seconde extension (572), et ledit carter comporte un premier évidement (550) de réception de palier recevant ledit premier palier (560) et ladite première extension (560), et un second évidement (546) de réception de palier recevant ledit second palier (572) et ladite seconde extension (572).

12. Mécanisme d'entraînement selon les revendications 2 à 11, dans lequel ledit carter (528) comprend une section de carter principale (532) et une section de carter de chapeau amovible (533), ladite section de carter principale (532) définissant ledit premier évidement (542) de réception et ladite section de carter de chapeau (533) définissant ledit second évidement (544) de réception.

13. Mécanisme d'entraînement selon les revendications 1 à 12, dans lequel ladite transmission d'entraînement comporte un arbre d'entraînement (520) en ligne entre ledit dispositif d'entraînement (508 ; 200) et l'ensemble à manivelle et coulisse (526 ; 574 ; 586), ledit arbre d'entraînement (520) entraînant ledit ensemble à manivelle et coulisse (526 ; 574 ; 586).

14. Mécanisme d'entraînement selon la revendication 13, comportant en outre un accouplement flexible (524) positionné en ligne entre ledit arbre d'entraînement (520) et ledit ensemble à manivelle et coulisse (526 ; 574 ; 586).

15. Mécanisme d'entraînement selon les revendications 13 et 14, comportant en outre une roue libre (514) en ligne entre ledit dispositif d'entraînement (508 ; 200) et ledit ensemble à manivelle et coulisse (526 ; 574 ; 586).

16. Mécanisme d'entraînement selon les revendications 13 à 15, dans lequel ledit dispositif d'entraînement (508 ; 200) a un sens de rotation d'entraînement réversible et ledit mécanisme d'entraînement comporte en outre une transmission d'entraînement secondaire (3038) qui est activée/désactivée suivant le sens de la rotation d'entraînement.

17. Mécanisme d'entraînement selon les revendications 1 à 16, comportant en outre un dispositif d'entraînement (508 ; 200) qui est un moteur à courant continu sans collecteur.

18. Mécanisme d'entraînement selon les revendications 1 à 17, comportant en outre un capteur de position de repos positionné dans une ligne de transmission d'entraînement pour contrôler un état de position d'une pièce dans ledit mécanisme d'entraînement.

19. Mécanisme d'entraînement selon les revendications 1 à 18, comportant en outre un capteur (515) de position de repos qui capte une position d'une pièce qui fait partie de ladite transmission d'entraînement ou est entraînée par ladite transmission d'entraînement et est positionnée en aval d'une manivelle (526) dans ledit mécanisme à manivelle et coulisse (526 ; 574 ; 586).

20. Mécanisme d'entraînement selon les revendications 1 à 19, dans lequel ledit dispositif d'entraînement (508 ; 200) comprend un codeur.

21. Mécanisme d'entraînement selon les revendications 1 à 20, lequel mécanisme d'entraînement génère un cycle de force de poussée et de traction dont les niveaux varient sur la tige de purge engagée (264), les niveaux maximaux de poussée et de traction étant coordonnés avec des points extrêmes du mouvement alternatif de la tige de purge (264).

22. Mécanisme d'entraînement selon la revendication 1, comportant en outre un carter (528) de distributeur à l'intérieur duquel est positionné ledit ensemble à manivelle et coulisse (526 ; 574 ; 586), et dans lequel ledit carter (528) du distributeur comprend un moyen (532) destiné à recevoir un module de mélange (312) et un moyen (278 ; 280) destiné à alimenter en un précurseur chimique de mousse ledit module de mélange (312), et dans lequel la tige de purge (264) est entraînée par ladite transmission d'entraînement à l'intérieur du module de mélange (312) et fonctionne à la manière d'une tige de soupape (264) d'obturation par contact par rapport à un passage chimique (278 ; 280) formé dans ledit module de mélange (312).

23. Appareil pour l'entraînement d'une tige de purge chimique à mouvement alternatif d'un module de mélange d'un distributeur de mousse, comportant un mécanisme d'entraînement de pièce de distributeur de mousse selon l'une quelconque des revendications 1 à 22, et comportant :
un arbre d'entraînement (520) ;
la manivelle (526) entraînée par ledit arbre d'entraînement (520) ;
l'ensemble à coulisse (586) entraîné par ladite manivelle (526) ; et
une section (583) d'engagement de la tige de purge du module de mélange,
dans lequel ledit ensemble à coulisse (586) comporte un mécanisme à coulisse qui comprend ladite section (583) d'engagement de la tige de purge du module de mélange.

24. Appareil selon la revendication 23, dans lequel ledit mécanisme à coulisse comporte un piston coulissant (264) et ledit ensemble à coulisse comporte en outre une bielle (574) ayant une première extrémité (576) reliée à ladite manivelle (526) et une seconde extrémité (584) reliée audit piston coulissant (264).

25. Appareil selon la revendication 24, dans lequel ladite section d'engagement (583) comprend une section fendue dans ledit piston coulissant (264).

26. Appareil selon les revendications 23 à 25, comportant en outre une roue libre (514) en engagement d'entraînement avec ledit arbre d'entraînement (520).

27. Appareil selon les revendications 23 à 25, comportant en outre un accouplement flexible (524) prévu avec ledit arbre d'entraînement (520).

28. Système d'entraînement de distributeur de mousse pour une tige de purge à mouvement alternatif d'un module de mélange, comportant :
un dispositif d'entraînement (508 ; 200) ; et
un moyen (526 ; 574 ; 586) destiné à convertir une force rotative d'entraînement en une force linéaire alternative d'entraînement, capable de produire des niveaux de force de poussée et de traction plus élevés en coordination avec des points extrêmes du mouvement alternatif de la tige de purge (264), **caractérisé en ce que** le moyen de conversion (526 ; 574 ; 586) est en prise d'entraînement avec la tige de purge (264) et produit des niveaux de poussée et de traction variables sur la tige de purge (264).

29. Système d'entraînement selon la revendication 28, dans lequel ladite force linéaire d'entraînement a une direction linéaire coïncidant avec un mouvement alternatif linéaire de la tige de purge (264) du module de mélange animée d'un mouvement alternatif par ledit système d'entraînement.

30. Système d'entraînement selon la revendication 28 ou 29, dans lequel ledit moyen de conversion d'une force rotative d'entraînement en une force linéaire d'entraînement comprend un ensemble à manivelle et coulisse (526 ; 574 ; 586).

31. Système d'entraînement selon les revendications 28 à 30, dans lequel ledit moyen de conversion (526 ; 574 ; 586) comprend un élément à coulisse (586) avec un moyen d'engagement (583) destiné à réaliser un engagement avec ladite tige de purge (264) du module de mélange.

32. Système d'entraînement selon la revendication 31, dans lequel ledit élément à coulisse (586) est un piston présentant une fente dimensionnée pour établir une prise d'accrochage avec la tige (264) du module de mélange.

33. Système d'entraînement selon la revendication 32, comportant en outre deux patins de guidage (578), et dans lequel ledit piston (264) est en contact de glissement avec lesdits deux patins de guidage (578).

34. Système d'entraînement selon les revendications 30 à 33, comportant en outre un carter (528) de transmission de distributeur, et dans lequel ledit mécanisme à manivelle et coulisse (526 ; 574 ; 586) comprend une manivelle (526) entraînée par ledit dispositif d'entraînement (508 ; 200), une bielle (574) ayant une première extrémité (576) reliée à une section de maneton de manivelle (582) de ladite manivelle et une seconde extrémité (584) en prise avec un élément à coulisse (586) dudit mécanisme à manivelle et coulisse (526 ; 574 ; 586).

35. Appareil comportant un système d'entraînement d'un distributeur de mousse selon l'une quelconque des revendications 28 à 34, pour entraîner la tige de purge (264) à mouvement alternatif ayant une position de retrait complet et une position d'extension complète par rapport à un module de mélange du distributeur, comportant :
un moyen de transmission d'entraînement (526 ; 574 ; 586), ledit moyen de transmission d'entraînement (526 ; 574 ; 586) étant agencé de façon à faire coïncider l'application d'une force alternative maximale à une tige de purge chimique (264) avec les positions d'extension complète et de retrait complet de la tige (264) à mouvement alternatif.

36. Procédé pour animer d'un mouvement alternatif une tige de purge chimique d'un module de mélange chimique, comprenant :
la rotation d'une manivelle (526) à l'aide d'un ensemble d'entraînement, ledit ensemble d'entraînement comprenant un moteur (508 ; 200) destiné à faire tourner ladite manivelle (526) ;
l'entraînement d'un ensemble à coulisse (586) avec la manivelle (526) en rotation afin de déplacer l'ensemble à coulisse (586) de façon linéaire, et
le déplacement de la tige de purge (264) en même temps que ledit ensemble à coulisse, **caractérisé en ce que** le déplacement a lieu au moyen dudit ensemble à coulisse (586) en prise d'entraînement avec la tige de purge (264).

37. Procédé selon la revendication 36, comprenant en outre le contrôle d'une position de ladite tige de purge (264) directement ou indirectement à l'aide d'un capteur (515) de position de repos.

38. Procédé selon la revendication 36 ou 37, dans lequel ledit moteur (508 ; 200) comprend un codeur et ledit procédé comprend en outre l'utilisation du codeur pour contrôler en outre le positionnement de ladite tige de purge (264).

39. Procédé selon les revendications 36 à 38, dans lequel la tige de purge (264) est dimensionnée par rapport au module de mélange de façon à fonctionner à la manière d'une tige de soupape (264) par rapport à un passage d'alimentation chimique (278 ; 280) du module de mélange, laquelle tige de soupape (264) fonctionne, lorsqu'elle est dans un mode de fermeture de soupape, de façon à bloquer directement un passage (278 ; 280) d'alimentation chimique conduisant dans le module de mélange (312).
